(19) **Europäisches Patentamt / European Patent Office / Office européen des brevets**

(11) **EP 4 564 752 A1**

(12) **EUROPEAN PATENT APPLICATION**
published in accordance with Art. 153(4) EPC

(43) Date of publication:
04.06.2025 Bulletin 2025/23

(21) Application number: 23849104.7

(22) Date of filing: 28.06.2023

(51) International Patent Classification (IPC):
*H04L 25/02* (2006.01)

(52) Cooperative Patent Classification (CPC):
H04B 7/01; H04L 25/02; H04L 27/26

(86) International application number:
PCT/CN2023/103474

(87) International publication number:
WO 2024/027394 (08.02.2024 Gazette 2024/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 01.08.2022 CN 202210915805
30.09.2022 CN 202211217064

(71) Applicant: Huawei Technologies Co., Ltd.
Shenzhen, Guangdong 518129 (CN)

(72) Inventors:
• LIAN, Jin
Shenzhen, Guangdong 518129 (CN)
• CAI, Shijie
Shenzhen, Guangdong 518129 (CN)
• LIU, Kunpeng
Shenzhen, Guangdong 518129 (CN)

(74) Representative: Maiwald GmbH
Engineering
Elisenhof
Elisenstrasse 3
80335 München (DE)

(54) **COMMUNICATION METHOD AND APPARATUS**

(57) A communication method and apparatus are provided. The method includes: A terminal device receives a downlink reference signal from an access network device, and the terminal device sends first indication information to the access network device, where the first indication information indicates at least one Doppler shift, the at least one Doppler shift is determined based on the downlink reference signal, and the at least one Doppler shift is associated with at least two frequency domain bases. According to the foregoing method, the at least one Doppler shift is indicated by using the first indication information, so that there is no need to feed back all Doppler shifts determined based on the downlink reference signal, to reduce feedback overheads and improve feedback efficiency. When performing channel estimation, the access network device can determine time domain-related information of a channel based on the Doppler shift indicated by using the first indication information, and can obtain a more accurate channel state by using channels at past several moments and information about the Doppler shift, to overcome a performance deterioration problem caused by channel aging.

FIG. 13

**Description**

CROSS-REFERENCE TO RELATED APPLICATIONS

This application claims priority to Chinese Patent Application No. 202210915805.3, filed with the China National Intellectual Property Administration on August 1, 2022 and entitled "COMMUNICATION METHOD AND APPARATUS", and to Chinese Patent Application No. 202211217064.8, filed with the China National Intellectual Property Administration on September 30, 2022 and entitled "COMMUNICATION METHOD AND APPARATUS", both of which are incorporated herein by reference in their entireties.

TECHNICAL FIELD

This application relates to the field of communication technologies, and in particular, to a communication method and apparatus.

BACKGROUND

To improve signal transmission quality or a signal transmission rate, before transmitting data to a terminal device, a base station needs to perform channel estimation on a wireless channel. The base station performs channel estimation based on a sounding reference signal (sounding reference signal, SRS) from the terminal device, to obtain uplink channel state information (channel state information, CSI), so as to obtain downlink CSI based on uplink and downlink reciprocity. The base station calculates, by using the CSI, precoding (precoding) used for the data transmission, to improve the signal transmission quality or the signal transmission rate.

In a time division multiplexing (time division duplexing, TDD) system, a wireless channel have uplink and downlink reciprocity. Therefore, in a channel estimation process, a terminal device may feed back channel matrix-related information to the base station, to improve accuracy of channel estimation of the base station.

However, as a quantity of antennas of the base station increases, feedback overheads of the channel matrix-related information also increase accordingly. How to reduce the feedback overheads of the terminal device is an urgent problem to be resolved. In addition, because there is a delay between a moment at which the base station obtains the channel and a moment at which the terminal device is actually served by downlink precoding, when the terminal device moves, a channel of the terminal device may have changed dramatically within this time period. Consequently, the precoding does not match the channel of the terminal device at the corresponding moment. As a result, performance deteriorates, in other words, the channel is aged.

SUMMARY

This application provides a communication method and apparatus, to resolve a problem of how to reduce feedback overheads of a terminal device.

According to a first aspect, this application provides a communication method. The method includes: A terminal device receives a downlink reference signal from an access network device. The terminal device determines at least one spatial domain vector and a plurality of frequency domain vectors based on the downlink reference signal. The at least one spatial domain vector and the plurality of frequency domain vectors correspond to a first matrix. The first matrix includes a plurality of combination coefficients. Each combination coefficient is a combination coefficient of one spatial domain vector and one frequency domain vector, and a position of the combination coefficient is represented by using the spatial domain vector and the frequency domain vector. The terminal device sends first information to the access network device. The first information indicates a position of at least one of the plurality of combination coefficients. The at least one combination coefficient satisfies any one of the following conditions: the at least one combination coefficient is a combination coefficient whose energy is greater than or equal to first energy and less than or equal to second energy in the plurality of combination coefficients, where the second energy is less than energy of a combination coefficient with largest energy in the plurality of combination coefficients; the at least one combination coefficient is $Y2$ combination coefficients with smallest energy in $Y1$ combination coefficients whose energy is greater than or equal to first energy in the plurality of combination coefficients, where $Y2$ is an integer less than $Y1$ and greater than 0; the at least one combination coefficient is $Y4$ combination coefficients with smallest energy in $Y3$ combination coefficients with largest energy in the plurality of combination coefficients, where $Y4$ is an integer less than $Y3$ and greater than 0; or the at least one combination coefficient is a combination coefficient whose energy is less than or equal to second energy in $Y3$ combination coefficients with largest energy in the plurality of combination coefficients, where the second energy is less than the energy of the combination coefficient with the largest energy in the plurality of combination coefficients.

According to the foregoing method, in this embodiment of this application, the first information indicates the position of the at least one combination coefficient that satisfies the condition and that is in the plurality of combination coefficients, so that positions of all the combination coefficients do not need to be fed back, to reduce feedback overheads and improve feedback efficiency. Further, the terminal device feeds back the first information to the access network device, so that the access network device can determine the position that is of the at least one combination coefficient and that is indicated by using the first information. When performing channel estimation, the access network device does not consider a combination coefficient corresponding to the position indicated by using the first information as noise/interference, does not set energy of the combination coefficient corresponding to the position indicated by using the first information to 0, but retains the energy of the combination coefficient, so that accuracy of the channel estimation is improved while noise/-interference is reduced.

According to a second aspect, this application provides a communication method. The method includes: An access network device sends a downlink reference signal to a terminal device; and the access network device receives first information from the terminal device. The first information indicates a position of at least one of a plurality of combination coefficients included in a first matrix. The first matrix corresponds to at least one spatial domain vector and a plurality of frequency domain vectors. The at least one spatial domain vector and the plurality of frequency domain vectors are determined based on the downlink reference signal. Each combination coefficient is a combination coefficient of one spatial domain vector and one frequency domain vector, and a position of the combination coefficient is represented by using the spatial domain vector and the frequency domain vector. The at least one combination coefficient satisfies any one of the following conditions: the at least one combination coefficient is a combination coefficient whose energy is greater than or equal to first energy and less than or equal to second energy in the plurality of combination coefficients, where the second energy is less than energy of a combination coefficient with largest energy in the plurality of combination coefficients; the at least one combination coefficient is $Y2$ combination coefficients with smallest energy in $Y1$ combination coefficients whose energy is greater than or equal to first energy in the plurality of combination coefficients, where $Y2$ is an integer less than $Y1$ and greater than 0; the at least one combination coefficient is $Y4$ combination coefficients with smallest energy in $Y3$ combination coefficients with largest energy in the plurality of combination coefficients, where $Y4$ is an integer less than $Y3$ and greater than 0; or the at least one combination coefficient is a combination coefficient whose energy is less than or equal to second energy in $Y3$ combination coefficients with largest energy in the plurality of combination coefficients, where the second energy is less than the energy of the combination coefficient with the largest energy in the plurality of combination coefficients.

With reference to the first aspect or the second aspect, in a possible implementation, the first energy is a product of a first coefficient and the energy of the combination coefficient with the largest energy in the plurality of combination coefficients, where the first coefficient is greater than 0 and less than 1; or the first energy is energy of a first combination coefficient, where a sum of energy of combination coefficients that are in the plurality of combination coefficients and whose energy is greater than or equal to the energy of the first combination coefficient is first total energy, a sum of energy of the plurality of combination coefficients is second total energy, and a ratio of the first total energy to the second total energy is equal to a first ratio.

With reference to the first aspect or the second aspect, in a possible implementation, the first energy is the energy of the first combination coefficient.

The sum of the energy of the combination coefficients that are in the plurality of combination coefficients and whose energy is greater than or equal to the energy of the first combination coefficient is the first total energy, the sum of the energy of the plurality of combination coefficients is the second total energy, and a sum of energy of combination coefficients that are in the plurality of combination coefficients and whose energy is greater than or equal to energy of a second combination coefficient is third total energy. When the energy of the first combination coefficient is greater than the energy of the second combination coefficient, and the plurality of combination coefficients are sorted in descending order of energy, the first combination coefficient and the second combination coefficient are sequentially adjacent, where the ratio of the first total energy to the second total energy is less than the first ratio, and a ratio of the third total energy to the second total energy is greater than the first ratio.

With reference to the first aspect or the second aspect, in a possible implementation, the first energy is the energy of the first combination coefficient.

The sum of the energy of the combination coefficients that are in the plurality of combination coefficients and whose energy is greater than or equal to the energy of the first combination coefficient is the first total energy, the sum of the energy of the plurality of combination coefficients is the second total energy, and a sum of energy of combination coefficients that are in the plurality of combination coefficients and whose energy is greater than or equal to energy of a third combination coefficient is fourth total energy. When the energy of the third combination coefficient is greater than the energy of the first combination coefficient, and the plurality of combination coefficients are sorted in descending order of energy, the third combination coefficient and the first combination coefficient are sequentially adjacent, where the ratio of the first total energy to the second total energy is greater than the first ratio, and a ratio of the fourth total energy to the second total energy is less than the first ratio.

With reference to the first aspect or the second aspect, in a possible implementation, the second energy is a product of a second coefficient and the energy of the combination coefficient with the largest energy in the plurality of combination coefficients, where the second coefficient is greater than 0 and less than 1; or the second energy is energy of a fourth combination coefficient in a first set, where the first set includes all combination coefficients whose energy is greater than or equal to the first energy in the plurality of combination coefficients, or the first set includes the Y3 combination coefficients with the largest energy in the plurality of combination coefficients; and

a sum of energy of combination coefficients that are in the first set and whose energy is less than or equal to the energy of the fourth combination coefficient is fifth total energy, and a sum of energy of all combination coefficients included in the first set is sixth total energy, where a ratio of the fifth total energy to the sixth total energy is equal to a second ratio.

With reference to the first aspect or the second aspect, in a possible implementation, the second energy is the energy of the fourth combination coefficient in the first set. The first set includes all the combination coefficients whose energy is greater than or equal to the first energy in the plurality of combination coefficients, or the first set includes the Y3 combination coefficients with the largest energy in the plurality of combination coefficients. The sum of the energy of the combination coefficients that are in the first set and whose energy is less than or equal to the energy of the fourth combination coefficient is the fifth total energy, the sum of the energy of all the combination coefficients included in the first set is the sixth total energy, and a sum of energy of combination coefficients that are in the first set and whose energy is less than or equal to energy of a fifth combination coefficient is seventh total energy. When the energy of the fourth combination coefficient is greater than the energy of the fifth combination coefficient, and all the combination coefficients included in the first set are sorted in descending order of energy, the fourth combination coefficient and the fifth combination coefficient are sequentially adjacent, where

the ratio of the fifth total energy to the sixth total energy is greater than the second ratio, and a ratio of the seventh total energy to the sixth total energy is less than the second ratio.

With reference to the first aspect or the second aspect, in a possible implementation, the second energy is the energy of the fourth combination coefficient in the first set. The first set includes all the combination coefficients whose energy is greater than or equal to the first energy in the plurality of combination coefficients, or the first set includes the Y3 combination coefficients with the largest energy in the plurality of combination coefficients. The sum of the energy of the combination coefficients that are in the first set and whose energy is less than or equal to the energy of the fourth combination coefficient is the fifth total energy, the sum of energy of all the combination coefficients included in the first set is the sixth total energy, and a sum of energy of combination coefficients that are in the first set and whose energy is less than or equal to energy of a sixth combination coefficient is eighth total energy. When the energy of the sixth combination coefficient is greater than the energy of the fourth combination coefficient, and all the combination coefficients included in the first set are sorted in descending order of energy, the sixth combination coefficient and the fourth combination coefficient are sequentially adjacent, where

the ratio of the fifth total energy to the sixth total energy is less than the second ratio, and a ratio of the eighth total energy to the sixth total energy is greater than the second ratio.

With reference to the first aspect or the second aspect, in a possible implementation, the at least one combination coefficient is divided into K combination coefficient groups, where K is an integer greater than 0; each of the at least one combination coefficient is a combination coefficient of one of X spatial domain vectors and one of a plurality of frequency domain vectors, and the X spatial domain vectors are a part or all of the at least one spatial domain vector, where X is an integer greater than 0; the X spatial domain vectors and the plurality of frequency domain vectors correspond to a second matrix, the second matrix includes K submatrices, and each submatrix corresponds to one or more of the X spatial domain vectors and one or more of the plurality of frequency domain vectors; and the K combination coefficient groups correspond one-to-one to the K submatrices, and each of the K combination coefficient groups is located in one of the K submatrices.

With reference to the first aspect or the second aspect, in a possible implementation, the first information includes at least one of the following:

a position of a start spatial domain vector corresponding to a submatrix corresponding to each of the K combination coefficient groups;
a quantity of spatial domain vectors corresponding to the submatrix corresponding to each of the K combination coefficient groups;
a position of a start frequency domain vector corresponding to the submatrix corresponding to each of the K combination coefficient groups; and
a quantity of frequency domain vectors corresponding to the submatrix corresponding to each of the K combination coefficient groups.

With reference to the first aspect, in a possible implementation, the method further includes: The terminal device sends second information to the access network device, where the second information indicates a first position range, the first position range is positions corresponding to M consecutive frequency domain vectors in the plurality of frequency domain vectors, and a frequency domain vector corresponding to each of the at least one combination coefficient is one of the M consecutive frequency domain vectors.

According to the method, in the K combination coefficient groups, a quantity of bits occupied by the position of the start frequency domain vector of the submatrix corresponding to each combination coefficient group is $\lceil \log\_2(M) \rceil$, so that the feedback overheads of the terminal device can be further reduced.

With reference to the second aspect, in a possible implementation, the method further includes: The access network device receives the second information from the terminal device, where the second information indicates the first position range, the first position range is the positions corresponding to the M consecutive frequency domain vectors in the plurality of frequency domain vectors, and the frequency domain vector corresponding to each of the at least one combination coefficient is one of the M consecutive frequency domain vectors.

With reference to the first aspect or the second aspect, in a possible implementation, in the K combination coefficient groups, a quantity of bits occupied by the position of the start frequency domain vector corresponding to the submatrix corresponding to each combination coefficient group is $\lceil \log\_2(M) \rceil$.

With reference to the first aspect, in a possible implementation, the method further includes:
The terminal device sends third information to the access network device, where the third information includes at least one of the following:

> a phase of a combination coefficient at a center position of the submatrix corresponding to each of the K combination coefficient groups;
> an angle gradient, in a matrix row direction, of the submatrix corresponding to each of the K combination coefficient groups; and
> an angle gradient, in a matrix column direction, of the submatrix corresponding to each of the K combination coefficient groups.

According to the foregoing method, after obtaining the third information, the access network device may correct a phase of the combination coefficient at the position indicated by using the first information, so that the channel estimation is more accurate.

With reference to the second aspect, in a possible implementation, the method further includes:
The access network device receives the third information from the terminal device, where the third information includes at least one of the following:

> the phase of the combination coefficient at the center position of the submatrix corresponding to each of the K combination coefficient groups;
> the angle gradient, in the matrix row direction, of the submatrix corresponding to each of the K combination coefficient groups; and
> the angle gradient, in the matrix column direction, of the submatrix corresponding to each of the K combination coefficient groups.

With reference to the first aspect, in a possible implementation, the method further includes: The terminal device sends fourth information to the access network device, where the fourth information includes all coefficients of an autocorrelation matrix of each of the K submatrices, the fourth information includes first H1 eigenvalues of an autocorrelation matrix of each of the K submatrices and eigenvectors corresponding to the first H1 eigenvalues, or the fourth information includes first H2% eigenvalues of an autocorrelation matrix of each of the K submatrices and eigenvectors corresponding to the first H2% eigenvalues, where H1 and H2 are preset values.

According to the foregoing method, after obtaining the third information, the access network device may obtain the autocorrelation matrix of the combination coefficient of each submatrix. Therefore, noise reduction may be performed by using the autocorrelation matrix, so that the channel estimation is more accurate.

With reference to the second aspect, in a possible implementation, the method further includes:
The access network device receives fourth information from the terminal device, where the fourth information includes all the coefficients of the autocorrelation matrix of each of the K submatrices, the fourth information includes the first H1 eigenvalues of the autocorrelation matrix of each of the K submatrices and the eigenvectors corresponding to the first H1 eigenvalues, or the fourth information includes the first H2% eigenvalues of the autocorrelation matrix of each of the K submatrices and the eigenvectors corresponding to the first H2% eigenvalues, where H1 and H2 are preset values.

According to a third aspect, this application provides a communication method. The method includes: A terminal device receives a plurality of downlink reference signals from an access network device. The terminal device determines at least one spatial domain vector, a plurality of frequency domain vectors, and a plurality of time domain vectors based on the plurality of downlink reference signals. The at least one spatial domain vector, the plurality of frequency domain vectors, and the plurality of time domain vectors correspond to a first three-dimensional matrix. The first three-dimensional matrix includes a plurality of combination coefficients. Each combination coefficient is a combination coefficient of one spatial domain vector, one frequency domain vector, and one time domain vector, and a position of the combination coefficient is represented by using the spatial domain vector, the frequency domain vector, and the time domain vector. The terminal device sends first information to the access network device. The first information indicates a position of at least one of the plurality of combination coefficients. The at least one combination coefficient satisfies any one of the following conditions: the at least one combination coefficient is a combination coefficient whose energy is greater than or equal to first energy and less than or equal to second energy in the plurality of combination coefficients, where the second energy is less than energy of a combination coefficient with largest energy in the plurality of combination coefficients; the at least one combination coefficient is Y2 combination coefficients with smallest energy in Y1 combination coefficients whose energy is greater than or equal to first energy in the plurality of combination coefficients, where Y2 is an integer less than Y1 and greater than 0; the at least one combination coefficient is Y4 combination coefficients with smallest energy in Y3 combination coefficients with largest energy in the plurality of combination coefficients, where Y4 is an integer less than Y3 and greater than 0; or the at least one combination coefficient is a combination coefficient whose energy is less than second energy in Y3 combination coefficients with largest energy in the plurality of combination coefficients, where the second energy is less than a combination coefficient with largest energy in the plurality of combination coefficients.

According to the foregoing method, in this embodiment of this application, the first information indicates the position of the at least one combination coefficient that satisfies the condition and that is in the plurality of combination coefficients, so that positions of all the combination coefficients do not need to be fed back, to reduce feedback overheads and improve feedback efficiency. Further, the terminal device feeds back the first information to the access network device, so that the access network device can determine the position that is of the at least one combination coefficient and that is indicated by using the first information. When performing channel estimation, the access network device does not consider a combination coefficient corresponding to the position indicated by using the first information as noise/interference, does not set energy of the combination coefficient corresponding to the position indicated by using the first information to 0, but retains energy of the combination coefficient, so that accuracy of the channel estimation is improved while noise/-interference is reduced.

According to a fourth aspect, this application provides a communication method. The method includes: An access network device sends a plurality of downlink reference signals to a terminal device. The access network device receives first information from the terminal device. The first information indicates a position of at least one of a plurality of combination coefficients included in a first three-dimensional matrix. The first three-dimensional matrix corresponds to at least one spatial domain vector, a plurality of frequency domain vectors, and a plurality of time domain vectors. The at least one spatial domain vector, the plurality of frequency domain vectors, and the plurality of time domain vectors are determined based on the plurality of downlink reference signals. Each combination coefficient is a combination coefficient of one spatial domain vector, one frequency domain vector, and one time domain vector, and a position of the combination coefficient is represented by using the spatial domain vector, the frequency domain vector, and the time domain vector. The at least one combination coefficient satisfies any one of the following conditions: the at least one combination coefficient is a combination coefficient whose energy is greater than or equal to first energy and less than or equal to second energy in the plurality of combination coefficients, where the second energy is less than energy of a combination coefficient with largest energy in the plurality of combination coefficients; the at least one combination coefficient is Y2 combination coefficients with smallest energy in Y1 combination coefficients whose energy is greater than or equal to first energy in the plurality of combination coefficients, where Y2 is an integer less than Y1 and greater than 0; the at least one combination coefficient is Y4 combination coefficients with smallest energy in Y3 combination coefficients with largest energy in the plurality of combination coefficients, where Y4 is an integer less than Y3 and greater than 0; or the at least one combination coefficient is a combination coefficient whose energy is less than second energy in Y3 combination coefficients with largest energy in the plurality of combination coefficients, where the second energy is less than energy of a combination coefficient with largest energy in the plurality of combination coefficients.

With reference to the third aspect or the fourth aspect, in a possible implementation, the first energy is a product of a first coefficient and the energy of the combination coefficient with the largest energy in the plurality of combination coefficients, where the first coefficient is greater than 0 and less than 1; or the first energy is energy of a first combination coefficient, where a sum of energy of combination coefficients that are in the plurality of combination coefficients and whose energy is greater than or equal to the energy of the first combination coefficient is first total energy, a sum of energy of the plurality of combination coefficients is second total energy, and a ratio of the first total energy to the second total energy is equal to a first ratio.

With reference to the third aspect or the fourth aspect, in a possible implementation, the first energy is the energy of the first combination coefficient. The sum of the energy of the combination coefficients that are in the plurality of combination coefficients and whose energy is greater than or equal to the energy of the first combination coefficient is the first total energy, the sum of the energy of the plurality of combination coefficients is the second total energy, and a sum of energy of combination coefficients that are in the plurality of combination coefficients and whose energy is greater than or equal to energy of a second combination coefficient is third total energy. When the energy of the first combination coefficient is greater than the energy of the second combination coefficient, and the plurality of combination coefficients are sorted in descending order of energy, the first combination coefficient and the second combination coefficient are sequentially adjacent, where the ratio of the first total energy to the second total energy is less than the first ratio, and a ratio of the third total energy to the second total energy is greater than the first ratio.

With reference to the third aspect or the fourth aspect, in a possible implementation, the first energy is the energy of the first combination coefficient, the sum of the energy of combination coefficients that are in the plurality of combination coefficients and whose energy is greater than or equal to the energy of the first combination coefficient is the first total energy, the sum of the energy of the plurality of combination coefficients is the second total energy, and a sum of energy of combination coefficients that are in the plurality of combination coefficients and whose energy is greater than or equal to energy of a third combination coefficient is fourth total energy. When the energy of the third combination coefficient is greater than the energy of the first combination coefficient, and the plurality of combination coefficients are sorted in descending order of energy, the third combination coefficient and the first combination coefficient are sequentially adjacent, where the ratio of the first total energy to the second total energy is greater than the first ratio, and a ratio of the fourth total energy to the second total energy is less than the first ratio.

With reference to the third aspect or the fourth aspect, in a possible implementation, the second energy is a product of a second coefficient and the energy of the combination coefficient with the largest energy in the plurality of combination coefficients, where the second coefficient is greater than 0 and less than 1; or

the second energy is energy of a fourth combination coefficient in a first set, where the first set includes all combination coefficients whose energy is greater than or equal to the first energy in the plurality of combination coefficients, or the first set includes the Y3 combination coefficients with the largest energy in the plurality of combination coefficients; and a sum of energy of combination coefficients that are in the first set and whose energy is less than or equal to the energy of the fourth combination coefficient is fifth total energy, and a sum of energy of all combination coefficients included in the first set is sixth total energy, where a ratio of the fifth total energy to the sixth total energy is equal to a second ratio.

With reference to the third aspect or the fourth aspect, in a possible implementation, the second energy is the energy of the fourth combination coefficient in the first set. The first set includes all the combination coefficients whose energy is greater than or equal to the first energy in the plurality of combination coefficients, or the first set includes the Y3 combination coefficients with the largest energy in the plurality of combination coefficients. The sum of the energy of the combination coefficients that are in the first set and whose energy is less than or equal to the energy of the fourth combination coefficient is the fifth total energy, the sum of energy of all the combination coefficients included in the first set is the sixth total energy, and a sum of energy of combination coefficients that are in the first set and whose energy is less than or equal to energy of a fifth combination coefficient is seventh total energy. When the energy of the fourth combination coefficient is greater than the energy of the fifth combination coefficient, and all the combination coefficients included in the first set are sorted in descending order of energy, the fourth combination coefficient and the fifth combination coefficient are sequentially adjacent, where the ratio of the fifth total energy to the sixth total energy is greater than the second ratio, and a ratio of the seventh total energy to the sixth total energy is less than the second ratio.

With reference to the third aspect or the fourth aspect, in a possible implementation, the second energy is the energy of the fourth combination coefficient in the first set. The first set includes all the combination coefficients whose energy is greater than or equal to the first energy in the plurality of combination coefficients, or the first set includes the Y3 combination coefficients with the largest energy in the plurality of combination coefficients. The sum of the energy of the combination coefficients that are in the first set and whose energy is less than or equal to the energy of the fourth combination coefficient is the fifth total energy, the sum of the energy of all the combination coefficients included in the first set is the sixth total energy, and a sum of energy of combination coefficients that are in the first set and whose energy is less than or equal to energy of a sixth combination coefficient is eighth total energy. When the energy of the sixth combination coefficient is greater than the energy of the fourth combination coefficient, and all the combination coefficients included in the first set are sorted in descending order of energy, the sixth combination coefficient and the fourth combination coefficient are sequentially adjacent, where the ratio of the fifth total energy to the sixth total energy is less than the second ratio, and a ratio of the eighth total energy to the sixth total energy is greater than the second ratio.

With reference to the third aspect or the fourth aspect, in a possible implementation, the at least one combination coefficient is divided into K combination coefficient groups, where K is an integer greater than 0; each of the at least one combination coefficient is a combination coefficient of one of Z1 spatial domain vectors, one of a plurality of frequency domain vectors, and one of Z2 time domain vectors, the Z1 spatial domain vectors are a part or all of the at least one spatial domain vector, and the Z2 time domain vectors are a part or all of the plurality of time domain vectors, where Z1 and Z2 are integers greater than 0; the Z1 spatial domain vectors, the plurality of frequency domain vectors, and the Z2 time domain vectors correspond to a second three-dimensional matrix, the second three-dimensional matrix includes K three-dimensional submatrices, and each three-dimensional submatrix corresponds to at least one of the Z1 spatial domain vectors, at least one of the plurality of frequency domain vectors, and at least one of the Z2 time domain vectors; and the K combination coefficient groups correspond one-to-one to the K three-dimensional submatrices, and each of the K combination coefficient groups is located in one of the K three-dimensional submatrices.

With reference to the third aspect or the fourth aspect, in a possible implementation, the first information includes at least one of the following: a position of a start spatial domain vector of a three-dimensional submatrix corresponding to each of the K combination coefficient groups; a quantity of spatial domain vectors included in the three-dimensional submatrix corresponding to each of the K combination coefficient groups; a position of a start frequency domain vector of the three-dimensional submatrix corresponding to each of the K combination coefficient groups; a quantity of frequency domain vectors included in the three-dimensional submatrix corresponding to each of the K combination coefficient groups; a position of a start time domain vector of the three-dimensional submatrix corresponding to each of the K combination coefficient groups; and a quantity of time domain vectors included in the three-dimensional submatrix corresponding to each of the K combination coefficient groups.

With reference to the third aspect, in a possible implementation, the method further includes: The terminal device sends second information to the access network device, where the second information indicates that a second position range includes positions corresponding to M1 consecutive frequency domain vectors in the plurality of frequency domain vectors and positions corresponding to M2 consecutive time domain vectors in the plurality of time domain vectors, where M1 and M2 are integers greater than 0; and a frequency domain vector corresponding to each of the at least one combination coefficient is one of the M1 consecutive frequency domain vectors, and a time domain vector corresponding to each of the at least one combination coefficient is one of the M2 consecutive time domain vectors. Specifically, the second information may indicate at least one of the following: the quantity M1 of frequency domain vectors corresponding to the second position range; an index of a first frequency domain vector or an index of a last frequency domain vector in the M1 frequency domain vectors in the second position range; the quantity M2 of time domain vectors corresponding to the second position range; and an index of a first time domain vector or an index of a last time domain vector in the M2 time domain vectors in the second position range.

With reference to the third aspect, in a possible implementation, the method further includes: The terminal device sends third information to the access network device.

With reference to the fourth aspect, in a possible implementation, the method further includes: The access network device receives the third information from the terminal device.

With reference to the third aspect or the fourth aspect, in a possible implementation, the third information includes at least one of the following: a phase of a combination coefficient at a center position of the three-dimensional submatrix corresponding to each of the K combination coefficient groups; an angle gradient, in a spatial domain dimension, of the three-dimensional submatrix corresponding to each of the K combination coefficient groups; an angle gradient, in a frequency domain dimension, of the three-dimensional submatrix corresponding to each of the K combination coefficient groups; and an angle gradient, in a time domain dimension, of the three-dimensional submatrix corresponding to each of the K combination coefficient groups.

With reference to the third aspect, in a possible implementation, the method further includes: The terminal device sends fourth information to the access network device.

With reference to the fourth aspect, in a possible implementation, the method further includes: The access network device receives the fourth information from the terminal device.

With reference to the third aspect or the fourth aspect, in a possible implementation, the fourth information includes all coefficients of an autocorrelation matrix of each of the K three-dimensional submatrices, the fourth information includes first H1 eigenvalues of an autocorrelation matrix of each of the K three-dimensional submatrices and eigenvectors corresponding to the first H1 eigenvalues, or the fourth information includes first H2% eigenvalues of an autocorrelation matrix of each of the K three-dimensional submatrices and eigenvectors corresponding to the first H2% eigenvalues, where H1 and H2 are preset values.

According to a fifth aspect, this application provides a communication method. The method includes: A terminal device receives a downlink reference signal from an access network device, and the terminal device sends first indication information to the access network device, where the first indication information indicates at least one Doppler shift, the at least one Doppler shift is determined based on the downlink reference signal, and the at least one Doppler shift is associated with at least two frequency domain bases.

According to a sixth aspect, this application provides a communication method. The method includes: An access network device sends a downlink reference signal to a terminal device; and the access network device receives first indication information from the terminal device, where the first indication information indicates at least one Doppler shift, the at least one Doppler shift is determined based on the downlink reference signal, and the at least one Doppler shift is associated with at least two frequency domain bases.

According to the foregoing method, in this embodiment of this application, the at least one Doppler shift is indicated by using the first indication information, so that there is no need to feed back all Doppler shifts determined based on the downlink reference signal, to reduce feedback overheads and improve feedback efficiency. Further, when performing channel estimation, the access network device can determine time domain-related information of a channel based on the Doppler shift indicated by using the first indication information, and can obtain a more accurate channel state by using the channel at a moment of the channel estimation, channels at several past moments, and information about the Doppler shift, to enable the access network device to perform channel prediction, so as to overcome a performance deterioration problem caused by channel aging.

With reference to the fifth aspect or the sixth aspect, in a possible implementation, that the first indication information indicates at least one Doppler shift includes: The first indication information indicates the at least one Doppler shift by indicating an index of a Doppler domain basis corresponding to the Doppler shift, or the first indication information indicates the at least one Doppler shift by indicating a value of the Doppler shift.

With reference to the fifth aspect or the sixth aspect, in a possible implementation, the at least one Doppler shift is one or more groups of Doppler shifts, each group of the one or more groups of Doppler shifts includes at least two Doppler shifts, the at least two Doppler shifts are consecutive, and that the at least two Doppler shifts are consecutive means that indexes of Doppler domain bases corresponding to the Doppler shifts are consecutive or values of the Doppler shifts have a same interval.

With reference to the fifth aspect or the sixth aspect, in a possible implementation, for each group of Doppler shifts, the first indication information indicates indexes of two Doppler domain bases, and the indexes of the two Doppler domain bases are respectively an index with a largest value and an index with a smallest value in indexes of Doppler domain bases corresponding to the group of Doppler shifts.

With reference to the fifth aspect or the sixth aspect, in a possible implementation, for each group of Doppler shifts, the first indication information indicates an index of one Doppler domain basis and an index length value, and the index of the Doppler domain basis and the index length value are used to determine each Doppler shift in the group of Doppler shifts.

With reference to the fifth aspect or the sixth aspect, in a possible implementation, the index of the Doppler domain basis is an index with a largest value or an index with a smallest value in indexes of Doppler domain bases corresponding to the group of Doppler shifts.

With reference to the fifth aspect or the sixth aspect, in a possible implementation, for each group of Doppler shifts, the first indication information indicates an index length value of one Doppler domain basis, the index length value and an index of one Doppler domain basis are used to determine each Doppler shift in the group of Doppler shifts, and the index of the Doppler domain basis is pre-defined, or the index of the Doppler domain basis is indicated by using fourth indication information.

With reference to the fifth aspect or the sixth aspect, in a possible implementation, for each group of Doppler shifts, the first indication information indicates values of two Doppler shifts, and the values of the two Doppler shifts are respectively a largest value and a smallest value of the Doppler shifts in the group of Doppler shifts.

With reference to the fifth aspect or the sixth aspect, in a possible implementation, for each group of Doppler shifts, the first indication information indicates a value of one Doppler shift and a value span, and the value of the Doppler shift and the value span are used to determine each Doppler shift in the group of Doppler shifts.

With reference to the fifth aspect or the sixth aspect, in a possible implementation, the value of the Doppler shift is a largest value or a smallest value in the group of Doppler shifts.

With reference to the fifth aspect or the sixth aspect, in a possible implementation, for each group of Doppler shifts, the first indication information indicates a value span of one Doppler shift, the value span and a value of one Doppler shift are used to determine each Doppler shift in the group of Doppler shifts, and the value of the Doppler shift is pre-defined, or the value of the Doppler shift is indicated by using fourth indication information.

With reference to the fifth aspect or the sixth aspect, in a possible implementation, for each group of Doppler shifts, the first indication information indicates a value of each Doppler shift in the group of Doppler shifts, or the first indication information indicates an index of a Doppler domain basis corresponding to each Doppler shift in the group of Doppler shifts.

With reference to the fifth aspect or the sixth aspect, in a possible implementation, the first indication information indicates a value of each of the at least one Doppler shift, or the first indication information indicates an index of a Doppler domain basis corresponding to each of the at least one Doppler shift.

With reference to the fifth aspect or the sixth aspect, in a possible implementation, the terminal device sends second indication information to the access network device, and the second indication information indicates the at least two frequency domain bases.

With reference to the fifth aspect or the sixth aspect, in a possible implementation, the at least two frequency domain bases are one or more groups of frequency domain bases, each group of the one or more groups of frequency domain bases includes at least two frequency domain bases, the at least two frequency domain bases are consecutive, and that the at least two frequency domain bases are consecutive means that indexes of the frequency domain bases are consecutive.

With reference to the fifth aspect or the sixth aspect, in a possible implementation, for each group of frequency domain bases, the second indication information indicates indexes of two frequency domain bases, and the indexes of the two frequency domain bases are respectively an index with a largest value and an index with a smallest value in indexes of the group of frequency domain bases.

With reference to the fifth aspect or the sixth aspect, in a possible implementation, for each group of frequency domain bases, the second indication information indicates an index of one frequency domain basis and an index length value, and the index of the frequency domain basis and the index length are used to determine each frequency domain basis in the group of frequency domain bases.

With reference to the fifth aspect or the sixth aspect, in a possible implementation, the index of the frequency domain basis is an index with a largest value or an index with a smallest value in indexes of the group of frequency domain bases.

With reference to the fifth aspect or the sixth aspect, in a possible implementation, for each group of frequency domain bases, the second indication information indicates an index length value of one frequency domain basis, the index length value and an index of one frequency domain basis are used to determine each frequency domain basis in the group of frequency domain bases, and the index of the frequency domain basis is pre-defined, or the index of the frequency domain basis is indicated by using fifth indication information.

With reference to the fifth aspect or the sixth aspect, in a possible implementation, for each group of frequency domain bases, the second indication information indicates each frequency domain basis in the group of frequency domain bases.

With reference to the fifth aspect or the sixth aspect, in a possible implementation, the second indication information indicates an index of each of the at least two frequency domain bases.

With reference to the fifth aspect or the sixth aspect, in a possible implementation, the Doppler domain basis is a discrete Fourier transform DFT basis related to at least one of a quantity of downlink reference signals and a time interval of the downlink reference signals; the Doppler domain basis is a Doppler value basis quantized based on at least one bit; or the Doppler domain basis is a basis formed based on a first cyclic shift sequence.

With reference to the fifth aspect or the sixth aspect, in a possible implementation, the frequency domain basis is a DFT basis related to at least one of a bandwidth of the downlink reference signal and a frequency domain granularity of the downlink reference signal;

the pre-defined frequency domain basis is a delay value basis quantized based on at least one bit; or
the pre-defined frequency domain basis is a basis formed based on a second cyclic shift sequence.

With reference to the fifth aspect or the sixth aspect, in a possible implementation, the method further includes: The terminal device sends third indication information to the access network device, where the third indication information indicates one or more Doppler shift and frequency domain basis pairs, and each Doppler shift and frequency domain basis pair includes one Doppler shift and one frequency domain basis, the Doppler shift included in each Doppler shift and frequency domain basis pair belongs to the at least one Doppler shift indicated by using the first indication information, and the frequency domain basis included in each Doppler shift and frequency domain basis pair belongs to the at least two frequency domain bases.

With reference to the fifth aspect or the sixth aspect, in a possible implementation, the method further includes: The at least one Doppler shift indicated by using the first indication information and the at least two frequency domain bases form a plurality of Doppler shift and frequency domain basis pairs; and energy corresponding to the one or more Doppler shift and frequency domain basis pairs indicated by using the third indication information is greater than or equal to energy corresponding to another Doppler shift and frequency domain basis pair in the plurality of Doppler shift and frequency domain basis pairs; or energy corresponding to the one or more Doppler shift and frequency domain basis pairs indicated by using the third indication information is a Doppler shift and frequency domain basis pair whose corresponding energy is greater than or equal to first energy in the plurality of Doppler shift and frequency domain basis pairs.

With reference to the fifth aspect or the sixth aspect, in a possible implementation, the method further includes: a quantity of the one or more Doppler shift and frequency domain basis pairs are indicated by using sixth indication information or pre-defined, or the first energy is indicated by using sixth indication information or pre-defined.

According to a seventh aspect, an embodiment of this application provides a communication apparatus. The apparatus may be used in a terminal device, and has a function of implementing the method performed by the terminal device in the first aspect, the third aspect, or the fifth aspect. The function may be implemented by using hardware, or may be implemented by hardware executing corresponding software. The hardware or the software includes one or more units corresponding to the functions. For example, a transceiver unit and a processing unit are included. The transceiver unit may also be referred to as a communication unit or a transceiver module. The transceiver unit may specifically include a receiving unit and a sending unit. The processing unit may also be referred to as a processing module.

In a design, the communication apparatus is a communication chip, and the transceiver unit may be an input/output circuit or port, an interface circuit, an output circuit, an input circuit, a pin, a related circuit, or the like of the communication chip. The processing unit may be a processing circuit or a logic circuit of the communication chip.

According to an eighth aspect, an embodiment of this application provides a communication apparatus. The apparatus may be used in an access network device, and has a function of implementing the method performed by the access network device in the second aspect, the fourth aspect, or the sixth aspect. The function may be implemented by using hardware, or may be implemented by hardware executing corresponding software. The hardware or the software includes one or more units corresponding to the functions. For example, a transceiver unit and a processing unit are included. The transceiver unit may also be referred to as a communication unit or a transceiver module. The transceiver unit may specifically include a receiving unit and a sending unit. The processing unit may also be referred to as a processing module.

In a design, the communication apparatus is a communication chip, and the transceiver unit may be an input/output circuit or port, an interface circuit, an output circuit, an input circuit, a pin, a related circuit, or the like of the communication chip. The processing unit may be a processing circuit or a logic circuit of the communication chip.

According to a ninth aspect, an embodiment of this application provides a communication apparatus. The communication apparatus includes a processor and a memory. The memory stores a computer program or computer instructions, and the processor is configured to invoke and run the computer program or the computer instructions stored in the memory, so that the processor implements any one of the possible implementations in the first aspect to the sixth aspect.

Optionally, the communication apparatus further includes an interface circuit. The processor is configured to control the interface circuit to receive and send a signal, information, data, and/or the like.

According to a tenth aspect, an embodiment of this application provides a communication apparatus. The communication apparatus includes a processor. The processor is configured to invoke a computer program or computer instructions in a memory, so that the processor implements any one of the possible implementations in the first aspect to the sixth aspect.

Optionally, the communication apparatus further includes an interface circuit. The processor is configured to control the interface circuit to receive and send a signal, information, data, and/or the like.

According to an eleventh aspect, an embodiment of this application further provides a computer program product including instructions. When the computer program product runs on a computer, the computer is enabled to perform any one of the possible implementations in the first aspect to the sixth aspect.

According to a twelfth aspect, an embodiment of this application further provides a computer-readable storage medium, including computer instructions. When the instructions are run on a computer, the computer is enabled to perform any one of the possible implementations in the first aspect to the sixth aspect.

According to a thirteenth aspect, an embodiment of this application further provides a chip apparatus, including a processor, configured to invoke a computer program or computer instructions in a memory, so that the processor performs any one of the possible implementations in the first aspect to the sixth aspect. Optionally, the processor is coupled to the memory through an interface.

According to a fourteenth aspect, an embodiment of this application provides a communication system. The communication system includes the communication apparatus (for example, the terminal device) according to the fifth aspect and the communication apparatus (for example, the access network device) according to the sixth aspect.

These aspects or other aspects of this application are clearer and more comprehensible in descriptions of the following embodiments.

BRIEF DESCRIPTION OF DRAWINGS

FIG. 1 is a diagram of a network architecture applicable to an embodiment of this application;
FIG. 2 is a diagram of a combination coefficient according to an embodiment of this application;
FIG. 3 is a schematic flowchart of a communication method according to an embodiment of this application;
FIG. 4(a) to FIG. 4(g) are schematic diagrams of combination coefficients according to embodiments of this application;
FIG. 4(h) is a diagram of a combination coefficient group according to an embodiment of this application;
FIG. 5 is a diagram of a relationship between two submatrices according to an embodiment of this application;
FIG. 6 is a diagram of a relationship between two submatrices according to an embodiment of this application;
FIG. 7 is a diagram of a relationship between two submatrices according to an embodiment of this application;
FIG. 8 is a diagram of a relationship between two submatrices according to an embodiment of this application;
FIG. 9 is a diagram of a plurality of combination coefficient groups according to an embodiment of this application;
FIG. 10 is a diagram of a plurality of combination coefficient groups according to an embodiment of this application;
FIG. 11 is a diagram of a plurality of combination coefficient groups according to an embodiment of this application;
FIG. 12 is a schematic flowchart of a communication method according to an embodiment of this application;
FIG. 13 is a schematic flowchart of a communication method according to an embodiment of this application;

FIG. 14 is a diagram of a frequency domain basis and a Doppler shift according to an embodiment of this application;

FIG. 15 is a diagram of a frequency domain basis and a Doppler shift according to an embodiment of this application;

FIG. 16 is a diagram of a structure of a communication apparatus according to an embodiment of this application; and

FIG. 17 is a diagram of a structure of a communication apparatus according to an embodiment of this application.

DESCRIPTION OF EMBODIMENTS

The following describes in detail embodiments of this application with reference to the accompanying drawings of the specification.

A communication method provided in embodiments of this application may be applied to a 4th generation (4th generation, 4G) communication system, for example, a long term evolution (long term evolution, LTE) system; or may be applied to a 5th generation (5th generation, 5G) communication system, for example, a 5G new radio (new radio, NR) system; or applied to various future communication systems, for example, a 6th generation (6th generation, 6G) communication system.

The method and an apparatus provided in embodiments of this application are based on a same technical concept or similar technical concepts. Because problem solving principles of the method and the apparatus are similar, implementations of the apparatus and the method may be mutually referenced. Repeated descriptions are not provided.

In embodiments of this application, an access network device may be any device with a wireless transceiver function. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the device may be a gNB or a transmission point (TRP or TP) in a 5G (such as NR) system, or one antenna panel or a group of antenna panels (including a plurality of antenna panels) of a base station in a 5G system, or may be a network node that constitutes a gNB or a transmission point, for example, a baseband unit (BBU) or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling, for example, RRC layer signaling, may also be considered as being sent by the DU or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in a core network (core network, CN). This is not limited in this application.

The access network device serves a cell, and a terminal device communicates with the cell over a transmission resource (for example, a frequency domain resource or a spectrum resource) allocated by the access network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells are characterized by small coverage areas and low transmit powers, and are applicable to providing high-rate data transmission services.

In embodiments of this application, the terminal device may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, a terminal device in a future evolved public land mobile network (public land mobile network, PLMN), or the like.

The wearable device may also be referred to as a wearable intelligent device, and is a general term for wearable devices such as glasses, gloves, watches, clothes, and shoes that are developed by applying wearable technologies to intelligent designs of daily wear. The wearable device is a portable device that can be directly worn by a user or integrated into clothes or an accessory of the user. The wearable device is not only a hardware device, but also implements a powerful function through software support, data exchanging, and cloud interaction. In a broad sense, wearable intelligent devices include full-featured and large-sized devices, such as smart watches or smart glasses, that can implement complete or partial functions without depending on smartphones, and devices, such as various smart bands or smart jewelry for monitoring physical signs, that dedicated to only one type of application function and need to work with other devices such as smartphones.

In addition, the terminal device may alternatively be a terminal device in an internet of things (internet of things, IoT) system. IoT is an important part in future development of information technologies. A main technical feature of the IoT is to connect things to a network by using a communication technology, to implement an intelligent network for human-machine interconnection and thing-thing interconnection.

For ease of understanding of embodiments of this application, terms in embodiments of this application are briefly described below.

1. Antenna port

The antenna port may be referred to as a port for short. The antenna port may be understood as a transmit antenna identified by a receiving device, or a transmit antenna that can be distinguished in space. One antenna port may be pre-configured for each virtual antenna, each virtual antenna may be a weighted combination of a plurality of physical antennas, and each antenna port may correspond to one reference signal. Therefore, each antenna port may be referred to as a reference signal port, for example, a sounding reference signal (sounding reference signal, SRS) port. In embodiments of this application, the reference signal may be a reference signal that is not precoded, or may be a precoded reference signal. This is not limited in this application. When the reference signal is a precoded reference signal, the reference signal port may be a transmit antenna port. The transmit antenna port may be an independent transceiver unit (transceiver unit, TxRU).

2. Spatial domain vector (spatial domain vector)

The spatial domain vector may also be referred to as a spatial domain component vector, a beam (beam) vector, a spatial domain beam basis vector, a spatial domain basis vector, or the like. One spatial domain vector may correspond to one beam (beam) or one beam direction. The spatial domain vector may be one of vectors for constructing a channel matrix. Each element in the spatial domain vector may represent a weight of each antenna port (antenna port). Signals of the antenna ports are linearly superimposed based on the weights of the antenna ports represented by using the elements in the spatial domain vector, so that an area with a stronger signal can be formed in a specific direction of space.

For ease of description below, it is assumed that the spatial domain vector is denoted as u. A length of the spatial domain vector u may be a quantity $N_s$ of transmit antenna ports in one polarization direction, where $N_s$ is an integer greater than or equal to 1. The spatial domain vector may be, for example, a column vector or a row vector with a length of $N_s$. This is not limited in this application.

In an implementation, the spatial domain vector is a discrete Fourier transform (discrete Fourier transform, DFT) vector. The DFT vector may be a vector in a DFT matrix.

In an implementation, the spatial domain vector is a conjugate transpose vector of the DFT vector. The DFT conjugate transpose vector may be a column vector in a conjugate transpose matrix of the DFT matrix.

In an implementation, the spatial domain vector is an oversampled DFT vector. The oversampled DFT vector may be a vector in an oversampled DFT matrix.

In an implementation, the spatial domain vector may be, for example, a 2-dimensional (2-dimensional, 2D)-DFT vector $v_{l,m}$ defined in a type II (type II) codebook in the NR protocol 38.214 release 15 (release 15, R15). In other words, the spatial domain vector may be a 2D-DFT vector or an oversampled 2D-DFT vector. For brevity, detailed descriptions of the 2D-DFT vector are omitted herein.

3. Frequency domain vector (frequency domain vector)

The frequency domain vector may also be referred to as a frequency domain component vector, a frequency domain basis vector, a frequency domain basis (frequency domain basis), or the like, and may be a vector representing a change rule of a channel in frequency domain. One frequency domain vector may correspond to one delay path (delay path) or one delay domain path. Each frequency domain vector may represent a change rule. When a signal is transmitted through a wireless channel, the signal may arrive at a receive antenna through a plurality of paths from a transmit antenna. Frequency-selective fading caused by a multipath delay is a change of a frequency domain channel. Therefore, change rules of channels in frequency domain that are caused by delays on different transmission paths may be represented by using different frequency domain vectors.

A length of a frequency domain vector $u_f$ may be denoted as $N_f$, where $N_f$ is a positive integer, and the frequency domain vector may be, for example, a column vector or a row vector with a length of $N_f$. The length of the frequency domain vector may be determined based on a quantity of to-be-reported frequency domain units that is pre-configured in a reporting bandwidth, or may be determined based on a length of the reporting bandwidth, or may be a value pre-defined in a protocol. The length of the frequency domain vector is not limited in this application. For example, the reporting bandwidth may be a CSI reporting bandwidth (csi-ReportingBand) carried in a CSI reporting pre-configuration in higher layer signaling (for example, a radio resource control (radio resource control, RRC) message).

For example, the frequency domain vector or the frequency domain basis may be a DFT basis related to at least one of a bandwidth of a downlink reference signal and a frequency domain granularity of the downlink reference signal, may be a delay value basis quantized based on M bits, or may be a basis formed based on a cyclic shift (Cyclic Shift). Each of delay value bases quantized based on the M bits corresponds to one delay path or one delay domain path, for example, 10 ns. An M-bit delay value, namely, a delay value basis, that is obtained through quantization may be pre-defined, notified by a base station to a terminal device, or notified by a terminal device to a base station. The basis formed based on the cyclic shift may be a basis formed by N cyclic shift sequences, each basis is a cyclic shift sequence, and each cyclic shift sequence corresponds to a cyclic shifting manner of one delay path or frequency domain basis.

After the frequency domain basis or the frequency domain vector is determined, indexes corresponding to all frequency domain bases may be determined. Each frequency domain basis corresponds to one index, and each index may be used to determine one frequency domain basis. For example, when there are a total of N frequency domain bases, in a possible manner, the frequency domain bases are indexed by numbers from 1 to N; and in a possible manner, values of the frequency domain bases are used as indexes. For example, when the frequency domain basis is a delay value base, an index of a frequency domain basis corresponding to 10 ns may be 10.

4. Doppler shift (Doppler shift) and time domain vector (time domain vector)

The Doppler shift may also be referred to as a Doppler frequency shift. The Doppler frequency shift indicates a frequency shift caused by movement of a terminal device or a base station, or another factor. The Doppler shift may represent a magnitude of a frequency shift, or may represent a time domain change rule of a channel. When signals are transmitted through wireless channels at different moments, time-selective fading, in other words, a time-domain channel change, is caused by multipath and mobility of a transmitting end or a receiving end. Each delay path of the channel may experience a different moving environment. Therefore, each delay path or frequency domain basis corresponds to one or more Doppler shifts, and the correspondence indicates that energy or an amplitude of a coefficient corresponding to the Doppler shift on the delay path or the frequency domain basis is greater than 0, indicating a specific change status of a time-domain channel on the delay path. Correspondingly, it may also be referred to as that the Doppler shift is associated with the delay path or the frequency domain base. One delay path or frequency domain basis and one Doppler shift corresponding to the delay path or frequency domain basis, or one Doppler shift and one delay path or frequency domain basis associated with the Doppler shift form one Doppler shift and frequency domain basis pair. The frequency domain basis pair also corresponds to the coefficient.

The time domain vector may also be referred to as a time domain component vector, a time domain basis vector, a Doppler domain basis (Doppler domain basis), or the like, and may be a vector representing a change rule of a channel in time domain. One time domain vector or one Doppler domain basis may correspond to one Doppler path (Doppler path) or one Doppler shift (Doppler shift). Each time domain vector may represent a change rule. When signals are transmitted through wireless channels at different moments, time-selective fading, in other words, a time-domain channel change, is caused by multipath and mobility of a transmitting end or a receiving end. Therefore, different time domain vectors may represent a change rule of the channels in time domain.

A length of a time domain vector $u_t$ may be denoted as $N_t$, where $N_t$ is a positive integer, and the time domain vector may be, for example, a column vector or a row vector with a length of $N_t$. The length of the time domain vector may be determined based on a quantity of moments that are jointly observed. For example, if we focus on S CSI-RS measurement results, $N_t = S$. The time domain vector may be a DFT basis.

For example, the time domain vector or the Doppler domain basis may be a DFT basis related to at least one of a quantity of downlink reference signals and a time interval of the downlink reference signals, may be a Doppler value basis quantized based on P bits, or may be a basis formed based on a cyclic shift (Cyclic Shift). Each of Doppler value bases quantized based on the P bits corresponds to one Doppler shift, for example, 20 Hz. A P-bit Doppler shift, namely, a Doppler value basis, that is obtained through quantization may be pre-defined, notified by a base station to a terminal device, or notified by a terminal device to a base station. The basis formed based on the cyclic shift may be a basis formed by Q cyclic shift sequences, each basis is a cyclic shift sequence, and each cyclic shift sequence corresponds to a cyclic shifting manner of one Doppler shift or time domain vector.

After the Doppler domain basis or the time domain vector is determined, indexes corresponding to all Doppler domain bases may be determined. Each Doppler domain basis corresponds to one index, and each index may be used to determine one Doppler domain basis, to determine a Doppler shift corresponding to the Doppler domain basis. For example, when there are a total of Q Doppler domain bases, in a possible manner, the Doppler domain bases are numbered from 1 to Q as indexes; and in a possible manner, values of Doppler shifts corresponding to the Doppler domain bases are used as indexes. For example, when the Doppler domain basis is a Doppler value base, an index of a Doppler domain basis corresponding to 20 Hz may be 20.

5. Spatial-frequency vector pair

The spatial-frequency vector pair may also be referred to as a spatial-frequency component vector. One spatial domain vector and one frequency domain vector may be combined to obtain one spatial-frequency vector pair. In other words, one spatial-frequency vector pair may include one spatial domain vector and one frequency domain vector. One spatial-frequency component matrix may be obtained by using a spatial domain vector and a frequency domain vector in one spatial-frequency vector pair. For example, one spatial-frequency component matrix may be obtained by multiplying one spatial-frequency vector by a conjugate transpose of one frequency domain vector. The spatial-frequency component matrix described herein is relative to a spatial-frequency matrix described below. The spatial-frequency matrix may be obtained by performing weighted summation on a plurality of spatial-frequency component matrices. Therefore, each item used for weighting may be referred to as a component of the spatial-frequency matrix, namely, the spatial-frequency component matrix described herein.

6. Spatial-frequency-time vector group

The spatial-frequency-time vector group may also be referred to as a spatial-frequency-time component vector. One spatial domain vector, one frequency domain vector, and one time domain vector may be combined to obtain one spatial-frequency-time vector group. In other words, one spatial-frequency-time vector group may include one spatial domain vector, one frequency domain vector, and one time domain vector. One spatial-frequency-time component three-dimensional matrix may be obtained by using a spatial domain vector, a frequency domain vector, and a time domain vector in one spatial-frequency-time vector group. For example, one spatial-frequency-time component three-dimensional matrix may be obtained by performing tensor product multiplication on one spatial domain vector, one frequency domain vector, and one time domain vector. The spatial-frequency-time component three-dimensional matrix described herein is relative to a spatial-frequency-time three-dimensional matrix described below. A spatial-frequency-time three-dimensional matrix may be obtained by performing weighted summation on a plurality of spatial-frequency-time component three-dimensional matrices. Therefore, each item used for weighting may be referred to as a component of the spatial-frequency-time three-dimensional matrix, namely, the spatial-frequency-time component three-dimensional matrix described herein.

7. Spatial-frequency matrix

In embodiments of this application, the spatial-frequency matrix may be understood as an intermediate value used to determine a channel matrix corresponding to each frequency domain unit. For a terminal device, a spatial-frequency matrix may be determined based on a channel matrix corresponding to each frequency domain unit. For an access network device, a spatial-frequency matrix may be obtained by performing weighted summation on a plurality of spatial-frequency component matrices, to restore a channel matrix.

For example, the spatial-frequency matrix may be denoted as $\mathbf{H}$, where $\mathbf{H} = [\ \mathbf{w}_0\ \mathbf{w}_1\ ...\ \mathbf{w}_{N_{f-1}}]$. $\mathbf{w}_0$ to $\mathbf{w}_{N_{f-1}}$ are $N_f$ column vectors corresponding to $N_f$ frequency domain units, each column vector may be a channel vector or a channel matrix corresponding to each frequency domain unit, and a length of each column vector may be $N_s$. The $N_f$ column vectors correspond one-to-one to channel vectors of the $N_f$ frequency domain units. In other words, the spatial-frequency matrix may be considered as a joint matrix formed by combining the channel vectors corresponding to the $N_f$ frequency domain units.

In a possible design, the spatial-frequency matrix may correspond to a receive antenna port. That the spatial-frequency matrix corresponds to the receive antenna port is because the terminal device may feed back a frequency domain vector a spatial domain vector and a combination coefficient based on each receive antenna port. A spatial-frequency matrix determined by an access network device based on the feedback of the terminal device is the spatial-frequency matrix corresponding to the receive antenna port.

It should be understood that the spatial-frequency matrix is merely a representation form used to determine the channel matrix, and should not constitute any limitation on this application. For example, the column vectors of the spatial-frequency matrix are successively arranged head to end from left to right, or are arranged according to another pre-defined rule, to obtain a vector with a length of $N_s \times N_f$. The vector may be referred to as a spatial-frequency vector.

It should be further understood that dimensions of the spatial-frequency matrix and the spatial-frequency vector shown above are merely examples, and should not constitute any limitation on this application. For example, the spatial-frequency matrix may also be a matrix whose dimensions are $N_f \times N_s$. Each row vector may correspond to one frequency domain unit, to determine a channel vector of the corresponding frequency domain unit.

In addition, when a plurality of polarization directions are configured for a transmit antenna, the dimensions of the spatial-frequency matrix may further be extended. For example, for a dual-polarized directional antenna, the dimensions of the spatial-frequency matrix may be $2N_s \times N_f$ or $N_f \times 2N_s$. It should be understood that a quantity of polarization directions of a transmit antenna is not limited in this application.

Further, a spatial-frequency matrix corresponding to one receive antenna port may be represented as $\mathbf{H} = \mathbf{W}_1 \tilde{\mathbf{W}} \mathbf{W}_3{}^H$.

One or more spatial domain vectors may form a matrix $\mathbf{W}_1$, and each column vector in $\mathbf{W}_1$ corresponds to one spatial domain vector. One or more frequency domain vectors may form a matrix $\mathbf{W}_3$, and each column vector in $\mathbf{W}_3$ corresponds to one frequency domain vector.

When a quantity of receive antenna ports is greater than 1, spatial domain vectors used for the receive antenna ports may not be completely the same, in other words, an independent spatial domain vector is used for each receive antenna port. Spatial domain vectors used for the receive antenna ports may alternatively be the same, in other words, the plurality of receive antenna ports share L spatial domain vectors.

When a quantity of receive antenna ports is greater than 1, frequency domain vectors used for the receive antenna ports may not be completely the same, in other words, an independent frequency domain vector is used for each receive antenna port. Frequency domain vectors used for the receive antenna ports may alternatively be the same, in other words, the plurality of receive antenna ports share M frequency domain vectors.

In this case, a channel vector corresponding to each frequency domain unit on receive antenna port *i* may be constructed based on the L spatial domain vectors and $M^i$ frequency domain vectors.

If a dual-polarized directional transmit antenna is used, L spatial domain vectors may be selected for each polarization direction. In this case, dimensions of $\mathbf{W}_1$ may be $2N_s \times 2L$. In a possible implementation, L same spatial domain vectors $\{\mathbf{b}_s^0, \mathbf{b}_s^1, \cdots, \mathbf{b}_s^{L-1}\}$ may be used for the two polarization directions. In this case, $\mathbf{W}_1$ may be represented as:

$$\begin{bmatrix} \mathbf{b}_s^0 & \mathbf{b}_s^1 & \cdots & \mathbf{b}_s^{L-1} & 0 & 0 & \cdots & 0 \\ 0 & 0 & \cdots & 0 & \mathbf{b}_s^0 & \mathbf{b}_s^1 & \cdots & \mathbf{b}_s^{L-1} \end{bmatrix}.$$

$\mathbf{b}_s^i$ represents spatial domain vector *i* in the L selected spatial domain vectors, and *i*=0, 1, ..., L-1.

For receive antenna port i, dimensions of $\mathbf{W}_3{}^H$ may be $M^i \times N_f$. Each column vector **in $\mathbf{W}_3$** may be one frequency domain vector. In this case, each spatial domain vector in $\mathbf{W}_1$ and each frequency domain vector in $\mathbf{W}_3$ may form a spatial-frequency vector pair, and each spatial-frequency vector pair may correspond to one combination coefficient. Therefore, $2L \times M^i$ spatial-frequency vector pairs formed by 2L spatial domain vectors and $M^i$ frequency domain vectors may correspond one-to-one to $2L \times M^i$ combination coefficients.

For receive antenna port i, $\tilde{\mathbf{W}}$ may be a combination coefficient matrix formed by the $2L \times M^i$ combination coefficients, and dimensions thereof may be $2L \times M^i$. Row *l* in the combination coefficient matrix $\tilde{\mathbf{W}}$ may correspond to spatial domain vector *l* in a first polarization direction of the 2L spatial domain vectors, and row (L+*l*) in combination coefficient matrix $\tilde{\mathbf{W}}$ may correspond to spatial domain vector *l* in a second polarization direction of the 2L spatial domain vectors. Column *m* ($0 \leq m \leq M^i-1$, and m is an integer) in the combination coefficient matrix $\tilde{\mathbf{W}}$ may correspond to frequency domain vector *m* in the $M^i$ frequency domain vectors.

A position of a spatial-frequency vector pair for constructing a spatial-frequency matrix is specifically a position of a spatial domain vector for constructing the spatial-frequency matrix among the spatial domain vectors reported by the terminal device and a position of a frequency domain vector for constructing the spatial-frequency matrix among the frequency domain vectors reported by the terminal device. Because each spatial-frequency vector pair corresponds to one non-zero combination coefficient (referred to as a non-zero coefficient for short), the position of the spatial-frequency vector pair for constructing the spatial-frequency matrix is also a position of the non-zero coefficient.

8. Spatial-frequency-time three-dimensional matrix

In embodiments of this application, the spatial-frequency-time three-dimensional matrix may be understood as an intermediate value used to determine, at a specific moment, a channel vector or matrix corresponding to each frequency domain unit. For a terminal device, a spatial-frequency-time three-dimensional matrix may be determined based on a channel matrix corresponding to each frequency domain unit obtained by using several downlink reference signals at different moments. For an access network device, a spatial-frequency-time three-dimensional matrix may be obtained by performing weighted summation on a plurality of spatial-frequency-time component three-dimensional matrices, to restore a channel matrix.

In a possible design, the spatial-frequency-time three-dimensional matrix may correspond to a receive antenna port. Each receive port extends a spatial-frequency matrix corresponding to the receive port to $N_t$ dimensions in a time dimension, and selects, in each time dimension, a spatial-frequency matrix obtained by using a corresponding downlink reference signal, to finally obtain the spatial-frequency-time three-dimensional matrix, and dimensions thereof may be $N_s \times N_f \times N_t$.

In addition, when a plurality of polarization directions are configured for a transmit antenna, the dimensions of the spatial-frequency-time three-dimensional matrix may further be extended. For example, for a dual-polarized directional antenna, the dimensions of the spatial-frequency-time three-dimensional matrix may be $2N_s \times N_f \times N_t$ or $N_f \times 2N_s \times N_t$. It should be understood that a quantity of polarization directions of a transmit antenna is not limited in this application.

Further, a spatial-frequency-time three-dimensional matrix corresponding to one receive antenna port may further be represented as:

$$H_{sft} = W_4 \odot_3 (W_3 \odot_2 (W_1 \odot_1 \widetilde{W_{sft}})).$$

One or more vectors may form matrix $W_1$, and each column vector in $W_1$ corresponds to one spatial domain vector. One or more frequency domain vectors may form a matrix $W_3$, each column vector in $W_3$ corresponds to one frequency domain vector, one or more time domain vectors may form a matrix $W_4$, and each column vector in $W_4$ corresponds to one time domain vector

For an N-dimensional matrix R, dimensions are $I_1 \times I_2 \times ... \times I_N$, and a definition of an operation $\odot_n$, n = 1,2, ..., N is as follows:

For a two-dimensional matrix $Q_n$, dimensions are $a \times I_n$, $n \in [1,2, ..., N]$, $R_{new} = Q_n \odot_n R$, and dimensions of $R_{new}$ are $I_1 \times I_2 \times ... \times I_{n-1} \times a \times I_{n+1} \times ... \times I_N$.

$$R_{new}(i_1, i_2, ..., i_{n-1}, j, i_{n+1}, ..., i_N) = \sum_{i_n=1}^{I_N} Q_n(j, i_n) * R(i_1, i_2, ..., i_{n-1}, i_n, i_{n+1}, ..., i_N).$$

For receive antenna port $i$, $\widetilde{W_{sft}}$ may be a combination coefficient three-dimensional matrix formed by the $2L \times M^i \times S$ combination coefficients, and dimensions thereof may be $2L \times M^i \times S$. First dimension $l$ in the combination coefficient three-dimensional matrix $\widetilde{W_{sft}}$ may correspond to spatial domain vector $l$ in a first polarization direction of 2L spatial domain vectors, first dimension $(L+l)$ in combination coefficient three-dimensional matrix $\widetilde{W_{sft}}$ may correspond to spatial domain vector $l$ in a second polarization direction of the 2L spatial domain vectors. Second dimension $m$ ($0 \leq m \leq M^i-1$, and $m$ is an integer) in the combination coefficient three-dimensional matrix $\widetilde{W_{sft}}$ may correspond to frequency domain vector $m$ in $M^i$ frequency domain vectors. Third dimension s ($0 \leq s \leq S-1$, and s is an integer) in the combination coefficient three-dimensional matrix $\widetilde{W_{sft}}$ may correspond to time domain vector s in S time domain vectors.

A position of a spatial-frequency-time vector group for constructing a spatial-frequency-time three-dimensional matrix is specifically a position of a spatial domain vector for constructing the spatial-frequency-time three-dimensional matrix in spatial domain vectors reported by the terminal device, a position of a frequency domain vector for constructing the spatial-frequency-time three-dimensional matrix in frequency domain vectors reported by the terminal device, and a position of a time domain vector for constructing the spatial-frequency-time three-dimensional matrix in frequency domain vectors reported by the terminal device. Because each spatial-frequency-time vector group corresponds to one non-zero combination coefficient (referred to as a non-zero spatial-frequency-time coefficient for short), the position of the spatial-frequency-time vector group for constructing the spatial-frequency-time three-dimensional matrix is also a position of the non-zero spatial-frequency-time coefficient.

9. Spatial-frequency combination coefficient

The spatial-frequency combination coefficient may also be referred to as a combination coefficient, a weighting coefficient, or the like. Each combination coefficient may correspond to one spatial domain vector and one frequency domain vector, or each combination coefficient may correspond to one spatial-frequency vector pair. Each combination coefficient is a weighting coefficient of a spatial-frequency component matrix constructed by using a spatial-frequency vector pair corresponding to the combination coefficient. One combination coefficient corresponds to one spatial domain vector and one frequency domain vector. Specifically, an element in row $i$ and column $j$ in a combination coefficient matrix $\tilde{\mathbf{W}}$ is a combination coefficient corresponding to a spatial-frequency vector pair formed by spatial domain vector $i$ and frequency domain vector $j$. For a dual-polarized directional antenna, $i \in \{1,2,\cdots,2L\}$, and a length of each spatial domain vector is $2N_s$.

Each combination coefficient includes an amplitude and a phase. For example, the combination coefficient may be represented as $ae^{j\theta}$, where $a$ is the amplitude of the combination coefficient, and $\theta$ is the phase of the combination coefficient.

Amplitude values of a part of combination coefficients may be zero or close to zero, and quantized values corresponding to the combination coefficients may be zero. A combination coefficient whose amplitude is quantized by using a quantized value zero may be referred to as a combination coefficient whose amplitude is zero. Correspondingly, amplitude values of a part of combination coefficients are large, and quantized values corresponding to the combination coefficients are not zero. A combination coefficient whose amplitude is quantized by using a non-zero quantized value may be referred to as a combination coefficient whose amplitude is greater than zero.

10. Spatial-frequency-time combination coefficient

The spatial-frequency-time combination coefficient may also be referred to as a combination coefficient, a spatial-frequency-time weighting coefficient, or the like. Each spatial-frequency-time combination coefficient may correspond to one spatial domain vector, one frequency domain vector, and one time domain vector. Each spatial-frequency-time combination coefficient is a weighting coefficient of a spatial-frequency-time component three-dimensional matrix constructed by using a spatial-frequency-time vector group corresponding to the spatial-frequency-time combination coefficient, and one spatial-frequency-time combination coefficient corresponds to one spatial domain vector, one frequency domain vector, and one time domain vector. Specifically, an element (i, j, k) in a spatial-frequency-time combination coefficient three-dimensional matrix $\widetilde{W_{sft}}$ is a spatial-frequency-time combination coefficient corresponding to a spatial-frequency-time vector group of spatial domain vector $i$, frequency domain vector $j$, and time domain vector $k$.

Each spatial-frequency-time combination coefficient includes an amplitude and a phase. For example, the spatial-frequency-time combination coefficient may be represented as $ae^{j\theta}$, where $a$ is the amplitude of the spatial-frequency-time combination coefficient, and $\theta$ is the phase of the spatial-frequency-time combination coefficient.

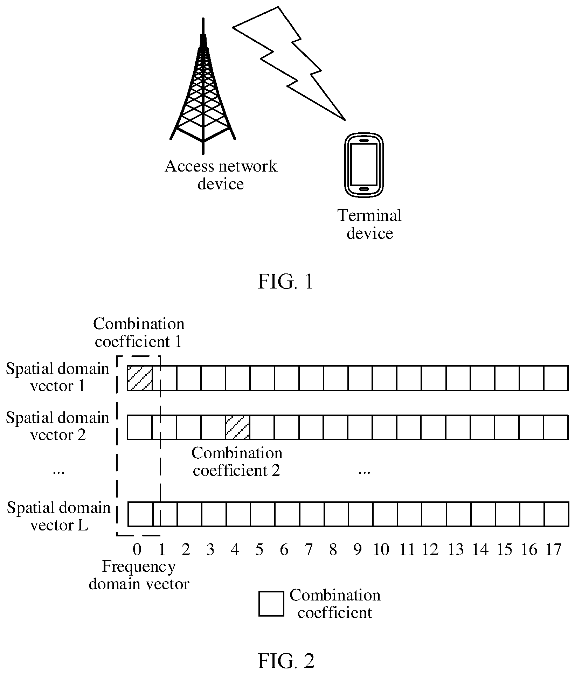

Amplitude values of a part of spatial-frequency-time combination coefficients may be zero or close to zero, and quantized values corresponding to the spatial-frequency-time combination coefficients may be zero. A spatial-frequency-time combination coefficient whose amplitude is quantized by using a quantized value zero may be referred to as a spatial-frequency-time combination coefficient whose amplitude is zero. Correspondingly, amplitude values of a part of spatial-frequency-time combination coefficients are large, and quantized values corresponding to the spatial-frequency-time combination coefficients are not zero. A spatial-frequency-time combination coefficient whose amplitude is quantized by using a non-zero quantized value may be referred to as a spatial-frequency-time combination coefficient whose amplitude is greater than zero. For ease of understanding of embodiments of this application, a communication system applicable to embodiments of this application is first described in detail with reference to FIG. 1. As shown in FIG. 1, the communication system may include at least one access network device, for example, an access network device shown in FIG. 1. The communication system may further include at least one terminal device, for example, a terminal device shown in FIG. 1. The communication system may further include other network entities such as a network controller and a mobility management entity. This is not limited in embodiments of this application.

It should be understood that FIG. 1 shows an example of one access network device and one terminal device. The communication system may include a plurality of access network devices, and a signal coverage area of each access network device may include another quantity of terminal devices. This is not limited in this application.

In a TDD system, before transmitting data to a terminal device, an access network device may estimate an uplink channel based on a received uplink reference signal, and obtain a downlink channel based on reciprocity between uplink and downlink channels, to improve downlink signal transmission quality or a downlink signal transmission rate. However, quality of the uplink reference signal received by the access network device is limited by a transmit power of the terminal device and interference from another uplink signal. Consequently, an error exists in the downlink channel obtained by the access network device, and transmission of a downlink signal is affected. In this application, the uplink reference signal includes but is not limited to an SRS, and a downlink reference signal includes but is not limited to a channel state information reference signal (channel state information reference signal, CSI-RS).

In a frequency division multiplexing (frequency division duplexing, FDD) system, to improve accuracy of obtaining a downlink channel by an access network device, a terminal device may estimate a downlink channel based on a received downlink reference signal, and feed back downlink channel information to the access network device. Because the downlink channel information fed back by the terminal device is used to assist a base station in performing channel estimation based on an uplink reference signal, the downlink channel information fed back by the terminal device may be some information of the downlink channel, to reduce feedback overheads. For example, the access network device sends a downlink reference signal to the terminal device. The terminal device may determine, based on the downlink reference signal, a spatial-frequency matrix, at least one spatial domain vector, and a plurality of frequency domain vectors that correspond to each receive antenna port. For example, as shown in FIG. 2, the terminal device may determine, based on the downlink reference signal, a channel matrix corresponding to each receive antenna port of the terminal device, so that a corresponding spatial-frequency matrix may be determined based on the channel matrix. The following uses a spatial-frequency matrix corresponding to one receive antenna port as an example for description. The terminal device performs channel estimation based on a downlink reference signal received through the receive antenna port, to determine a corresponding spatial-frequency matrix. The spatial-frequency matrix **H** may be represented as:

$$\mathbf{H} = \mathbf{W}_1 \tilde{\mathbf{W}} \mathbf{W}_3^{\mathrm{H}}.$$

Each column vector in $\mathbf{W}_1$ corresponds to one spatial domain vector, and each column vector in $\mathbf{W}_3$ corresponds to one frequency domain vector. $\tilde{\mathbf{W}}$ is a combination coefficient matrix, and a combination coefficient in row i and column j in the combination coefficient matrix $\tilde{\mathbf{W}}$ corresponds to spatial domain vector i in $\mathbf{W}_1$ and corresponds to frequency domain vector j in $\mathbf{W}_3$.

Each grid in FIG. 2 represents one combination coefficient, and each grid herein represents only a position of one combination coefficient. In a horizontal axis direction, combination coefficients located on a same horizontal axis correspond to a same spatial domain vector. In a vertical axis direction, combination coefficients located on a same vertical axis correspond to a same frequency domain vector. A dashed-line box in the figure shows that combination coefficients located on a same vertical axis correspond to a same frequency domain vector. For example, in the figure, a combination coefficient 1 corresponds to a spatial domain vector 1 and a frequency domain vector 0, and a combination coefficient 2 corresponds to a spatial domain vector 2 and a frequency domain vector 4. Indexes of a spatial domain vector and a frequency domain vector may indicate a position of a combination coefficient. For example, the combination coefficient 1 may be identified as (1, 0), where 1 indicates an index of a spatial domain vector corresponding to the combination coefficient 1, and 0 indicates an index of a frequency domain vector corresponding to the combination coefficient 1.

With reference to the foregoing descriptions, in a current FDD system, for each receive antenna port, a terminal device feeds back, to an access network device, a position of a combination coefficient whose amplitude quantized value is greater than 0 in all combination coefficients corresponding to the receive antenna port. However, for the FDD system, a quantity of spatial domain vectors and a quantity of frequency domain vectors are small. Therefore, a quantity of non-zero combination coefficients in a spatial-frequency matrix is small, and feedback overheads of the terminal device are low.

In the TDD system, the access network device has a large quantity of antennas, so that a quantity of spatial domain vectors increases. In the TDD system, delay domain precision of channel estimation performed based on an uplink reference signal is improved, so that a quantity of frequency domain vectors increases. Further, a quantity of combination coefficients that need to be fed back by the terminal device also increases. As a result, feedback overheads are high.

This application provides a method, to reduce the feedback overheads of the terminal device and improve resource utilization.

In addition, because there is a delay between a moment at which the access network device obtains a channel and a moment at which the terminal device is actually served by downlink precoding, in a scenario in which the terminal device moves, a channel of the terminal device may have changed dramatically within this time period. Consequently, the precoding does not match the channel of the terminal device at the corresponding moment. As a result, performance deteriorates, in other words, the channel is aged. In one or another method provided in this application, the terminal device feeds back Doppler-related information of the terminal device to the access network device based on downlink channel (CSI-RS, TRS, and the like) measurement information at a plurality of moments, to enable the access network device to perform channel prediction, so as to overcome a performance deterioration problem caused by channel aging. Details are described below.

It should be further understood that the method provided in embodiments of this application is not limited to communication between an access network device and a terminal device, may be further applied to communication between terminal devices, and the like. A scenario to which the method is applied is not limited in this application. In an embodiment shown below, for ease of understanding and description, interaction between an access network device and a terminal device is used as an example to describe in detail the method provided in embodiments of this application.

It should be further understood that, a specific structure of an execution body of the method provided in embodiments of this application is not specifically limited in embodiments shown below, provided that a program that records code of the method provided in embodiments of this application can be run to perform communication according to the method provided in embodiments of this application. For example, the execution body of the method provided in embodiments of this application may be a terminal device or an access network device, or a functional module that is in the terminal device or the access network device and that can invoke and execute the program.

A network architecture and a service scenario that are described in embodiments of this application are intended to describe the technical solutions in embodiments of this application more clearly, and do not constitute any limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

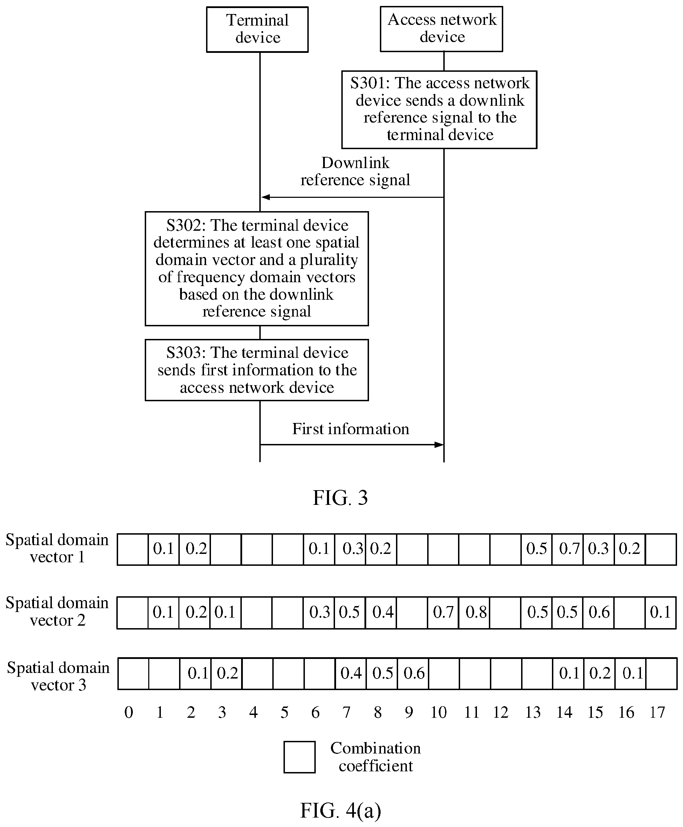

FIG. 3 is a schematic flowchart of a communication method according to an embodiment of this application. The method may be applied to a TDD system, or may be applied to an FDD system. The method includes the following steps.

S301: An access network device sends a downlink reference signal to a terminal device, and correspondingly, the terminal device receives the downlink reference signal from the access network device.

The downlink reference signal is a channel state information reference signal (channel state information reference signal, CSI-RS), or may be a signal of another type. This is not limited in this application.

In an implementation, the access network device may send the downlink reference signal through one or more transmit antenna ports, and the terminal device may receive the downlink reference signal through one or more receive antenna ports.

S302: The terminal device determines at least one spatial domain vector and a plurality of frequency domain vectors based on the downlink reference signal.

For each receive antenna port of the terminal device, the terminal device performs channel estimation based on the downlink reference signal received through the receive antenna port, to determine a spatial-frequency matrix corresponding to the receive antenna port. A detailed process of determining the spatial-frequency matrix is not limited in this application. Details are not described herein again.

The spatial-frequency matrix corresponding to each receive antenna port may be represented by using a matrix $\mathbf{W}_1$ formed by one or more spatial domain vectors, a matrix $\mathbf{W}_3$ formed by a plurality of frequency domain vectors, and a combination coefficient matrix $\tilde{\mathbf{W}}$ including a plurality of combination coefficients. In other words, a spatial-frequency matrix $\mathbf{H}$ may be represented as:

$$\mathbf{H} = \mathbf{W}_1 \tilde{\mathbf{W}} \mathbf{W}_3^{\mathrm{H}}.$$

In the procedure shown in FIG. 3, the combination coefficient is a spatial-frequency combination coefficient. For a specific meaning of the spatial-frequency combination coefficient, refer to the foregoing descriptions. Details are not described herein again.

Each column vector in $\mathbf{W}_1$ corresponds to one spatial domain vector, and each column vector in $\mathbf{W}_3$ corresponds to one frequency domain vector. $\tilde{\mathbf{W}}$ is the combination coefficient matrix. Assuming that $\mathbf{W}_1$ includes L spatial domain vectors and $\mathbf{W}_3$ includes T frequency domain vectors, dimensions of $\tilde{\mathbf{W}}$ are L×T. Row i in the combination coefficient matrix $\tilde{\mathbf{W}}$ corresponds to spatial domain vector i in the L spatial domain vectors, and column j in the combination coefficient matrix $\tilde{\mathbf{W}}$ corresponds to frequency domain vector j in the T frequency domain vectors, in other words, a combination coefficient in row i and column j in the combination coefficient matrix $\tilde{\mathbf{W}}$ corresponds to spatial domain vector i in $\mathbf{W}_1$, and corresponds to frequency domain vector j in $\mathbf{W}_3$. L may be determined based on a quantity of transmit antenna ports of the access network device, and T may be determined based on a quantity of to-be-reported frequency domain units that is pre-configured in a reporting bandwidth, or may be determined based on a length of the reporting bandwidth, or may be a value pre-defined in a protocol. The reporting bandwidth may be configured by the access network device by using higher layer signaling (for example, an RRC message).

One combination coefficient may be information about one delay path coefficient corresponding to one beam, and the information about the delay path coefficient may be an amplitude and a phase of the delay path coefficient. A position of one combination coefficient in the combination coefficient matrix may be a position of one delay path corresponding to one beam. The position of the delay path may be a relative position of the time domain path in a delay domain range, the delay domain range may be determined based on a frequency domain interval between two frequency domain units in the plurality of frequency domain units corresponding to the reporting bandwidth, and the position of the delay path may alternatively be an absolute delay (for example, 300 ns).

In an implementation, in this application, for each receive antenna port, a part of spatial domain vectors may be extracted from the L spatial domain vectors, one or more rows of combination coefficients corresponding to the extracted part of spatial domain vectors in a combination coefficient matrix (the combination coefficient matrix is referred to as a first matrix for short in the following descriptions) are used as one matrix, and the matrix is referred to as a second matrix for short in the following descriptions. For example, the access network device or the terminal device may select X spatial domain vectors from one or more spatial domain vectors corresponding to one receive antenna port, where the X spatial domain vectors are a part or all of the at least one spatial domain vector, and X is an integer greater than 0. Values of X corresponding to different receive antenna ports may be different. For any receive antenna port of the terminal device, a matrix formed by X rows of combination coefficients corresponding to the X spatial domain vectors in the first matrix corresponding to the receive antenna port may be considered as the second matrix. In other words, the X spatial domain vectors and a plurality of frequency domain vectors that correspond to the receive antenna port may correspond to the second matrix.

It can be learned from the foregoing descriptions that, for each receive antenna port of the terminal device, the terminal device may determine, based on the downlink reference signal received through each receive antenna port, at least one spatial domain vector, a plurality of frequency domain vectors, and a first matrix that correspond to each receive antenna port. The at least one spatial domain vector and the plurality of frequency domain vectors correspond to the first matrix. The first matrix includes a plurality of combination coefficients, each combination coefficient included in the first matrix is a combination coefficient of one spatial domain vector and one frequency domain vector, and each combination coefficient included in the first matrix corresponds to one spatial domain vector and one frequency domain vector. Herein, that the at least one spatial domain vector and the plurality of frequency domain vectors correspond to the first matrix indicates that the spatial-frequency matrix corresponding to the receive antenna port may be determined based on the at least one spatial domain vector, the plurality of frequency domain vectors, and the first matrix.

In this application, a position of each combination coefficient included in the first matrix is represented by using one spatial domain vector and one frequency domain vector. For example, for one combination coefficient, a position of the combination coefficient may be indicated by using an index of a spatial domain vector corresponding to the combination coefficient and an index of a frequency domain vector corresponding to the combination coefficient.

S303: The terminal device sends first information to the access network device, and correspondingly, the access network device receives the first information from the terminal device.

In this application, the first information indicates a position of at least one of the plurality of combination coefficients, and the at least one combination coefficient satisfies any one of the following conditions:

Condition 1: The at least one combination coefficient is a combination coefficient whose energy is greater than or equal to first energy and less than or equal to second energy in the plurality of combination coefficients, and the second energy is less than or equal to energy of a combination coefficient with largest energy in the plurality of combination coefficients.

For example, as shown in FIG. 4(a), it is assumed that energy of each of the plurality of combination coefficients may be shown in the figure, and energy of an unmarked combination coefficient is 0. For example, in the figure, energy of a combination coefficient (1, 0) is 0, and energy of a combination coefficient (1, 1) is 0.1. In a combination coefficient (x, y), x represents an index of a spatial domain vector corresponding to the combination coefficient, and y represents an index of a frequency domain vector corresponding to the combination coefficient.

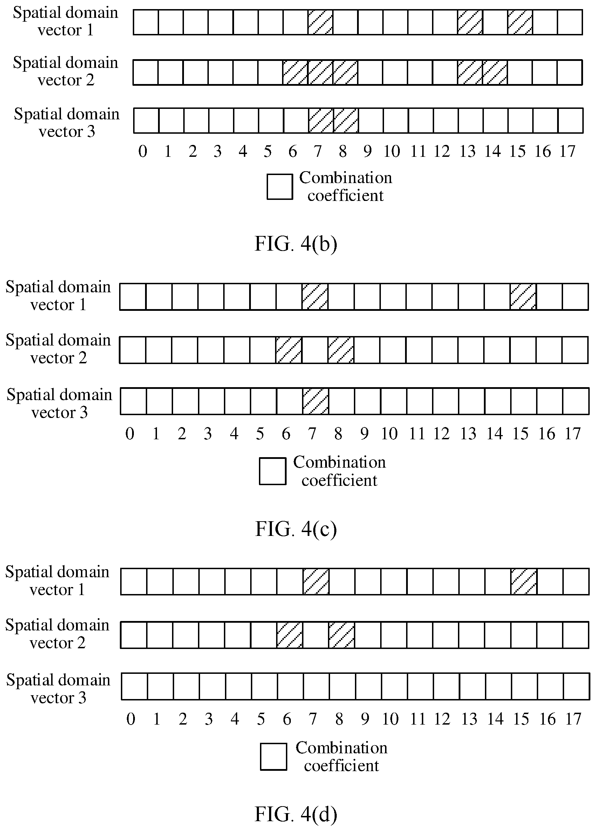

With reference to FIG. 4(a), assuming that the first energy is 0.3 and the second energy is 0.5, as shown in FIG. 4(b), combination coefficients that satisfy the condition 1 are a combination coefficient (1, 7), a combination coefficient (1, 13), a combination coefficient (1, 15), a combination coefficient (2, 6), a combination coefficient (2, 7), a combination coefficient (2, 8), a combination coefficient (2, 13), a combination coefficient (2, 14), a combination coefficient (3, 7), and a combination coefficient (3, 8). A filled grid in the figure represents the combination coefficient that satisfies the condition 1.

Condition 2: The at least one combination coefficient is Y2 combination coefficients with smallest energy in Y1 combination coefficients whose energy is greater than or equal to first energy in the plurality of combination coefficients, where Y2 is an integer less than Y1 and greater than 0.

With reference to FIG. 4(a), the first energy is 0.3, a value of Y1 is 10, and a value of Y2 is 5. In this case, as shown in FIG. 4(c), combination coefficients that satisfy the condition 2 are a combination coefficient (1, 7), a combination coefficient (1, 15), a combination coefficient (2, 6), a combination coefficient (2, 8), and a combination coefficient (3, 7). A filled grid in the figure represents the combination coefficient that satisfies the condition 2.

In an implementation, when the Y2 combination coefficients with the smallest energy are selected from the Y1 combination coefficients, the Y2 combination coefficients may be sequentially selected from the Y1 combination coefficients in ascending order of energy of the Y1 combination coefficients. If there are a plurality of combination coefficients with equal energy in a selection process, when the plurality of combination coefficients with the equal energy are all used as a part of the Y2 combination coefficients, a quantity of selected combination coefficients is greater than Y2. In this case, only a part of the plurality of combination coefficients with the equal energy may be selected (for example, a part of the plurality of combination coefficients with the equal energy may be randomly selected, or selection may be performed in another manner), to make a quantity of finally selected combination coefficients be equal to Y2. Certainly, the plurality of combination coefficients with the equal energy may alternatively be used as a part of the Y2 combination coefficients. This is not limited in this application.

For example, with reference to FIG. 4(a), the first energy is 0.3 and the value of Y1 is 10; and if the value of Y2 is 4, the combination coefficient (1, 7), the combination coefficient (1, 15), and the combination coefficient (2, 6) are sequentially selected. Because energy of the combination coefficient (2, 8) is equal to energy of the combination coefficient (3, 7), if both the two combination coefficients are selected, a quantity of final combination coefficients is greater than Y2. In this case, one of the combination coefficients may be randomly selected, and an example in which the combination coefficient (2, 8) is selected is used herein. In this way, combination coefficients that satisfy the condition 2 in FIG. 4(d) may be the combination coefficient (1, 7), the combination coefficient (1, 15), the combination coefficient (2, 6), and the combination coefficient (2, 8). A filled grid in the figure represents the combination coefficient that satisfies the condition 2.

Condition 3: The at least one combination coefficient is Y4 combination coefficients with smallest energy in Y3 combination coefficients with largest energy in the plurality of combination coefficients, where Y4 is an integer less than Y3 and greater than 0.

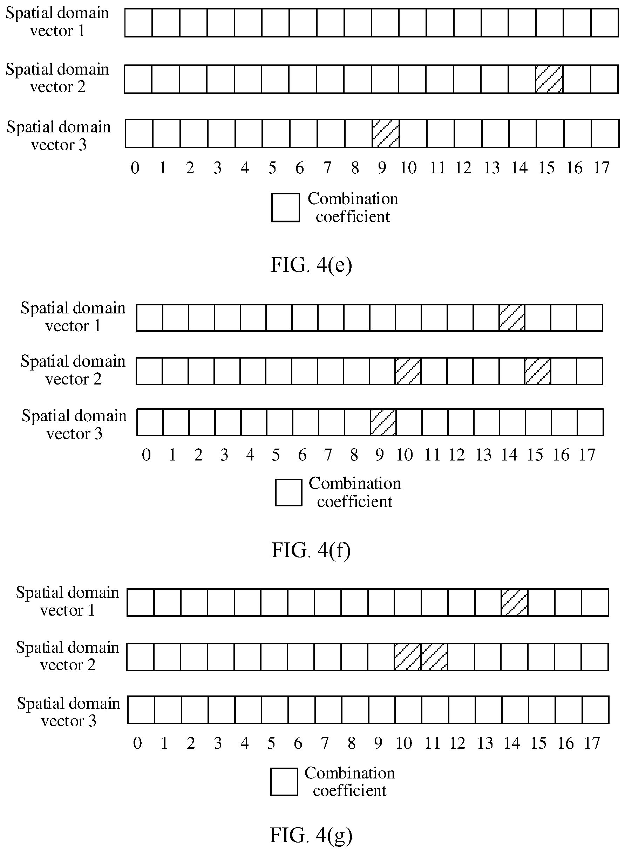

With reference to FIG. 4(a), if a value of Y3 is 5 and a value of Y4 is 2, two combination coefficients with smallest energy are selected from five combination coefficients with largest energy. In this case, as shown in FIG. 4(e), combination coefficients that satisfy the condition 3 are a combination coefficient (2, 15) and a combination coefficient (3, 9). A filled grid in the figure represents the combination coefficient that satisfies the condition 3.

Similarly, in an implementation, when the Y4 combination coefficients with the smallest energy are selected from the Y3 combination coefficients, the Y4 combination coefficients may be sequentially selected from the Y3 combination coefficients in ascending order of energy of the Y3 combination coefficients. If there are a plurality of combination coefficients with equal energy in a selection process, when the plurality of combination coefficients with the equal energy are all used as a part of the Y4 combination coefficients, a quantity of selected combination coefficients is greater than Y4. In this case, only a part of the plurality of combination coefficients with the equal energy may be selected (for example, a part of the plurality of combination coefficients with the equal energy may be randomly selected, or selection may be performed in another manner), to make a quantity of finally selected combination coefficients be equal to Y4. Certainly, the plurality of combination coefficients with the equal energy may alternatively be used as a part of the Y4 combination coefficients. This is not limited in this application.

Condition 4: The at least one combination coefficient is a combination coefficient whose energy is less than or equal to second energy in Y3 combination coefficients with largest energy in the plurality of combination coefficients, and the second energy is less than the energy of the combination coefficient with the largest energy in the plurality of combination coefficients.

With reference to FIG. 4(a), if a value of Y3 is 5 and the second energy is 0.7, as shown in FIG. 4(f), combination coefficients that satisfy the condition 4 is a combination coefficient (1, 14), a combination coefficient (2, 10), a combination coefficient (2, 15), and a combination coefficient (3, 9). A filled grid in the figure represents the combination coefficient that satisfies the condition 4.

Condition 5: The at least one combination coefficient is a combination coefficient whose energy is greater than or equal to first energy in the plurality of combination coefficients.

With reference to FIG. 4(a), if the first energy is 0.7, as shown in FIG. 4(g), combination coefficients that satisfy the condition 5 are a combination coefficient (1, 14), a combination coefficient (2, 10), and a combination coefficient (2, 11). A filled grid in the figure represents the combination coefficient that satisfies the condition 5.

In the condition 1 to the condition 5, values of Y1, Y2, Y3, and Y4 may be configured by the access network device, may be determined by the terminal device, or may be pre-agreed values. This is not limited in this application.

In this application, energy of each combination coefficient may be a modulo or a modular square of an amplitude of the combination coefficient.

In this application, after obtaining the first information, the access network device may improve accuracy of channel estimation based on the first information. For example, the access network device may perform channel estimation based on an uplink reference signal from the terminal device, to obtain a spatial-frequency matrix with noise/interference, which is referred to as a third matrix below. The access network device may calculate energy distribution of each row of combination coefficients in the third matrix, and obtain an estimated non-zero combination coefficient based on the energy distribution. Due to existence of the noise/interference, energy of a part of combination coefficients in the third matrix changes. For example, when there is no noise/interference, energy of a combination coefficient is equal to 0. However, due to the noise/interference, energy of the combination coefficient may be greater than 0. In this case, combination coefficients whose energy is determined based on the noise/interference cannot be distinguished. To eliminate the noise/interference, an energy threshold may be set, a combination coefficient whose energy is greater than or equal to the energy threshold is used as a non-zero combination coefficient, and a combination coefficient whose energy is less than the energy threshold is used as noise/interference, in other words, the energy of the combination coefficient whose energy is less than the energy threshold is set to zero, to reduce the noise/interference.

However, when there is no noise/interference, energy of a part of combination coefficients is small. When noise/interference exists, energy of these combination coefficients may be equivalent to energy of combination coefficients corresponding to the noise/interference. If an energy threshold is set, these combination coefficients with small energy are directly zeroed by the access network device as noise/interference. Consequently, accuracy of spatial-frequency channel estimation is reduced. In this application, after obtaining the first information, the access network device may determine the position that is of the at least one combination coefficient and that is indicated by using the first information. Therefore, even if energy of a combination coefficient that is in the third matrix and that corresponds to the position indicated by using the first information is less than the energy threshold, the access network device does not set the energy of the combination coefficients to 0, but reserves the energy of the combination coefficients, so that a corresponding spatial-frequency vector pair is reserved while the noise/interference is reduced, to improve the accuracy of the channel estimation.

In this application, the first energy may be implemented in a plurality of manners. In an implementation, the first energy is a product of a first coefficient and the energy of the combination coefficient with the largest energy in the plurality of combination coefficients, where the first coefficient is greater than 0 and less than 1.

In another implementation, the first energy is energy of a first combination coefficient.

The first combination coefficient may satisfy any one of the following cases:

Case 1: A sum of energy of combination coefficients that are in the plurality of combination coefficients and whose energy is greater than or equal to the energy of the first combination coefficient is first total energy, a sum of energy of the plurality of combination coefficients is second total energy, and a ratio of the first total energy to the second total energy is equal to a first ratio.

Case 2: The plurality of combination coefficients include a first combination coefficient and a second combination coefficient, a sum of energy of combination coefficients that are in the plurality of combination coefficients and whose energy is greater than or equal to the energy of the first combination coefficient is first total energy, a sum of the energy of the plurality of combination coefficients is second total energy, and a sum of energy of combination coefficients that are in the plurality of combination coefficients and whose energy is greater than or equal to energy of the second combination coefficient is third total energy. When the energy of the first combination coefficient is greater than the energy of the second combination coefficient, and the plurality of combination coefficients are sorted in descending order of energy, the first combination coefficient and the second combination coefficient are sequentially adjacent; in other words, when the plurality of combination coefficients are sorted in descending order of energy, a combination coefficient whose energy is greater than or less than the energy of the second combination coefficient is not included between the first combination coefficient and the second combination coefficient.

In the case 2, a ratio of the first total energy to the second total energy is less than a first ratio, and a ratio of the third total energy to the second total energy is greater than the first ratio.

Case 3: The plurality of combination coefficients include a first combination coefficient and a third combination coefficient, a sum of energy of combination coefficients that are in the plurality of combination coefficients and whose energy is greater than or equal to the energy of the first combination coefficient is first total energy, a sum of energy of the plurality of combination coefficients is second total energy, and a sum of energy of combination coefficients that are in the plurality of combination coefficients and whose energy is greater than or equal to energy of the third combination coefficient is fourth total energy. When the energy of the third combination coefficient is greater than the energy of the first combination coefficient, and the plurality of combination coefficients are sorted in descending order of energy, the third combination coefficient and the first combination coefficient are sequentially adjacent; in other words, when the plurality of combination coefficients are sorted in descending order of energy, a combination coefficient whose energy is greater than or less than the energy of the first combination coefficient is not included between the third combination coefficient and the first combination coefficient.

In the case 3, a ratio of the first total energy to the second total energy is greater than a first ratio, and a ratio of the fourth total energy to the second total energy is less than the first ratio.

In this application, a value of the first ratio is not limited. For example, the first ratio is 95%. The first ratio may be configured by the access network device, may be determined by the terminal device, or may be a pre-agreed value. This is not limited in this application.

In this application, the second energy may be implemented in a plurality of manners. In an implementation, the second energy is a product of a second coefficient energy and the energy of the combination coefficient with the largest energy in the plurality of combination coefficients, where the second coefficient is greater than 0 and less than 1.

In another implementation, the second energy is energy of a fourth combination coefficient in a first set.

The first set includes all combination coefficients whose energy is greater than or equal to the first energy in the plurality of combination coefficients, or the first set includes the Y3 combination coefficients with the largest energy in the plurality of combination coefficients.

In this application, the fourth combination coefficient may satisfy any one of the following cases:

Case 4: A sum of energy of combination coefficients that are in the first set and whose energy is less than or equal to the energy of the fourth combination coefficient is fifth total energy, and a sum of energy of all the combination coefficients included in the first set is sixth total energy, where a ratio of the fifth total energy to the sixth total energy is equal to a second ratio.

Case 5: The first set includes the fourth combination coefficient and a fifth combination coefficient, a sum of energy of combination coefficients that are in the first set and whose energy is less than or equal to the energy of the fourth combination coefficient is fifth total energy, a sum of energy of all the combination coefficients included in the first set is sixth total energy, and a sum of energy of combination coefficients that are in the first set and whose energy is less than or equal to energy of the fifth combination coefficient is seventh total energy.

When the energy of the fourth combination coefficient is greater than the energy of the fifth combination coefficient, and all the combination coefficients included in the first set are sorted in descending order of energy, the fourth combination coefficient and the fifth combination coefficient are sequentially adjacent; in other words, when all the combination coefficients included in the first set are sorted in descending order of energy, a combination coefficient whose energy is greater than or less than the energy of the fifth combination coefficient is not included between the fourth combination coefficient and the fifth combination coefficient.

In the case 5, a ratio of the fifth total energy to the sixth total energy is greater than a second ratio, and a ratio of the seventh total energy to the sixth total energy is less than the second ratio.

Case 6: The first set includes the fourth combination coefficient and a sixth combination coefficient, a sum of energy of combination coefficients that are in the first set and whose energy is less than or equal to the energy of the fourth combination coefficient is fifth total energy, a sum of energy of all the combination coefficients included in the first set is sixth total energy, and a sum of energy of combination coefficients that are in the first set and whose energy is less than or equal to energy of the sixth combination coefficient is eighth total energy.

When the energy of the sixth combination coefficient is greater than the energy of the fourth combination coefficient, and all the combination coefficients included in the first set are sorted in descending order of energy, the sixth combination coefficient and the fourth combination coefficient are sequentially adjacent; in other words, when all the combination coefficients included in the first set are sorted in descending order of energy, a combination coefficient whose energy is greater than or less than the energy of the fourth combination coefficient is not included between the sixth combination coefficient and the fourth combination coefficient.

In the case 6, a ratio of the fifth total energy to the sixth total energy is less than a second ratio, and a ratio of the eighth total energy to the sixth total energy is greater than the second ratio.

In this application, a value of the second ratio is not limited. For example, the second ratio is 40%. The second ratio may be configured by the access network device, may be determined by the terminal device, or may be a pre-agreed value. This is not limited in this application.

According to the foregoing method, the terminal device only needs to feed back a position of a part of the plurality of combination coefficients, so that feedback overheads can be reduced, and feedback efficiency can be improved.

In this application, the at least one of the plurality of combination coefficients may be divided into K combination coefficient groups, where K is an integer greater than 0.

In an implementation, the second matrix corresponding to the X spatial domain vectors and the plurality of frequency domain vectors includes K submatrices, and each of the K submatrices corresponds to one or more of the X spatial domain vectors and one or more of the plurality of frequency domain vectors. In this application, a position range corresponding to each submatrix may also be referred to as a "small window".

The K combination coefficient groups correspond one-to-one to the K submatrices, and each of the K combination coefficient groups is located in one of the K submatrices, in other words, a combination coefficient included in one combination coefficient group is a part or all of combination coefficients included in a submatrix corresponding to the combination coefficient group. A ratio of a quantity of combination coefficients in a combination coefficient group to a quantity of combination coefficients in a submatrix corresponding to the combination coefficient group is greater than or equal to a preset value. The preset value may be pre-defined, or may be configured by the access network device. For example, one submatrix includes 10 combination coefficients, a combination coefficient group corresponding to the submatrix includes eight combination coefficients, and the eight combination coefficients are some of the 10 combination coefficients included in the submatrix.

In an implementation, when the preset value is 1, a quantity of combination coefficients included in one submatrix is the same as a quantity of combination coefficients included in a combination coefficient group included in the submatrix.

In a possible implementation, a start spatial domain vector corresponding to one submatrix may be a spatial domain vector with a smallest index in all spatial domain vectors corresponding to a combination coefficient group corresponding to the submatrix. An end spatial domain vector corresponding to one submatrix may be a spatial domain vector with a largest index in all spatial domain vectors corresponding to a combination coefficient group corresponding to the submatrix.

In a possible implementation, a start spatial domain vector corresponding to one submatrix may be a spatial domain vector with a largest index in all spatial domain vectors corresponding to a combination coefficient group corresponding to the submatrix. An end spatial domain vector corresponding to one submatrix may be a spatial domain vector with a smallest index in all spatial domain vectors corresponding to a combination coefficient group corresponding to the submatrix.

A start spatial domain vector corresponding to one submatrix may be a spatial domain vector corresponding to a combination coefficient in a first row in the submatrix. An end spatial domain vector corresponding to one submatrix may be a spatial domain vector corresponding to a combination coefficient in a last row in the submatrix.

In a possible implementation, a start frequency domain vector corresponding to one submatrix may be a frequency domain vector with a smallest index in all frequency domain vectors corresponding to a combination coefficient group corresponding to the submatrix. An end frequency domain vector corresponding to one submatrix may be a frequency domain vector with a largest index in all frequency domain vectors corresponding to a combination coefficient group corresponding to the submatrix.

In a possible implementation, a start frequency domain vector corresponding to one submatrix may be a frequency domain vector with a largest index in all frequency domain vectors corresponding to a combination coefficient group corresponding to the submatrix. An end frequency domain vector corresponding to one submatrix may be a frequency domain vector with a smallest index in all frequency domain vectors corresponding to a combination coefficient group corresponding to the submatrix.

A start frequency domain vector corresponding to one submatrix may be a frequency domain vector corresponding to a combination coefficient in a first column in the submatrix. An end frequency domain vector corresponding to one submatrix may be a frequency domain vector corresponding to a combination coefficient in a last column in the submatrix.

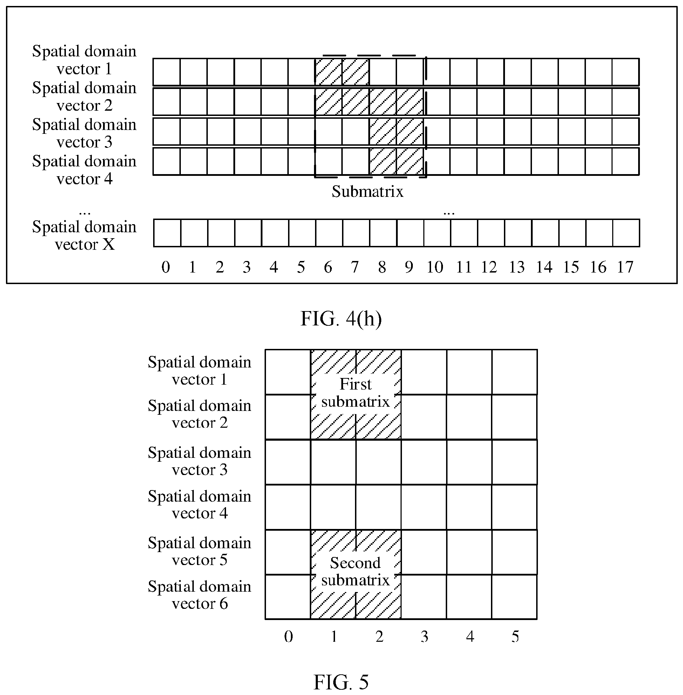

For example, as shown in FIG. 4(h), a submatrix corresponds to a spatial domain vector 1 to a spatial domain vector 4, and corresponds to a frequency domain vector 6 to a frequency domain vector 9. The submatrix includes 16 combination coefficients. In the submatrix, a filled grid represents a combination coefficient that belongs to a combination coefficient group corresponding to the submatrix, and a blank grid represents a combination coefficient that does not belong to the combination coefficient group corresponding to the submatrix.

Any two of the K submatrices, for example, a first submatrix and a second submatrix, may satisfy one or more of the following conditions:

First condition: A largest row coordinate corresponding to the first submatrix in the second matrix is less than a smallest row coordinate corresponding to the second submatrix in the second matrix, and a difference between the smallest row coordinate and the largest row coordinate is greater than or equal to a first threshold.

For example, as shown in FIG. 5, it is assumed that the first threshold is 2. In the figure, the largest row coordinate corresponding to the first submatrix in the second matrix is 1, and the smallest row coordinate corresponding to the second submatrix in the second matrix is 4.

Second condition: A largest column coordinate corresponding to the first submatrix in the second matrix is less than a smallest column coordinate corresponding to the second submatrix in the second matrix, and a difference between the smallest column coordinate and the largest column coordinate is greater than or equal to a second threshold.

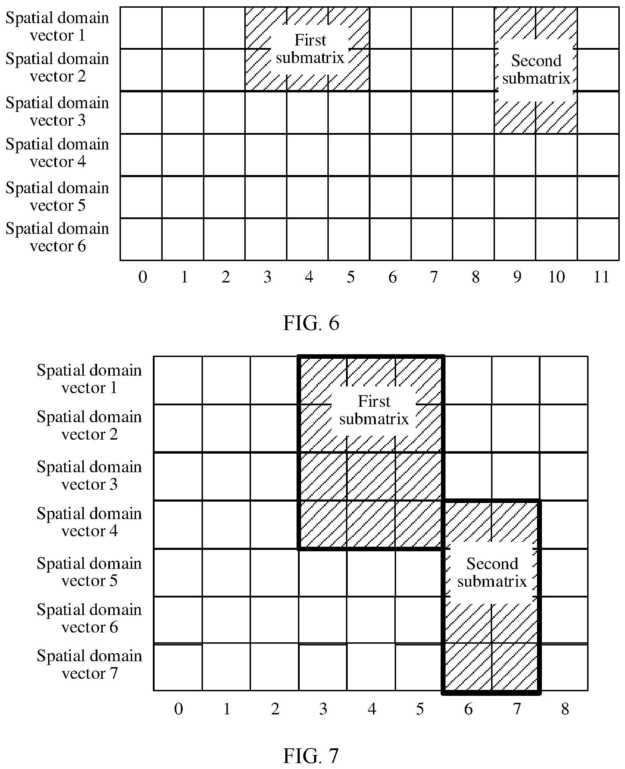

For example, as shown in FIG. 6, it is assumed that the second threshold is 2. In the figure, the largest column coordinate corresponding to the first submatrix in the second matrix is 5, and the smallest column coordinate corresponding to the second submatrix in the second matrix is 9.

Third condition: An absolute value of a difference between a largest row coordinate corresponding to the second submatrix in the second matrix and the largest row coordinate corresponding to the first submatrix in the second matrix is greater than or equal to a third threshold; and/or an absolute value of a difference between the smallest row coordinate corresponding to the second submatrix in the second matrix and a smallest row coordinate corresponding to the first submatrix in the second matrix is greater than or equal to the third threshold.

For example, as shown in FIG. 7, it is assumed that the third threshold is 2. In the figure, the smallest row coordinate corresponding to the first submatrix in the second matrix is 1, the largest row coordinate corresponding to the first submatrix in the second matrix is 4, the smallest row coordinate corresponding to the second submatrix in the second matrix is 4, and the largest row coordinate corresponding to the second submatrix in the second matrix is 7.

Fourth condition: An absolute value of a difference between a largest column coordinate corresponding to the second submatrix in the second matrix and the largest column coordinate corresponding to the first submatrix in the second matrix is greater than or equal to a fourth threshold; and/or an absolute value of a difference between the smallest column coordinate corresponding to the second submatrix in the second matrix and a smallest column coordinate corresponding to the first submatrix in the second matrix is greater than or equal to a fourth threshold.

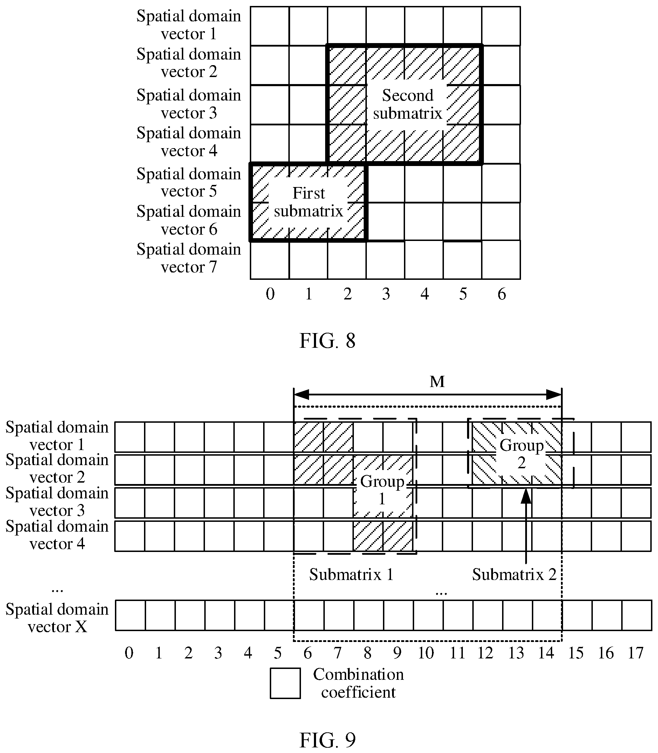

For example, as shown in FIG. 8, it is assumed that the fourth threshold is 2. In the figure, the smallest column coordinate corresponding to the first submatrix in the second matrix is 0, the largest column coordinate corresponding to the first submatrix in the second matrix is 3, the smallest column coordinate corresponding to the second submatrix in the second matrix is 3, and the largest column coordinate corresponding to the second submatrix in the second matrix is 6.

Examples are merely provided above. The first submatrix and the second submatrix may alternatively satisfy another condition. This is not limited in this application.

In this application, positions of the K combination coefficient groups in the second matrix may be indicated by using the first information, to reduce the feedback overheads. If the positions of the K combination coefficient groups are indicated by using the first information, to indicate the at least one combination coefficient, the first information may include at least one of the following:

a position of a start spatial domain vector corresponding to a submatrix corresponding to each of the K combination coefficient groups;
a position of an end spatial domain vector corresponding to the submatrix corresponding to each of the K combination coefficient groups;
a quantity of spatial domain vectors corresponding to the submatrix corresponding to each of the K combination coefficient groups;
a position of a start frequency domain vector corresponding to the submatrix corresponding to each of the K combination coefficient groups;
a position of an end frequency domain vector corresponding to the submatrix corresponding to each of the K combination coefficient groups; and
a quantity of frequency domain vectors corresponding to the submatrix corresponding to each of the K combination coefficient groups.

If one submatrix includes A1 rows of combination coefficients, the submatrix corresponds to A1 spatial domain vectors. If one submatrix includes A2 columns of combination coefficients, the submatrix corresponds to A2 frequency domain vectors. Both A1 and A2 are integers greater than 0. Values of A1 and A2 corresponding to different submatrices may be different.

If a quantity of rows of the second matrix is X, overheads indicating a position of a start spatial domain vector or an end spatial domain vector corresponding to each submatrix may be greater than or equal to $\lceil \log_2(X) \rceil$ bits, and overheads indicating a quantity of spatial domain vectors corresponding to each submatrix may be greater than or equal to $\lceil \log_2(X1) \rceil$ bits. In this application, $\lceil \ \rceil$ represents a ceiling operation. X1 is a quantity of row quantity candidates of the submatrix, and X1 is less than or equal to X.

If a quantity of columns of the second matrix is T, overheads indicating a position of a start frequency domain vector or an end frequency domain vector corresponding to each submatrix may be greater than or equal to $\lceil \log_2(T) \rceil$ bits, and overheads indicating a quantity of frequency domain vectors corresponding to each submatrix may be greater than or equal to $\lceil \log_2(T1) \rceil$ bits. T1 is a quantity of column quantity candidates of the submatrix, and T1 is less than or equal to T.

In this application, for a plurality of submatrices corresponding to one receive antenna port, a position of one submatrix (for example, the submatrix is the first submatrix) may be directly indicated by using the first information. For a position of another submatrix, for example, the second submatrix, information about a difference between the position of the second submatrix and the position of the first submatrix may be fed back, the difference information includes but is not limited to a difference between positions of start spatial domain vectors of the two submatrices, a difference between positions of end spatial domain vectors of the two submatrices, a difference between positions of start frequency domain vectors of the two submatrices, a difference between positions of end frequency domain vectors of the two submatrices, a difference between quantities of spatial domain vectors respectively corresponding to the two submatrices, and a difference between quantities of frequency domain vectors respectively corresponding to the two submatrices. For example, if the position of the start spatial domain vector corresponding to the first submatrix is the same as the position of the start spatial domain vector corresponding to the second submatrix, the first information may directly indicate the position of the start spatial domain vector corresponding to the first submatrix; and when the first information indicates the position of the start spatial domain vector corresponding to the second submatrix, an indicated value may be 0. For example, if the quantity of spatial domain vectors corresponding to the first submatrix is greater than the quantity of spatial domain vectors corresponding to the second submatrix by A3, the first information may directly indicate the quantity of spatial domain vectors corresponding to the first submatrix; and when the first information indicates the quantity of spatial domain vectors corresponding to the second submatrix, the indicated value may be A3. Other cases may be deduced by analogy, and details are not described herein again. In the foregoing descriptions, the submatrix may alternatively be replaced with a combination coefficient group.

In this application, for the plurality of receive antenna ports of the terminal device, the terminal device may directly feed back a position of at least one submatrix corresponding to one receive antenna port (for example, a first receive antenna port). For another antenna port, for example, a second receive antenna port, information about a difference between a position of at least one submatrix corresponding to the second receive antenna port and the position of the at least one submatrix corresponding to the first receive antenna port may be fed back. For example, if a position of a start spatial domain vector corresponding to a first submatrix corresponding to the first receive antenna port is the same as a position of a start spatial domain vector corresponding to a second submatrix corresponding to the second receive antenna port, the first information may directly indicate the position of the start spatial domain vector corresponding to the first submatrix corresponding to the first receive antenna port; and when the first information indicates the position of the start spatial domain vector corresponding to the second submatrix corresponding to the second receive antenna port, an indicated value may be 0. For example, if a quantity of frequency domain vectors corresponding to the first submatrix is less than a quantity of frequency domain vectors corresponding to the second submatrix by -A4, the first information may directly indicate the quantity of frequency domain vectors corresponding to the first submatrix; and when the first information indicates the quantity of frequency domain vectors corresponding to the second submatrix, the indicated value may be -A4. Other cases may be deduced by analogy, and details are not described herein again. In the foregoing descriptions, the submatrix may alternatively be replaced with a combination coefficient group.

In this application, for the plurality of receive antenna ports of the terminal device, for example, the first receive antenna port and the second receive antenna port, the first receive antenna port corresponds to K1 combination coefficient groups, the first receive antenna port corresponds to K2 combination coefficient groups, and each combination coefficient group corresponds to one submatrix. If there are submatrices at same positions in K1 submatrices and K2 submatrices, only one position may be fed back for the plurality of submatrices at the same positions. For example, if positions of K3 submatrices are the same, positions of the K1 submatrices may be fed back for the first receive antenna port. For the second receive antenna port, in the K2 submatrices, positions of K3 submatrices that are the same as those of the K1 submatrices are not fed back, and only a position of a remaining K2-K3 submatrix is fed back. In the foregoing descriptions, the submatrix may alternatively be replaced with a combination coefficient group.

In this application, one receive antenna port of the terminal device may receive different downlink reference signals at different moments. For each downlink reference signal, the terminal device may determine a plurality of combination coefficients corresponding to each receive antenna port, and the plurality of combination coefficients corresponding to each receive antenna port correspond to at least one submatrix. The terminal device may directly feed back a position of a submatrix that is obtained by receiving a first downlink reference signal through a receive antenna port (for example, the first receive antenna port). For a position of a submatrix that is obtained by receiving another downlink reference signal, for example, a second downlink reference signal, information about a difference between a position of at least one submatrix corresponding to the second downlink reference signal and a position of at least one submatrix corresponding to the first downlink reference signal may be fed back. For details, refer to the foregoing descriptions. Details are not described herein again. In the foregoing descriptions, the submatrix may alternatively be replaced with a combination coefficient group.

In this application, for submatrix m corresponding to receive antenna port r, a position of a start spatial domain vector corresponding to the submatrix may be represented as $K_{r,m}^{b}$, a quantity of spatial domain vectors corresponding to the submatrix may be represented as $M_{r,m}^{b}$, a position of a start frequency domain vector corresponding to the submatrix is represented as $K_{r,m}^{d}$, and a quantity of frequency domain vectors corresponding to the submatrix is represented as $M_{r,m}^{d}$, where b represents a beam domain or a spatial domain, and d represents a delay domain or a frequency domain. This is merely an example, and the foregoing parameters may alternatively be represented in another manner. For example, if there is only one receive antenna port, there may be no subscript r in $K_{r,m}^{b}, M_{r,m}^{b}, K_{r,m}^{d}$, and $M_{r,m}^{d}$. For another example, if receive antenna port r corresponds to only one submatrix, there may be no subscript m in $K_{r,m}^{b}, M_{r,m}^{b}, K_{r,m}^{d}$, and $M_{r,m}^{d}$. For example, if positions of start spatial domain vectors corresponding to all submatrices corresponding to receive antenna port r are the same, there may be no subscript m or the like in $K_{r,m}^{b}$. Other cases are not described again.

For the plurality of frequency domain vectors corresponding to each receive antenna port, it is possible that not each frequency domain vector corresponds to one combination coefficient in at least one combination coefficient group corresponding to the receive antenna port. Therefore, a frequency domain range in which M consecutive frequency domain vectors include at least one combination coefficient may be used as a first position range, in other words, the first position range is positions corresponding to the M consecutive frequency domain vectors in the plurality of frequency domain vectors, and a frequency domain vector corresponding to each of the at least one combination coefficient is one of the M consecutive frequency domain vectors; or frequency domain vectors corresponding to all of the at least one combination coefficient are one of the M consecutive frequency domain vectors after a same cyclic shift, where M is an integer greater than 0. The first position range may also be referred to as a "large window".

In an implementation, for each receive antenna port of the terminal device, a first position range may be determined based on at least one combination coefficient corresponding to each receive antenna port, in other words, one first position range corresponds to one receive antenna port.

In this implementation, the terminal device may further send second information to the access network device, where the second information indicates the first position range. Specifically, the second information may indicate the quantity M of frequency domain vectors corresponding to the first position range, and/or the second information may indicate an index of a first frequency domain vector or an index of a last frequency domain vector in the M frequency domain vectors in the first position range.

According to the method, in the K combination coefficient groups, a quantity of bits occupied by the position of the start frequency domain vector of the submatrix corresponding to each combination coefficient group is $\lceil \log_2(M) \rceil$. Because M is less than or equal to T, the feedback overheads of the terminal device can be further reduced.

In this implementation, for each receive antenna port of the terminal device, one piece of first information may be fed back according to the foregoing method, in other words, one piece of first information indicates a position of at least one combination coefficient corresponding to one receive antenna port.

For example, as shown in FIG. 9, it is assumed that K=2, to be specific, the receive antenna port corresponds to two combination coefficient groups. A combination coefficient group 1 (a group 1 in the figure) is located in a submatrix 1, and a combination coefficient group 2 (a group 2 in the figure) is located in a submatrix 2.

The submatrix 1 corresponds to a spatial domain vector 1 to a spatial domain vector 4, and corresponds to a frequency domain vector 6 to a frequency domain vector 9. The submatrix 2 corresponds to the spatial domain vector 1 and the spatial domain vector 2, and corresponds to a frequency domain vector 12 to a frequency domain vector 14.

In the submatrix 1, a filled grid represents a combination coefficient that belongs to the combination coefficient group 1, and a blank grid represents a combination coefficient that does not belong to the combination coefficient group 1. Similarly, in the submatrix 2, a filled grid represents a combination coefficient that belongs to the combination coefficient group 2, and all combination coefficients included in the submatrix 2 belong to the combination coefficient group 2.

It can be learned from the foregoing descriptions that, in all frequency domain vectors corresponding to the submatrix 1 and the submatrix 2, a frequency domain vector with a smallest index is a frequency domain vector 6, and a frequency domain vector with a largest index is a frequency domain vector 14. In this case, the first position range may be nine consecutive frequency domain vectors in total from the frequency domain vector 6 to the frequency domain vector 14.

In another implementation, the first position range may be determined by the terminal device based on frequency domain vectors respectively corresponding to at least one combination coefficient respectively corresponding to the plurality of receive antenna ports, in other words, one first position range corresponds to a plurality of receive antenna ports. For example, for a plurality of receive antenna ports, if a quantity of consecutive frequency domain vectors corresponding to at least one combination coefficient corresponding to one receive antenna port is largest, a frequency domain range of a plurality of consecutive frequency domain vectors corresponding to the at least one combination coefficient corresponding to the receive antenna port may be used as the first position range. For another receive antenna port, cyclic shifting may be performed on a second matrix corresponding to the receive antenna port, and a range of a frequency domain vector, obtained through the cyclic shifting, for at least one combination coefficient corresponding to the receive antenna port is in the first position range.

In this implementation, all the receive antenna ports of the terminal device correspond to one first position range, and the terminal device may further feed back a cyclic shift value corresponding to each receive antenna port. If a cyclic shift value for one receive antenna port is zero, the cyclic shift value for the receive antenna port may not be fed back.

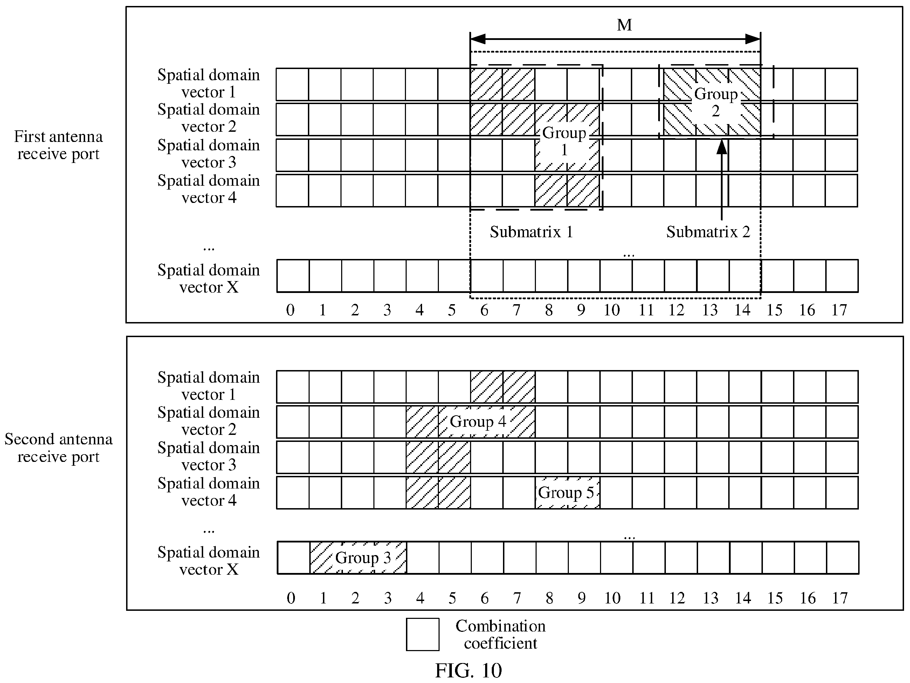

For example, with reference to FIG. 9, as shown in FIG. 10, the first receive antenna port corresponds to two combination coefficient groups. A combination coefficient group 1 (a group 1 in the figure) is located in a submatrix 1, and a combination coefficient group 2 (a group 2 in the figure) is located in a submatrix 2. For details about the submatrix 1 and the submatrix 2, refer to the descriptions in FIG. 9.

The second receive antenna port corresponds to three combination coefficient groups. A combination coefficient group 3 (a group 3 in the figure) is located in a submatrix 3, a combination coefficient group 4 (a group 4 in the figure) is located in a submatrix 4, and a combination coefficient group 5 (a group 5 in the figure) is located in a submatrix 5. In each submatrix, a filled grid represents a combination coefficient that belongs to a combination coefficient group corresponding to the submatrix, and a blank grid represents a combination coefficient that does not belong to the combination coefficient group corresponding to the submatrix.

The submatrix 3 corresponds to a spatial domain vector X, and corresponds to a frequency domain vector 1 to a frequency domain vector 3. The submatrix 4 corresponds to a spatial domain vector 1 to a spatial domain vector 4, and corresponds to a frequency domain vector 4 to a frequency domain vector 7. The submatrix 5 corresponds to the spatial domain vector 4, and corresponds to a frequency domain vector 8 and a frequency domain vector 9.

It can be learned from the foregoing descriptions that, in all the frequency domain vectors corresponding to the submatrix 3, the submatrix 4, and the submatrix 5, a frequency domain vector with a smallest index is the frequency domain vector 1, and a frequency domain vector with a largest index is the frequency domain vector 9. If the first receive antenna port and the second receive antenna port correspond to a same first position range, and the first position range includes the frequency domain vector 6 to a frequency domain vector 14, the two submatrices corresponding to the first receive antenna port may be shifted rightward by zero frequency domain vectors, and the three submatrices corresponding to the second receive antenna port may be shifted rightwards by five frequency domain vectors, in other words, a cyclic shift value corresponding to the first receive antenna port is 0, and a cyclic shift value corresponding to the second receive antenna port is 5.

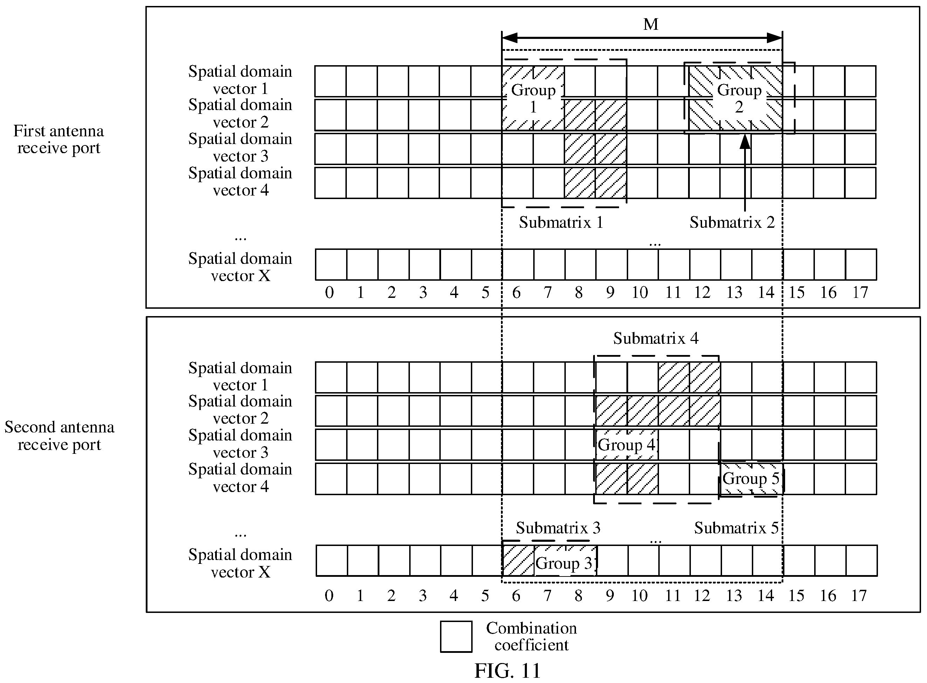

For example, as shown in FIG. 11, after the three submatrices corresponding to the second receive antenna port are shifted rightwards by five frequency domain vectors, a frequency domain vector with a smallest index in all the frequency domain vectors corresponding to the three submatrices corresponding to the second receive antenna port is the frequency domain vector 6, and a frequency domain vector with a largest index is the frequency domain vector 14. In this way, the first receive antenna port and the second receive antenna port correspond to a same first position range. In this case, the terminal device may feed back that the cyclic shift value corresponding to the second receive antenna port is 5.

In the figure, both the first receive antenna port and the second receive antenna port correspond to X spatial domain vectors. In an actual application, quantities of spatial domain vectors corresponding to the two receive antenna ports may alternatively be different.

In this application, the terminal device may further feed back a phase of each of the at least one combination coefficient to the access network device. In an implementation, the terminal device may send third information to the access network device, where the third information includes at least one of the following:

a phase of a combination coefficient at a center position of the submatrix corresponding to each of the K combination coefficient groups;

an angle gradient, in a matrix row direction, of the submatrix corresponding to each of the K combination coefficient groups; and

an angle gradient, in a matrix column direction, of the submatrix corresponding to each of the K combination coefficient groups.

A central position of submatrix m corresponding to receive antenna port r may satisfy the following forms:

$$Cen1 = K_{r,m}^d + \text{floor}\left(\frac{M_{r,m}^d}{2}\right);$$

and

$$Cen2 = K_{r,m}^b + floor\left(\frac{M_{r,m}^b}{2}\right).$$

Cen1 represents a specific position of a frequency domain vector at a center position of one submatrix, and Cen2 represents a specific position of a spatial domain vector at a center position of one submatrix. In this application, floor () represents a floor operation.

For submatrix m corresponding to receive antenna port r, an angle gradient, in a matrix row direction, of submatrix m may satisfy the following form:

$$d\theta_{r,m}^d = \frac{\theta_{r,m,end}^d - \theta_{r,m,start}^d}{M_{r,m}^d - 1}; \text{ or } d\theta_{r,m}^d = \frac{\theta_{r,m,start}^d - \theta_{r,m,end}^d}{M_{r,m}^d - 1}.$$

$\theta_{r,m,end}^d$ is a phase of a combination coefficient determined based on a spatial domain vector corresponding to the center position of the submatrix and an end frequency domain vector corresponding to the center position of the submatrix, and $\theta_{r,m,start}^d$ is a phase of a combination coefficient determined based on the spatial domain vector corresponding to the center position of the submatrix and a start frequency domain vector corresponding to the center position of the submatrix.

For submatrix m corresponding to receive antenna port r, an angle gradient, in a matrix column direction, of submatrix m may satisfy the following form:

$$d\theta^b_{r,m} = \frac{\theta^b_{r,m,end} - \theta^b_{r,m,start}}{M^b_{r,m} - 1}; \text{ or } d\theta^b_{r,m} = \frac{\theta^b_{r,m,start} - \theta^b_{r,m,end}}{M^b_{r,m} - 1}.$$

$\theta^b_{r,m,end}$ is a phase of a combination coefficient determined based on a frequency domain vector corresponding to the center position of the submatrix and an end spatial domain vector corresponding to the center position of the submatrix, and $\theta^b_{r,m,start}$ is a phase of a combination coefficient determined based on the frequency domain vector corresponding to the center position of the submatrix and a start spatial domain vector corresponding to the center position of the submatrix.

After obtaining the third information, the access network device may correct the phases of the combination coefficients. For example, if an originally estimated combination coefficient is $ke^{j\phi}$, and a phase that is of the combination coefficient and that is obtained by using the third information should be $\theta$, the combination coefficient is rotated, to be specific, the combination coefficient is multiplied by a coefficient $e^{j(\theta-\phi)}$, so that an actual combination coefficient is changed to $ke^{j\phi} * e^{j(\theta-\phi)} = ke^{j\theta}$. In this way, phase correction is completed, and the combination coefficient is more accurate.

In this application, for the K submatrices corresponding to the K combination coefficient groups, the terminal device may further calculate an autocorrelation matrix of each of the K submatrices, and the terminal device may feed back the autocorrelation matrix of each of the K submatrices to the access network device.

How to specifically calculate the autocorrelation matrix is not limited in this application. For example, each submatrix includes $M^d_{r,m} * M^b_{r,m}$ spatial-frequency combination coefficients. It is equivalent to that each submatrix includes a complex vector with a length of $N_{r,m} = M^d_{r,m} * M^b_{r,m}$. If S samples are spread into a vector or matrix $\mathbf{X}_{r,m}$ whose dimensions are $N_{r,m} * S$, an autocorrelation matrix of the submatrix may be represented as $\mathbf{R}_{r,m} = \mathbf{X}_{r,m}\mathbf{X}^H_{r,m}$. The S samples may be S measurement results that are obtained by the terminal device through a plurality of times of downlink reference signal measurement and that are of a combination coefficient corresponding to a current submatrix for a current receive antenna port.

In an implementation, the terminal device may send fourth information to the access network device, where the fourth information includes all coefficients of the autocorrelation matrix of each of the K submatrices, the fourth information includes first H1 eigenvalues of the autocorrelation matrix of each of the K submatrices and eigenvectors corresponding to the first H1 eigenvalues, or the fourth information includes first H2% eigenvalues of the autocorrelation matrix of each of the K submatrices and eigenvectors corresponding to the first H2% eigenvalues, where H1 and H2 are preset values.

The access network device may obtain the autocorrelation matrix of the combination coefficient of each submatrix by using the fourth information. The combination coefficient in each submatrix includes both a signal and noise. The signal conforms to a distribution characteristic of the autocorrelation matrix, but the noise does not conform to the distribution characteristic indicated by using the matrix. Therefore, the autocorrelation matrix may be used to perform noise reduction (for example, noise reduction through minimum mean square error estimation). In this way, the combination coefficient is more accurate.

In the foregoing procedure, an example in which the terminal device performs channel estimation based on one downlink reference signal is used for description. In this application, the terminal device may alternatively measure a plurality of downlink reference signals, and the terminal device can obtain a plurality of spatial-frequency matrices at different moments. The spatial-frequency matrices are combined and dimensions are extended to obtain a "spatial-frequency-time three-dimensional matrix", and a combination coefficient three-dimensional matrix can be obtained by using the spatial-frequency-time three-dimensional matrix. The terminal device may indicate a position of a combination coefficient in the combination coefficient three-dimensional matrix.

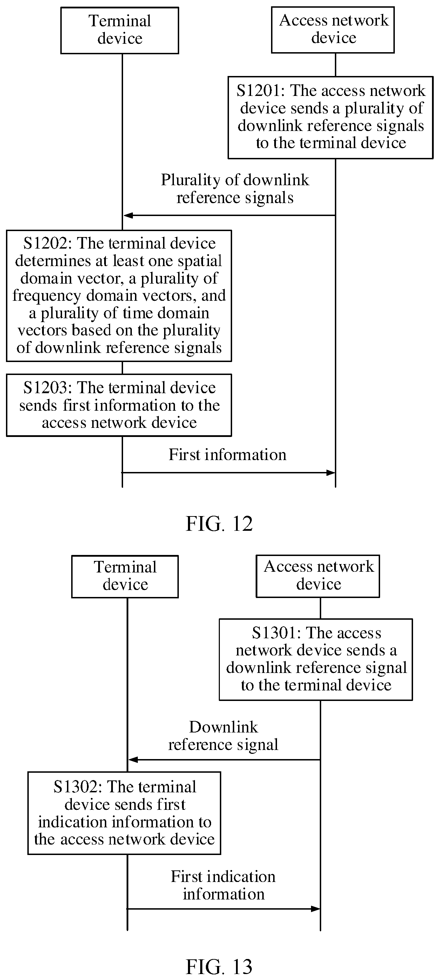

FIG. 12 is a schematic flowchart of a communication method according to an embodiment of this application. The method may be applied to a TDD system, or may be applied to an FDD system. The method includes the following steps.

S1201: An access network device sends a plurality of downlink reference signals to a terminal device, and correspondingly, the terminal device receives the plurality of downlink reference signals from the access network device.

S1202: The terminal device determines at least one spatial domain vector, a plurality of frequency domain vectors, and a plurality of time domain vectors based on the plurality of downlink reference signals.

For each receive antenna port of the terminal device, the terminal device performs channel estimation based on a plurality of downlink reference signals received through the receive antenna port, to determine a spatial-frequency-time three-dimensional matrix corresponding to the receive antenna port. A detailed process of determining the spatial-frequency-time three-dimensional matrix is not limited in this application. Details are not described herein again.

The spatial-frequency-time three-dimensional matrix corresponding to each receive antenna port may correspond to at least one spatial domain vector, a plurality of frequency domain vectors, a plurality of time domain vectors, and a combination coefficient three-dimensional matrix including a plurality of combination coefficients. The combination coefficient three-dimensional matrix is referred to as a first three-dimensional matrix below. The first three-dimensional matrix includes the plurality of combination coefficients, each combination coefficient is a combination coefficient of one spatial domain vector, one frequency domain vector, and one time domain vector, and a position of each combination coefficient may be represented by using one spatial domain vector, one frequency domain vector, and one time domain vector. In the procedure shown in FIG. 12, the combination coefficient is a spatial-frequency-time combination coefficient. For a specific meaning of the spatial-frequency-time combination coefficient, refer to the foregoing descriptions. Details are not described herein again.

Dimensions of the first three-dimensional matrix may be $L \times T \times Q$, where L may be determined based on a quantity of transmit antenna ports of the access network device; T may be determined based on a quantity of to-be-reported frequency domain units that is pre-configured in a reporting bandwidth, or may be determined based on a length of the reporting bandwidth, or may be a value pre-defined in a protocol; and Q is determined based on a quantity of downlink reference signals.

One combination coefficient may be information about one Doppler path coefficient corresponding to one delay path corresponding to one beam, and the information about the Doppler path coefficient may be an amplitude and a phase of the path coefficient. A position of one combination coefficient in the combination coefficient three-dimensional matrix may be one Doppler path position corresponding to one delay path corresponding to one beam, and the Doppler path position may be a relative position of a Doppler path in a Doppler range, the Doppler range may be determined based on a time interval between two of the plurality of downlink reference signals, and the Doppler path position may alternatively be an absolute Doppler shift (for example, 10 Hz).

In an implementation, for each receive antenna port, a part of spatial domain vectors may be extracted from L spatial domain vectors, and a part of time domain vectors may be extracted from Q time domain vectors, a combination coefficient that corresponds to the extracted part of spatial domain vectors, the plurality of frequency domain vectors, and the extracted part of time domain vectors and that is in the first three-dimensional matrix is used as a three-dimensional matrix. In the following descriptions, the three-dimensional matrix is referred to as a second three-dimensional matrix for short. For example, the access network device or the terminal device may select Z1 spatial domain vectors from at least one spatial domain vector corresponding to one receive antenna port, and select Z2 time domain vectors from a plurality of time domain vectors corresponding to the receive antenna port, where Z1 and Z2 are integers greater than 0. For any receive antenna port of the terminal device, a three-dimensional matrix formed by combination coefficients that corresponds to Z1 spatial domain vectors, a plurality of frequency domain vectors, and Z2 time domain vectors and that is in a first three-dimensional matrix corresponding to the receive antenna port may be considered as a second three-dimensional matrix. Values of Z1 and Z2 corresponding to different receive antenna ports may be different.

For ease of description, in this application, the second three-dimensional matrix may correspond to the Z1 spatial domain vectors, the plurality of frequency domain vectors, and the Z2 time domain vectors. The Z1 spatial domain vectors are a part or all of the at least one spatial domain vector, and the Z2 time domain vectors are a part or all of the plurality of time domain vectors, where Z1 and Z2 are integers greater than 0.

S1203: The terminal device sends first information to the access network device, and correspondingly, the access network device receives the first information from the terminal device.

The first information indicates a position of at least one of the plurality of combination coefficients. The at least one combination coefficient may satisfy any one of the condition 1 to the condition 5 in S303. Specific content is not described again.

Similar to S303, in this application, the at least one of the plurality of combination coefficients may be divided into K combination coefficient groups, where each of the at least one combination coefficient is a combination coefficient of one of the Z1 spatial domain vectors, one of the plurality of frequency domain vectors, and one of the Z2 time domain vectors.

The second three-dimensional matrix includes K three-dimensional submatrices, and K combination coefficient groups correspond one-to-one to the K three-dimensional submatrices. Each three-dimensional submatrix corresponds to at least one of the Z1 spatial domain vectors, at least one of the plurality of frequency domain vectors, and at least one of the Z2 time domain vectors. Different three-dimensional submatrices may correspond to different quantities of spatial domain vectors, different quantities of frequency domain vectors, and different quantities of time domain vectors.

Each of the K combination coefficient groups is located in one of the K three-dimensional submatrices, in other words, a combination coefficient included in one combination coefficient group is a part or all of combination coefficients included in a three-dimensional submatrix corresponding to the combination coefficient group. A ratio of a quantity of combination coefficients in a combination coefficient group to a quantity of combination coefficients in a three-dimensional submatrix corresponding to the combination coefficient group is greater than or equal to a preset value. The preset value may be pre-defined, or may be configured by the access network device. For example, one three-dimensional submatrix includes 10 combination coefficients, a combination coefficient group corresponding to the three-dimensional submatrix includes eight combination coefficients, and the eight combination coefficients are some of the 10 combination coefficients included in the three-dimensional submatrix.

In an implementation, when the preset value is 1, a quantity of combination coefficients included in one three-dimensional submatrix is the same as a quantity of combination coefficients included in a combination coefficient group included in the submatrix.

In a possible implementation, a start spatial domain vector corresponding to one three-dimensional submatrix may be a spatial domain vector with a smallest index in all spatial domain vectors corresponding to a combination coefficient group corresponding to the three-dimensional submatrix. An end spatial domain vector corresponding to one three-dimensional submatrix may be a spatial domain vector with a largest index in all spatial domain vectors corresponding to a combination coefficient group corresponding to the three-dimensional submatrix.

In a possible implementation, a start spatial domain vector corresponding to one three-dimensional submatrix may be a spatial domain vector with a largest index in all spatial domain vectors corresponding to a combination coefficient group corresponding to the three-dimensional submatrix. An end spatial domain vector corresponding to one three-dimensional submatrix may be a spatial domain vector with a smallest index in all spatial domain vectors corresponding to a combination coefficient group corresponding to the three-dimensional submatrix.

In a possible implementation, a start frequency domain vector corresponding to one three-dimensional submatrix may be a frequency domain vector with a smallest index in all frequency domain vectors corresponding to a combination coefficient group corresponding to the three-dimensional submatrix. An end frequency domain vector corresponding to one three-dimensional submatrix may be a frequency domain vector with a largest index in all frequency domain vectors corresponding to a combination coefficient group corresponding to the three-dimensional submatrix.

In a possible implementation, a start frequency domain vector corresponding to one three-dimensional submatrix may be a frequency domain vector with a largest index in all frequency domain vectors corresponding to a combination coefficient group corresponding to the three-dimensional submatrix. An end frequency domain vector corresponding to one three-dimensional submatrix may be a frequency domain vector with a smallest index in all frequency domain vectors corresponding to a combination coefficient group corresponding to the three-dimensional submatrix.

In a possible implementation, a start time domain vector corresponding to one three-dimensional submatrix may be a time domain vector with a smallest index in all time domain vectors corresponding to a combination coefficient group corresponding to the three-dimensional submatrix. An end time domain vector corresponding to one three-dimensional submatrix may be a time domain vector with a largest index in all time domain vectors corresponding to a combination coefficient group corresponding to the three-dimensional submatrix.

In a possible implementation, a start time domain vector corresponding to one three-dimensional submatrix may be a time domain vector with a largest index in all time domain vectors corresponding to a combination coefficient group corresponding to the three-dimensional submatrix. An end time domain vector corresponding to one three-dimensional submatrix may be a time domain vector with a smallest index in all time domain vectors corresponding to a combination coefficient group corresponding to the three-dimensional submatrix.

In this application, any two of the K three-dimensional submatrices, for example, a first three-dimensional submatrix and a second three-dimensional submatrix, may satisfy one or more of the following conditions:

First condition: Largest coordinates corresponding to the first three-dimensional submatrix in the second three-dimensional matrix in a spatial domain dimension are less than smallest coordinates corresponding to the second three-dimensional submatrix in the second three-dimensional matrix in the spatial domain dimension, and a difference between the smallest coordinates and the largest coordinates is greater than or equal to a first threshold.

Second condition: Largest coordinates corresponding to the first three-dimensional submatrix in the second three-dimensional matrix in a frequency domain dimension are less than smallest coordinates corresponding to the second three-dimensional submatrix in the second three-dimensional matrix in the frequency domain dimension, and a difference between the smallest coordinates and the largest coordinates is greater than or equal to a second threshold.

Third condition: Largest coordinates corresponding to the first three-dimensional submatrix in the second three-dimensional matrix in a time domain dimension are less than smallest coordinates corresponding to the second three-dimensional submatrix in the second three-dimensional matrix in the time domain dimension, and a difference between the smallest coordinates and the largest coordinates is greater than or equal to a third threshold.

Fourth condition: An absolute value of a difference between largest coordinates corresponding to the second three-dimensional submatrix in the second three-dimensional matrix in a spatial domain dimension and largest coordinates corresponding to the first three-dimensional submatrix in the second three-dimensional matrix in the spatial domain dimension is greater than or equal to a fourth threshold; and/or an absolute value of a difference between smallest coordinates corresponding to the second three-dimensional submatrix in the second three-dimensional matrix in the spatial domain dimension and smallest coordinates corresponding to the first three-dimensional submatrix in the second three-dimensional matrix in the spatial domain dimension is greater than or equal to the fourth threshold.

Fifth condition: An absolute value of a difference between largest coordinates corresponding to the second three-dimensional submatrix in the second three-dimensional matrix in a frequency domain dimension and largest coordinates corresponding to the first three-dimensional submatrix in the second three-dimensional matrix in the frequency domain dimension is greater than or equal to a fifth threshold; and/or an absolute value of a difference between smallest coordinates corresponding to the second three-dimensional submatrix in the second three-dimensional matrix in the frequency domain dimension and smallest coordinates corresponding to the first three-dimensional submatrix in the second three-dimensional matrix in the frequency domain dimension is greater than or equal to the fifth threshold.

Sixth condition: An absolute value of a difference between largest coordinates corresponding to the second three-dimensional submatrix in the second three-dimensional matrix in a time domain dimension and largest coordinates corresponding to the first three-dimensional submatrix in the second three-dimensional matrix in the time domain dimension is greater than or equal to a sixth threshold; and/or an absolute value of a difference between smallest coordinates corresponding to the second three-dimensional submatrix in the second three-dimensional matrix in the time domain dimension and smallest coordinates corresponding to the first three-dimensional submatrix in the second three-dimensional matrix in the time domain dimension is greater than or equal to the sixth threshold.

In this application, positions of the K combination coefficient groups in the second three-dimensional matrix may be indicated by using first information, to reduce the feedback overheads. If the positions of the K combination coefficient groups are indicated by using the first information, to indicate at least one combination coefficient, the first information may include at least one of the following:

a position of a start spatial domain vector of a three-dimensional submatrix corresponding to each of the K combination coefficient groups;

a position of an end spatial domain vector of the three-dimensional submatrix corresponding to each of the K combination coefficient groups;

a quantity of spatial domain vectors included in the three-dimensional submatrix corresponding to each of the K combination coefficient groups;

a position of a start frequency domain vector of the three-dimensional submatrix corresponding to each of the K combination coefficient groups;

a position of an end frequency domain vector of the three-dimensional submatrix corresponding to each of the K combination coefficient groups;

a quantity of frequency domain vectors included in the three-dimensional submatrix corresponding to each of the K combination coefficient groups;

a position of a start time domain vector of a three-dimensional submatrix corresponding to each of the K combination coefficient groups;

a position of an end time domain vector of the three-dimensional submatrix corresponding to each of the K combination coefficient groups; and

a quantity of time domain vectors included in the three-dimensional submatrix corresponding to each of the K combination coefficient groups.

In this application, for a plurality of three-dimensional submatrices corresponding to one receive antenna port, a position of one three-dimensional submatrix (for example, the three-dimensional submatrix is the first three-dimensional submatrix) may be directly indicated by using the first information. For a position of another three-dimensional submatrix, for example, the second three-dimensional submatrix, information about a difference between the position of the second three-dimensional submatrix and the position of the first three-dimensional submatrix may be fed back, the difference information includes but is not limited to a difference between positions of start spatial domain vectors of the two three-dimensional submatrices, a difference between positions of end spatial domain vectors of the two three-dimensional submatrices, a difference between positions of start frequency domain vectors of the two three-dimensional submatrices, a difference between positions of end frequency domain vectors of two three-dimensional submatrices, a difference between positions of start time domain vectors of the two three-dimensional submatrices, a difference between positions of end time domain vectors of the two three-dimensional submatrices, a difference between quantities of spatial domain vectors respectively corresponding to the two three-dimensional submatrices, a difference between quantities of frequency domain vectors respectively corresponding to the two three-dimensional submatrices, and a difference between quantities of time domain vectors respectively corresponding to the two three-dimensional submatrices. For example, if the position of the start spatial domain vector corresponding to the first three-dimensional submatrix is the same as the position of the start spatial domain vector corresponding to the second three-dimensional submatrix, the first information may directly indicate the position of the start spatial domain vector corresponding to the first three-dimensional submatrix; and when the first information indicates the position of the start spatial domain vector corresponding to the second three-dimensional submatrix, an indicated value may be 0. For example, if the quantity of spatial domain vectors corresponding to the first three-dimensional submatrix is greater than the quantity of spatial domain vectors corresponding to the second three-dimensional submatrix by A5, the first information may directly indicate the quantity of spatial domain vectors corresponding to the first three-dimensional submatrix; and when the first information indicates the quantity of spatial domain vectors corresponding to the second three-dimensional submatrix, the indicated value may be A5. Other cases may be deduced by analogy, and details are not described herein again. In the foregoing descriptions, the three-dimensional submatrix may alternatively be replaced with a combination coefficient group.

In this application, for a plurality of receive antenna ports of the terminal device, the terminal device may directly feed back a position of at least one three-dimensional submatrix corresponding to one receive antenna port (for example, a first receive antenna port). For another antenna port, for example, a second receive antenna port, information about a difference between a position of at least one three-dimensional submatrix corresponding to the second receive antenna port and the position of the at least one three-dimensional submatrix corresponding to the first receive antenna port may be fed back. For example, if a position of a start spatial domain vector corresponding to a first three-dimensional submatrix corresponding to the first receive antenna port is the same as a position of a start spatial domain vector corresponding to a second three-dimensional submatrix corresponding to the second receive antenna port, the first information may directly indicate the position of the start spatial domain vector corresponding to the first three-dimensional submatrix corresponding to the first receive antenna port; and when the first information indicates the position of the start spatial domain vector corresponding to the second three-dimensional submatrix corresponding to the second receive antenna port, an indicated value may be 0. For example, if a quantity of frequency domain vectors corresponding to the first three-dimensional submatrix is less than a quantity of frequency domain vectors corresponding to the second three-dimensional submatrix by -A4, the first information may directly indicate the quantity of frequency domain vectors corresponding to the first three-dimensional submatrix; and when the first information indicates the quantity of frequency domain vectors corresponding to the second three-dimensional submatrix, the indicated value may be -A4. Other cases may be deduced by analogy, and details are not described herein again. In the foregoing descriptions, the three-dimensional submatrix may alternatively be replaced with a combination coefficient group.

In this application, for the plurality of receive antenna ports of the terminal device, for example, the first receive antenna port and the second receive antenna port, the first receive antenna port corresponds to K1 combination coefficient groups, the first receive antenna port corresponds to K2 combination coefficient groups, and each combination coefficient group corresponds to one three-dimensional submatrix. If there are three-dimensional submatrices at same positions in K1 three-dimensional submatrices and K2 three-dimensional submatrices, only one position may be fed back for the plurality of submatrices at the same positions. For example, if positions of K3 three-dimensional submatrices are the same, positions of the K1 three-dimensional submatrices may be fed back for the first receive antenna port. For the second receive antenna port, in the K2 three-dimensional submatrices, positions of K3 three-dimensional submatrices that are the same as those of the K1 three-dimensional submatrices are not fed back, and only a position of a remaining K2-K3 three-dimensional submatrix is fed back. In the foregoing descriptions, the three-dimensional submatrix may alternatively be replaced with a combination coefficient group.

In this application, one receive antenna port of the terminal device may receive different downlink reference signals at different moments. For each downlink reference signal, the terminal device may determine a plurality of combination coefficients corresponding to each receive antenna port, and the plurality of combination coefficients corresponding to each receive antenna port correspond to at least one three-dimensional submatrix. The terminal device may directly feed back a position of a three-dimensional submatrix that is obtained by receiving a first downlink reference signal through a receive antenna port (for example, the first receive antenna port). For a position of a three-dimensional submatrix that is obtained by receiving another downlink reference signal, for example, a second downlink reference signal, information about a difference between a position of at least one three-dimensional submatrix corresponding to the second downlink reference signal and a position of at least one three-dimensional submatrix corresponding to the first downlink reference signal may be fed back. For details, refer to the foregoing descriptions. Details are not described herein again. In the foregoing descriptions, the three-dimensional submatrix may alternatively be replaced with a combination coefficient group.

In this application, for three-dimensional submatrix m corresponding to receive antenna port r, a position of a start spatial domain vector corresponding to the three-dimensional submatrix may be represented as $K_{r,m}^{b}$, a quantity of spatial domain vectors corresponding to the three-dimensional submatrix may be represented as $M_{r,m}^{b}$, a position of a start frequency domain vector corresponding to the three-dimensional submatrix is represented as $K_{r,m}^{d}$, a quantity of frequency domain vectors corresponding to the three-dimensional submatrix is represented as $M_{r,m}^d$, a position of a start time domain vector corresponding to the three-dimensional submatrix is represented as $K_{r,m}^t$, and a quantity of time domain vectors corresponding to the three-dimensional submatrix is represented as $M_{r,m}^t$, where b represents a beam domain or a spatial domain, d represents a delay domain or a frequency domain, and t represents a Doppler domain or a time domain. This is merely an example, and the foregoing parameters may alternatively be represented in another manner. For example, if there is only one receive antenna port, there may be no subscript r in $K_{r,m}^b, M_{r,m}^b, K_{r,m}^d, M_{r,m}^d, K_{r,m}^t$, and $M_{r,m}^t$. For another example, if receive antenna port r corresponds to only one three-dimensional submatrix, there may be no subscript m in $K_{r,m}^b, M_{r,m}^b, K_{r,m}^d, M_{r,m}^d, K_{r,m}^t$, and $M_{r,m}^t$. For example, if positions of start spatial domain vectors corresponding to all three-dimensional submatrices corresponding to receive antenna port r are the same, there may be no subscript m or the like in $K_{r,m}^b$. Other cases are not described again

In this application, a position range, for example, a second position range, may be further set. The second position range includes positions corresponding to M1 consecutive frequency domain vectors in the plurality of frequency domain vectors and positions corresponding to M2 consecutive time domain vectors in the plurality of time domain vectors, where M1 and M2 are integers greater than 0.

In an implementation, for each receive antenna port of the terminal device, a second position range may be determined based on at least one combination coefficient corresponding to each receive antenna port, in other words, one second position range corresponds to one receive antenna port.

In this implementation, the terminal device may further send second information to the access network device, where the second information indicates the second position range corresponding to each antenna port. Specifically, the second information may indicate at least one of the following: the quantity M1 of frequency domain vectors corresponding to the second position range; an index of a first frequency domain vector or an index of a last frequency domain vector in the M1 frequency domain vectors in the second position range; the quantity M2 of time domain vectors corresponding to the second position range; and an index of a first time domain vector or an index of a last time domain vector in the M2 time domain vectors in the second position range.

In an implementation, all the receive antenna ports of the terminal device correspond to one second position range. For each receive antenna port of the terminal device, if cyclic shifting is performed on a second three-dimensional matrix corresponding to the receive antenna port, a range of a frequency domain vector obtained through the cyclic shifting on at least one combination coefficient corresponding to the receive antenna port is in the second position range, and a range of a time domain vector obtained through the cyclic shifting on the at least one combination coefficient corresponding to the receive antenna port is in the second position range.

In this implementation, the terminal device may further send second information to the access network device, where the second information indicates the second position range corresponding to all the receive antenna ports. Specifically, the second information may indicate at least one of the following: the quantity M1 of frequency domain vectors corresponding to the second position range; an index of a first frequency domain vector or an index of a last frequency domain vector in the M1 frequency domain vectors in the second position range; the quantity M2 of time domain vectors corresponding to the second position range; and an index of a first time domain vector or an index of a last time domain vector in the M2 time domain vectors in the second position range. When the terminal device indicates the second position range by using the second information, the terminal device may further feed back a cyclic shift value corresponding to each receive antenna port. If a cyclic shift value for one receive antenna port is zero, the cyclic shift value for the receive antenna port may not be fed back.

According to the method, in the K combination coefficient groups, a quantity of bits occupied by the position of the start frequency domain vector of the three-dimensional submatrix corresponding to each combination coefficient group is $\lceil \log_2(M1) \rceil$. Because M1 is less than or equal to T, the feedback overheads of the terminal device can be further reduced. Similarly, in the K combination coefficient groups, a quantity of bits occupied by the position of the start time domain vector of the three-dimensional submatrix corresponding to each combination coefficient group is $\lceil \log_2(M2) \rceil$. Because M2 is less than or equal to Q, the feedback overheads of the terminal device can be further reduced.

In this application, the terminal device may further feed back a phase of each of the at least one combination coefficient to the access network device. In an implementation, the terminal device sends third information to the access network device, where the third information includes at least one of the following:

a phase of a combination coefficient at a center position of the three-dimensional submatrix corresponding to each of the K combination coefficient groups;

an angle gradient, in the spatial domain dimension, of the three-dimensional submatrix corresponding to each of the K combination coefficient groups;

an angle gradient, in the frequency domain dimension, of the three-dimensional submatrix corresponding to each of the K combination coefficient groups; and

an angle gradient, in the time domain dimension, of the three-dimensional submatrix corresponding to each of the K combination coefficient groups.

A central position of three-dimensional submatrix m corresponding to receive antenna port r may satisfy the following forms:

$$Cen1 = K_{r,m}^d + \text{floor}\left(\frac{M_{r,m}^d}{2}\right);$$

$$Cen2 = K_{r,m}^b + floor\left(\frac{M_{r,m}^b}{2}\right);$$

and

$$Cen3 = K_{r,m}^t + floor\left(\frac{M_{r,m}^t}{2}\right).$$

Cen1 represents a specific position of a frequency domain vector at a center position of one three-dimensional submatrix, Cen2 represents a specific position of a spatial domain vector at a center position of one three-dimensional submatrix, and Cen3 represents a specific position of a time domain vector at a center position of one three-dimensional submatrix. In this application, floor () represents a floor operation.

An angle gradient, in the frequency domain dimension, of three-dimensional submatrix m corresponding to receive antenna port r may satisfy the following form:

$$d\theta_{r,m}^d = \frac{\theta_{r,m,end}^d - \theta_{r,m,start}^d}{M_{r,m}^d - 1}; \text{ or } d\theta_{r,m}^d = \frac{\theta_{r,m,start}^d - \theta_{r,m,end}^d}{M_{r,m}^d - 1}.$$

$\theta_{r,m,end}^d$ is a phase of a combination coefficient determined based on a spatial domain vector and a time domain vector that correspond to the center position of the three-dimensional submatrix and an end frequency domain vector corresponding to the three-dimensional submatrix, and $\theta_{r,m,start}^d$ is a phase of a combination coefficient determined based on the spatial domain vector and the time domain vector that correspond to the center position of the three-dimensional submatrix and a start frequency domain vector corresponding to the three-dimensional submatrix.

An angle gradient, in the spatial domain dimension, of three-dimensional submatrix m corresponding to receive antenna port r may satisfy the following form:

$$d\theta_{r,m}^b = \frac{\theta_{r,m,end}^b - \theta_{r,m,start}^b}{M_{r,m}^b - 1}; \text{ or } d\theta_{r,m}^b = \frac{\theta_{r,m,start}^b - \theta_{r,m,end}^b}{M_{r,m}^b - 1}.$$

$\theta_{r,m,end}^b$ is a phase of a combination coefficient determined based on a frequency domain vector and the time domain vector that correspond to the center position of the three-dimensional submatrix and an end spatial domain vector corresponding to the three-dimensional submatrix, and $\theta_{r,m,start}^b$ is a phase of a combination coefficient determined based on the frequency domain vector and the time domain vector that correspond to the center position of the three-dimensional submatrix and a start spatial domain vector corresponding to the three-dimensional submatrix.

An angle gradient, in the time domain dimension, of three-dimensional submatrix m corresponding to receive antenna port r may satisfy the following form:

$$d\theta_{r,m}^{t} = \frac{\theta_{r,m,end}^{t} - \theta_{r,m,start}^{t}}{M_{r,m}^{t} - 1}; \text{ or } d\theta_{r,m}^{t} = \frac{\theta_{r,m,start}^{t} - \theta_{r,m,end}^{t}}{M_{r,m}^{t} - 1}.$$

$\theta_{r,m,end}^{b}$ is a phase of a combination coefficient determined based on the spatial domain vector and the frequency domain vector that correspond to the center position of the three-dimensional submatrix and an end time domain vector corresponding to the three-dimensional submatrix, and $\theta_{r,m,start}^{b}$ is a phase of a combination coefficient determined based on the spatial domain vector and the frequency domain vector that correspond to the center position of the three-dimensional submatrix and a start time domain vector corresponding to the three-dimensional submatrix.

In this application, for the K three-dimensional submatrices corresponding to the K combination coefficient groups, the terminal device may further calculate an autocorrelation matrix of each of the K three-dimensional submatrices, and the terminal device may feed back the autocorrelation matrix of each of the K three-dimensional submatrices to the access network device. How to specifically calculate the autocorrelation matrix is not limited in this application.

The terminal device may send fourth information to the access network device, where the fourth information includes all coefficients of the autocorrelation matrix of each of the K three-dimensional submatrices, the fourth information includes first H1 eigenvalues of the autocorrelation matrix of each of the K three-dimensional submatrices and eigenvectors corresponding to the first H1 eigenvalues, or the fourth information includes first H2% eigenvalues of the autocorrelation matrix of each of the K three-dimensional submatrices and eigenvectors corresponding to the first H2% eigenvalues, where H1 and H2 are preset values.

The terminal device sends a reference signal to the access network device, where the reference signal is used by the access network device to perform channel estimation to obtain channel state information, and the channel state information represents a state of a channel at a moment (a moment 1) at which the access network device receives the reference signal. The access network device performs downlink precoding based on the channel state information, and transmits data to the terminal device through the downlink precoding (at a moment 2).

Because there is a delay between the moment 1 and the moment 2, in a mobility scenario of the terminal device, a channel of the terminal device at the moment 2 may have changed dramatically compared with that at the moment 1. Consequently, the downlink precoding does not match the channel of the terminal device at the moment 2, and performance deteriorates, in other words, a problem of "channel aging" is caused. In one or another method provided in this application, the terminal device feeds back Doppler shift-related information of the terminal device to the access network device based on downlink channel (CSI-RS, TRS, and the like) measurement information at a plurality of moments. The Doppler shift can provide time domain-related information of a channel, and can obtain a more accurate channel state at the moment 2 by using the channel at the moment 1, a channel obtained by using several reference signals before the moment 1, and information about the Doppler shift, so that the access network device performs channel prediction, to overcome a performance deterioration problem caused by channel aging. The following provides detailed descriptions.

FIG. 13 is a schematic flowchart of a communication method according to an embodiment of this application. The method may be applied to a TDD system, or may be applied to an FDD system. The method includes the following steps.

Step 1301: An access network device sends a downlink reference signal to a terminal device, and correspondingly, the terminal device receives the downlink reference signal from the access network device.

The downlink reference signal is a CSI-RS, may be a tracking reference signal (tracking reference signal, TRS), or may be a signal of another type. This is not limited in this application.

Step 1302: The terminal device sends first indication information to the access network device, and correspondingly, the access network device receives the first indication information from the terminal device.

In an implementation, the access network device may send the downlink reference signal through one or more transmit antenna ports, and the terminal device may receive the downlink reference signal through one or more receive antenna ports.

The terminal device may perform channel estimation based on the downlink reference signal, to determine all frequency domain bases corresponding to the downlink reference signal and Doppler shifts corresponding to all the frequency domain bases. A specific implementation of the foregoing process is not limited in this application, and details are not described herein again.

The terminal device may indicate at least one Doppler shift by using the first indication information, and the at least one Doppler shift is associated with at least two frequency domain bases. Correspondingly, the access network device may determine, based on the first indication information, the at least one Doppler shift indicated by using the first indication information. In embodiments of this application, the frequency domain basis may also be referred to as a delay path. Therefore, it may also be considered that at least two delay paths correspond to the at least one Doppler shift.

The first indication information may be independently sent signaling, or may be a field added to an existing uplink reference signal or uplink signaling. For example, the first indication information is added to an SRS or a precoding matrix indicator (precoding matrix indicator, PMI). This is not limited in this application.

In this application, a meaning of the Doppler shift specifically indicated by using the first indication information and a method of how the first indication information specifically indicates the Doppler shift may be pre-defined, may be notified by the terminal device to the access network device, or may be notified by the access network device to the terminal device. The following separately describes possible implementations.

In a possible implementation, the first indication information indicates the at least one Doppler shift by indicating an index of a Doppler domain basis corresponding to the at least one Doppler shift. For example, indexes of Doppler domain bases are 1 to 100, and the first indication information indicates 2 and 50, to indicate that Doppler shifts associated with the at least two frequency domain bases are Doppler shifts corresponding to a basis 2 and a basis 50. The Doppler domain basis and the index of the Doppler domain basis may be pre-defined, may be notified by the terminal device to the access network device, or may be notified by the access network device to the terminal device. The first indication information may indicate the index of the Doppler domain basis by directly indicating a value of the index, or in a bit mapping manner. For example, indexes of Doppler domain bases are 1 to 8, and the first indication information may indicate, by using a bit vector [0, 0, 1, 1, 0, 0, 1, 1] with a length of 8, that Doppler shifts associated with the at least two frequency domain bases are Doppler shifts corresponding to a basis 3, a basis 4, a basis 7, and a basis 8.

In a possible implementation, the terminal device indicates the at least one Doppler shift by using a value of the Doppler shift indicated by using the first indication information. For example, the terminal device indicates 10 by using the first indication information, to indicate that one Doppler shift associated with the at least two frequency domain bases is 10 Hz. A specific indication dimension of the first indication information, for example, hertz (Hz) or kilohertz (kHz) corresponding to 10, and a quantity of quantization bits of the indicated value of the Doppler shift may be pre-defined, may be notified by the terminal device to the access network device, or may be notified by the access network device to the terminal device.

The at least one Doppler shift may be one or more groups of Doppler shifts, each group of the one or more groups of Doppler shifts includes at least two Doppler shifts, and the at least two Doppler shifts included in each group of Doppler shifts are consecutive. That the at least two Doppler shifts are consecutive herein may mean that indexes of Doppler domain bases corresponding to the at least two Doppler shifts are consecutive. For example, indexes of Doppler domain bases are 1 to 100, and indexes of Doppler domain bases corresponding to a group of Doppler shifts indicated by using the first indication information are {17, 18, 19, 20, 21}. In this case, the group of Doppler shifts indicated by using the first indication information is consecutive; or that the at least two Doppler shifts are consecutive herein may mean that values of the at least two Doppler shifts have a same interval. For example, values of a group of Doppler shift indicated by using the first indication information are {10, 12, 14, 16}, indicating that the Doppler shifts are {10 Hz, 12 Hz, 14 Hz, 16 Hz}. In this case, the group of Doppler shifts indicated by using the first indication information is consecutive. In this example, an interval between the values of the Doppler shifts is 2 Hz. The terminal device and the access network device may pre-configure, pre-define, or reach a consensus on a quantization interval of the values of the Doppler shifts through signaling exchanging. For example, if the interval of 2 Hz is the quantization interval, when the interval between the values of the group of Doppler shifts indicated by using the first indication information is 2 Hz, it may be considered that the plurality of Doppler shifts in the group of Doppler shifts are consecutive. In a possible example, for a group of Doppler shifts whose values are {10, 14, 18, 22}, although the plurality of Doppler shifts have a same interval, the interval is not equal to the quantization interval 2 Hz, and the group of Doppler shifts is inconsecutive. Herein, the quantization interval 2 Hz is merely an example. In another example, it may also be considered that a group of Doppler shifts is consecutive provided that the group of Doppler shifts has a same interval.

In a possible implementation, the at least one Doppler shift indicated by using the first indication information is one or more groups of Doppler shifts. For each group of Doppler shifts, the first indication information indicates indexes of two Doppler domain bases, the indexes of the two Doppler domain bases are respectively an index with a largest value and an index with a smallest value in indexes of Doppler domain bases corresponding to the group of Doppler shifts. For example, if the indexes of the Doppler domain bases corresponding to the group of Doppler shifts are {17, 18, 19, 20, 21}, the first indication information may indicate {17, 21}. After receiving the first indication information, the access network device may determine that indexes of Doppler domain bases corresponding to one group of Doppler shifts associated with the at least two frequency domain bases are {17, 18, 19, 20, 21}. For K groups of Doppler shifts, when K is greater than 1, the first indication information indicates indexes of two Doppler domain bases in each group of K groups, and the indexes of the two Doppler domain bases in each group correspond to one group of Doppler shifts. For example, if K=2, and indexes of Doppler domain bases corresponding to two groups of Doppler shifts are {17, 18, 19, 20, 21} and {30, 31, 32, 33}, the first indication information may indicate {17, 21, 30, 33}. After receiving the first indication information, the access network device may determine that indexes of Doppler domain bases corresponding to two groups of Doppler shifts associated with the at least two frequency domain bases are {17, 18, 19, 20, 21} and {30, 31, 32, 33}.

In a possible implementation, the at least one Doppler shift indicated by using the first indication information is one or more groups of Doppler shifts. For each group of Doppler shifts, the first indication information indicates values of two Doppler shifts, and the values of the two Doppler shifts are respectively a largest value and a smallest value of the Doppler shifts in the group of Doppler shifts. For example, if values of the group of Doppler shifts are {17, 19, 21}, and an interval between the values of the Doppler shifts is 2 Hz, the first indication information may indicate 17 and 21. After receiving the first indication information, the access network device may determine that one group of Doppler shifts associated with the at least two frequency domain bases is {17 Hz, 19 Hz, 21 Hz}. For K groups of Doppler shifts, when K is greater than 1, the first indication information indicates values of two Doppler shifts in each group of the K groups, and the values of the two Doppler shifts in each group correspond to one group of Doppler shifts. For example, if K=2, and values of two groups of Doppler shifts are {17, 19, 21} and {31, 33, 35}, the first indication information may indicate {17, 21, 31, 35}. After receiving the first indication information, the access network device may determine that two groups of Doppler shifts associated with the at least two frequency domain bases are {17 Hz, 19 Hz, 21 Hz} and {31 Hz, 33 Hz, 35 Hz}.

In a possible implementation, the at least one Doppler shift indicated by using the first indication information is one or more groups of Doppler shifts. For each group of Doppler shifts, the first indication information indicates an index of one Doppler domain basis and an index length value, the index of the Doppler domain basis and the index length value are used to determine each Doppler shift in the group of Doppler shifts, and the index of the Doppler domain basis is an index with a largest value or an index with a smallest value in indexes of Doppler domain bases corresponding to the group of Doppler shifts. For example, if the indexes of the Doppler domain bases corresponding to the group of Doppler shifts are {17, 18, 19, 20, 21}, the first indication information may indicate 17 and 5. After receiving the first indication information, the access network device may determine that indexes of Doppler domain bases corresponding to one group of Doppler shifts associated with the at least two frequency domain bases are {17, 18, 19, 20, 21}. For K groups of Doppler shifts, when K is greater than 1, the first indication information indicates K groups of values, each group of values includes an index of one Doppler domain basis and an index length value, and each group of the K groups of values corresponds to one group of the K groups of Doppler shifts. For example, if K=2, and indexes of Doppler domain bases corresponding to two groups of Doppler shifts are {17, 18, 19, 20, 21} and {30, 31, 32, 33}, the first indication information may indicate {17, 5, 30, 4}. After receiving the first indication information, the access network device may determine that indexes of Doppler domain bases corresponding to two groups of Doppler shifts associated with the at least two frequency domain bases are {17, 18, 19, 20, 21} and {30, 31, 32, 33}.

In a possible implementation, the at least one Doppler shift indicated by using the first indication information is one or more groups of Doppler shifts. For each group of Doppler shifts, the first indication information indicates a value of one Doppler shift and a value span, the value of the Doppler shift and the value span are used to determine each Doppler shift in the group of Doppler shifts, and the value of the Doppler shift is a largest value or a smallest value in the group of Doppler shifts. For example, if values of the group of Doppler shifts are {17, 19, 21}, and an interval between values of the Doppler shifts is 2 Hz, the first indication information may indicate 17 and 4. After receiving the first indication information, the access network device may determine that one group of Doppler shifts associated with the at least two frequency domain bases is {17 Hz,19 Hz, 21 Hz}. For K groups of Doppler shifts, when K is greater than 1, the first indication information indicates K groups of values, each group of values includes a value of one Doppler shift and a value span, and each group of the K groups of values corresponds to one group of the K groups of Doppler shifts. For example, if K=2, and values of two groups of Doppler shifts are {17, 19, 21} and {31, 33, 35}, the first indication information may indicate {17, 4, 31, 4}. After receiving the first indication information, the access network device may determine that two groups of Doppler shifts associated with the at least two frequency domain bases are {17 Hz, 19 Hz, 21 Hz} and {31 Hz, 33 Hz, 35 Hz}.

In a possible implementation, the at least one Doppler shift indicated by using the first indication information is one or more groups of Doppler shifts. For each group of Doppler shifts, the first indication information indicates an index length value of one Doppler domain basis, the index length value and an index of one Doppler domain basis are used to determine each Doppler shift in the group of Doppler shifts, and the index of the Doppler domain basis is pre-defined, or the index of the Doppler domain basis is indicated by using fourth indication information. For example, the access network device and the terminal device pre-define an index 1 of one Doppler domain basis; the access network device indicates, by using the fourth indication information, that an index of one Doppler domain basis is 1; or the terminal device indicates, by using the fourth indication information, that an index of one Doppler domain basis is 1, and indexes of Doppler domain bases corresponding to the group of Doppler shifts are {1, 2, 3, 4, 5}. In this case, the first indication information may indicate 5. After receiving the first indication information, the access network device may determine, with reference to the known index 1 of one Doppler domain basis, that indexes of Doppler domain bases corresponding to the group of Doppler shifts associated with the at least two frequency domain bases are {1, 2, 3, 4, 5}. For K groups of Doppler shifts, when K is greater than 1, the first indication information indicates K groups of values, each group of values includes one index length value, and each group of the K groups of values corresponds to one group of the K groups of Doppler shifts. For example, if K=2, and indexes of Doppler domain bases corresponding to two groups of Doppler shifts are {17, 18, 19, 20, 21} and {30, 31, 32, 33}, the first indication information may indicate {5, 4}, and the fourth indication information may indicate or pre-define indexes {17, 30} of Doppler domain bases corresponding to two Doppler shifts. After receiving the first indication information, the access network device may determine that indexes of Doppler domain bases corresponding to two groups of Doppler shifts associated with the at least two frequency domain bases are {17, 18, 19, 20, 21} and {30, 31, 32, 33}.

In a possible implementation, the at least one Doppler shift indicated by using the first indication information is one or more groups of Doppler shifts. For each group of Doppler shifts, the first indication information indicates a value span of one Doppler shift, the value span and a value of one Doppler shift are used to determine each Doppler shift in the group of Doppler shifts, and the value of the Doppler shift is pre-defined, or the value of the Doppler shift is indicated by using fourth indication information. For example, the access network device and the terminal device pre-define a value 0 of one Doppler shift, the access network device indicates, by using the fourth indication information, that a value of one Doppler shift is 0, or the terminal device indicates, by using the fourth indication information, that a value of one Doppler shift is 0, and values of the group of Doppler shift values are {0, 1, 2, 3, 4}. In this case, the first indication information may indicate 5. After receiving the first indication information, the access network device may determine, with reference to the known value 0 of one Doppler shift, that one group of Doppler shifts associated with the at least two frequency domain bases is {0 Hz, 1 Hz, 2 Hz, 3 Hz, 4 Hz}. For K groups of Doppler shifts, when K is greater than 1, the first indication information indicates a value span of one Doppler shift in each group of the K groups, and a value span of one Doppler shift in each group corresponds to one group of Doppler shifts. For example, if K=2, and values of two groups of Doppler shifts are {0, 1, 2, 3, 4} and {30, 31, 32}, the first indication information may indicate {5, 3}, and the fourth indication information may indicate or pre-define indexes {0, 30} of two Doppler shifts. After receiving the first indication information, the access network device may determine that two groups of Doppler shifts associated with the at least two frequency domain bases are {30 Hz, 31 Hz, 32 Hz}.

In a possible implementation, the at least one Doppler shift indicated by using the first indication information is one or more groups of Doppler shifts. For each group of Doppler shifts, the first indication information indicates a value of each Doppler shift in the group of Doppler shifts. For example, if values of the group of Doppler shifts are {17, 19, 21}, and an interval between the values of the Doppler shifts is 2 Hz, the first indication information may indicate {17, 19, 21}. After receiving the first indication information, the access network device may determine that one group of Doppler shifts associated with the at least two frequency domain bases is {17 Hz, 19 Hz, 21 Hz}. For K groups of Doppler shifts, when K is greater than 1, the first indication information indicates values of the K groups of Doppler shifts, and values of each group of Doppler shifts correspond to one group of Doppler shifts.

In a possible implementation, the at least one Doppler shift indicated by using the first indication information is one or more groups of Doppler shifts. For each group of Doppler shifts, the first indication information indicates an index of a Doppler domain basis corresponding to each Doppler shift in one group of Doppler shifts. For example, if indexes of Doppler domain bases corresponding to the group of Doppler shifts are {17, 18, 19, 20, 21}, the first indication information may indicate {17, 18, 19, 20, 21}. For another example, if indexes of all Doppler domain bases are 1 to 8, and the indexes of the Doppler domain bases corresponding to the group of Doppler shifts are {4, 5, 6, 7}, the first indication information may indicate, by using a bit vector [0, 0, 0, 1, 1, 1, 1, 0] with a length of 8, that the indexes of the Doppler domain bases corresponding to the group of Doppler shifts are {4, 5, 6, 7}. For K groups of Doppler shifts, when K is greater than 1, the first indication information indicates indexes of K groups of Doppler domain bases, and an index of each group of Doppler domain bases correspond to one group of Doppler shifts. For example, if K=2, and indexes of Doppler domain bases corresponding to two groups of Doppler shifts are {17, 18, 19, 20, 21} and {30, 31, 32, 33}, the first indication information may indicate {17, 18, 19, 20, 21} and {30, 31, 32, 33}. After receiving the first indication information, the access network device may determine that indexes of Doppler domain bases corresponding to two groups of Doppler shifts associated with the at least two frequency domain bases are {17, 18, 19, 20, 21} and {30, 31, 32, 33}. Alternatively, the first indication information may indicate indexes of Doppler domain bases corresponding to all the K groups of Doppler shifts. For example, if K=2, indexes of all the frequency domain bases are 1 to 8, and indexes of two groups of Doppler domain bases are {1, 2} and {4, 5, 6, 7}, the first indication information may indicate, by using a bit vector [1, 1, 0, 1, 1, 1, 1, 0] with a length of 8, that the indexes of the Doppler domain bases corresponding to the two groups of Doppler shifts are {1, 2} and {4, 5, 6, 7}.

The at least one Doppler shift may alternatively be one or more inconsecutive Doppler shifts.

In this scenario, in a possible implementation, the first indication information indicates a value of each of the at least one Doppler shift. For example, if a value of the at least one Doppler shift is {17, 25, 29}, the first indication information may indicate {17, 25, 29}. After receiving the first indication information, the access network device may determine that the at least one Doppler shift associated with the at least two frequency domain bases is {17 Hz, 25 Hz, 29 Hz}.

In this scenario, in a possible implementation, the first indication information indicates an index of a Doppler domain basis corresponding to each of the at least one Doppler shift. For example, if indexes of Doppler domain bases corresponding to the at least one Doppler shift are {17, 19, 22}, the first indication information may indicate {17, 19, 22}.

The at least one Doppler shift may alternatively be one or more groups of Doppler shifts and one or more inconsecutive Doppler shifts.

In this scenario, in a possible implementation, the first indication information may include two parts. The first part indicates the one or more groups of Doppler shifts in the at least one Doppler shift. For an indication manner, refer to the foregoing indication manner of the one or more groups of Doppler shifts. The second part indicates indication information of the one or more inconsecutive Doppler shifts in the at least one Doppler shift. For an indication manner in this part, refer to the foregoing indication manner of the one or more inconsecutive Doppler shifts. For example, if indexes of Doppler domain bases corresponding to the at least one Doppler shift are {17, 18, 19, 20, 21, 35}, the first indication information may be {17, 5, 35}. After receiving the first indication information, the access network device determines, based on 17 and 5, that indexes of a group of consecutive Doppler domain bases are {17, 18, 19, 20, 21}, and determines, based on 35, that an index of one Doppler domain basis is 35. Based on the foregoing aspects, the access network device determines that the indexes of the Doppler domain bases corresponding to the at least one Doppler shift are {17, 18, 19, 20, 21, 35}.

In this scenario, in a possible implementation, the first indication information indicates an index of a Doppler domain basis corresponding to each of the at least one Doppler shift. For example, indexes of Doppler domain bases corresponding to the at least one Doppler shift are {17, 18, 19, 20, 21, 35}, and the first indication information may be {17, 18, 19, 20, 21, 35}. For another example, if indexes of all Doppler domain bases are 1 to 8, and the indexes of the Doppler domain bases corresponding to the at least one Doppler shift are {1, 6, 7}, the first indication information may indicate, by using a bit vector [1, 0, 0, 0, 0, 1, 1, 0] with a length of 8, that the indexes of the Doppler domain bases corresponding to the at least one Doppler shift are {1, 6, 7}.

In this scenario, in a possible implementation, the first indication information indicates a value of each of the at least one Doppler shift. For example, if values of the at least one Doppler shift are {17, 19, 21, 35}, and an interval between the values of Doppler shifts is 2 Hz, the first indication information may indicate {17, 19, 21, 35}. After receiving the first indication information, the access network device may determine that the at least one Doppler shift associated with the at least two frequency domain bases is {17 Hz, 19 Hz, 21 Hz, 35 Hz}.

The access network device may determine the at least two frequency domain bases through pre-definition, for example, determine the at least two frequency domain bases by using a preset table aligned with the terminal device; or may determine the at least two frequency domain bases based on an uplink reference signal, and send the at least two frequency domain bases to the terminal device by using a downlink reference signal or other indication information. After determining the at least two frequency domain bases, the terminal device determines that the at least one Doppler shift is associated with the at least two frequency domain bases; or the terminal device may send second indication information to the access network device, where the second indication information indicates the at least two frequency domain bases. After receiving the second indication information, the access network device may determine the at least two frequency domain bases associated with the at least one Doppler shift indicated by using the first indication information.

The second indication information may be independently sent signaling, may be combined with the first indication information in same signaling for sending, or may be a field added to an existing uplink reference signal or uplink signaling. For example, the second indication information is added to an SRS or a PMI. This is not limited in this application.

A meaning of the frequency domain basis specifically indicated by using the second indication information and a method for specifically indicating the frequency domain basis by using the second indication information may be pre-defined, may be notified by the terminal device to the access network device, or may be notified by the access network device to the terminal device.

In a possible implementation, the second indication information indicates the at least two frequency domain bases by indicating indexes of the at least two frequency domain bases. For example, if indexes of all the frequency domain bases are 1 to 100, the second indication information indicates 2 and 50, to indicate that the at least two frequency domain bases are a basis 2 and a basis 50. The frequency domain basis and the index of the frequency domain basis may be pre-defined, may be notified by the terminal device to the access network device, or may be notified by the access network device to the terminal device. The second indication information may indicate the index of the frequency domain basis by directly indicating a value of the index, or in a bit mapping manner. For example, if indexes of all the frequency domain bases are 1 to 8, the second indication information may indicate, by using a bit vector [0, 0, 1, 1, 0, 0, 1, 1] with a length of 8, that four frequency domain bases are a basis 3, a basis 4, a basis 7, and a basis 8.

In a possible implementation, the at least two frequency domain bases may be one or more groups of frequency domain bases. For each group of frequency domain bases, the second indication information indicates indexes of two frequency domain bases, and the indexes of the two frequency domain bases are respectively an index with a largest value and an index with a smallest value in indexes of the group of frequency domain bases. For example, if the indexes of the group of frequency domain bases are {17, 18, 19, 20, 21}, the second indication information may indicate 17 and 21. After receiving the second indication information, the access network device may determine that indexes of one group of frequency domain bases in the at least two frequency domain bases are {17, 18, 19, 20, 21}. For K groups of frequency domain bases, when K is greater than 1, the second indication information indicates K groups of indexes, each group of indexes corresponds to one group of frequency domain bases, and each group of indexes includes an index with a largest value and an index with a smallest value in indexes of one group of frequency domain bases corresponding to the group of indexes. For example, if K=2, and indexes of two groups of frequency domain bases are {17, 18, 19, 20, 21} and {30, 31, 32, 33}, the second indication information may indicate {17, 21} and {30, 33}. After receiving the second indication information, the access network device may determine that indexes of two groups of frequency domain bases in the at least two frequency domain bases are {17, 18, 19, 20, 21} and {30, 31, 32, 33}.

In a possible implementation, the at least two frequency domain bases may be one or more groups of frequency domain bases. For each group of frequency domain bases, the second indication information indicates an index of one frequency domain basis and an index length value, the index of the frequency domain basis and the index length value are used to determine each frequency domain basis in the group of frequency domain bases, and the index of the frequency domain basis is an index with a largest value or an index with a smallest value in indexes of the group of frequency domain bases. For example, if the indexes of the group of frequency domain bases are {17, 18, 19, 20, 21}, the second indication information may indicate 17 and 5. After receiving the second indication information, the access network device may determine that the indexes of the group of frequency domain bases are {17, 18, 19, 20, 21}. For K groups of frequency domain bases, when K is greater than 1, the second indication information indicates an index of one frequency domain basis in each group of the K groups and one index length value, and an index of one frequency domain basis in each group and one index length value correspond to one group of frequency domain bases. For example, if K=2, and indexes of two groups of frequency domain bases are {17, 18, 19, 20, 21} and {30, 31, 32, 33}, the second indication information may indicate {17, 5} and {30, 4}. After receiving the second indication information, the access network device may determine that the indexes of the two groups of frequency domain bases are {17, 18, 19, 20, 21} and {30, 31, 32, 33}.

In a possible implementation, the at least two frequency domain bases may be one or more groups of frequency domain bases. For each group of frequency domain bases, the second indication information indicates an index length value of one frequency domain basis, the index length value and an index of one frequency domain basis are used to determine each frequency domain basis in the group of frequency domain bases, and the index of the frequency domain basis is pre-defined, or the index of the frequency domain basis is indicated by using fifth indication information. For example, the access network device and the terminal device pre-define an index 1 of one frequency domain basis, the access network device indicates, by using the fifth indication information, that an index of one frequency domain basis is 1, or the terminal device indicates, by using the fifth indication information, that an index of one frequency domain basis is 1, and indexes of the group of frequency domain bases are {1, 2, 3, 4, 5}. In this case, the second indication information may indicate 5. After receiving the second indication information, the access network device may determine, with reference to the known index 1 of one frequency domain base, that indexes of at least one group of frequency domain bases are {1, 2, 3, 4, 5}. For K groups of frequency domain bases, when K is greater than 1, the second indication information indicates K groups of values, each group of values includes one index length value, and each group of the K groups of values corresponds to one group of the K groups of frequency domain bases. For example, if K=2, and indexes of two groups of frequency domain bases are {17, 18, 19, 20, 21} and {30, 31, 32, 33}, the second indication information may indicate 5 and 4, and the fifth indication information may indicate 17 and 30. After receiving the second indication information and the fifth indication information, the access network device may determine that the indexes of the two groups of frequency domain bases are {17, 18, 19, 20, 21} and {30, 31, 32, 33}.

In a possible implementation, the at least two frequency domain bases may be one or more groups of frequency domain bases. For each group of frequency domain bases, the second indication information indicates an index of each frequency domain basis in the group of frequency domain bases. For example, if the indexes of the group of frequency domain bases are {17, 18, 19, 20, 21}, the second indication information may indicate {17, 18, 19, 20, 21}. For another example, if indexes of all the frequency domain bases are 1 to 8, and the indexes of the group of frequency domain bases are {4, 5, 6, 7}, the second indication information may indicate, by using a bit vector [0, 0, 0, 1, 1, 1, 1, 0] with a length of 8, that the indexes of the group of frequency domain bases are {4, 5, 6, 7}. For K groups of frequency domain bases, when K is greater than 1, the second indication information indicates indexes of the K groups of frequency domain bases, and indexes of frequency domain bases in each group correspond to one group of frequency domain bases. For example, if K=2, and indexes of two groups of frequency domain bases are {17, 18, 19, 20, 21} and {30, 31, 32, 33}, the second indication information may indicate {17, 18, 19, 20, 21}. {30,31,32,33}. After receiving the second indication information, the access network device may determine that the indexes of the two groups of frequency domain bases are {17, 18, 19, 20, 21} and {30, 31, 32, 33}. Alternatively, the second indication information may indicate indexes of all the K groups of frequency domain bases. For example, if K=2, indexes of all the frequency domain bases are 1 to 8, and indexes of two groups of frequency domain bases are {1, 2} and {4, 5, 6, 7}, the second indication information may indicate, by using a bit vector [1, 1, 0, 1, 1, 1, 1, 0] with a length of 8, that the indexes of the two groups of frequency domain bases are {1,2} and {4,5,6, 7}.

The at least two frequency domain bases may alternatively be a plurality of inconsecutive frequency domain bases. In a possible implementation, the second indication information indicates an index of each of the at least two frequency domain bases. For example, if the indexes of the at least two frequency domain bases are {17, 19, 22}, the second indication information may indicate {17, 19, 22}.

The at least two frequency domain bases may alternatively be one or more groups of frequency domain bases and one or more inconsecutive frequency domain bases. In a possible implementation, the second indication information includes information indicating the one or more groups of frequency domain bases in the at least two frequency domain bases and information indicating the one or more inconsecutive frequency domain bases in the at least two frequency domain bases, and an indication manner of the indication information is a combination of the foregoing indication manners. For example, if the indexes of the at least two frequency domain bases are {17, 18, 19, 20, 21, 35}, the second indication information may be {17, 5, 35}. After receiving the second indication information, the access network device determines, based on 17 and 5, that indexes of one group of consecutive frequency domain bases are {17, 18, 19, 20, 21}, and determines, based on 35, that an index of one frequency domain basis is 35. Based on the foregoing aspects, the access network device determines that the indexes of the at least two frequency domain bases are {17, 18, 19, 20, 21, 35}. In this scenario, in a possible implementation, the second indication information indicates an index of each of the at least two frequency domain bases. For example, if the indexes of the at least two frequency domain bases are {17, 18, 19, 20, 21, 35}, the second indication information may be {17, 18, 19, 20, 21, 35}. For another example, if indexes of all the frequency domain bases are 1 to 8, and the indexes of the at least two frequency domain bases are {1, 6, 7}, the second indication information may indicate, by using a bit vector [1, 0, 0, 0, 0, 1, 1, 0] with a length of 8, that the indexes of the at least two frequency domain bases are {1, 6, 7}.

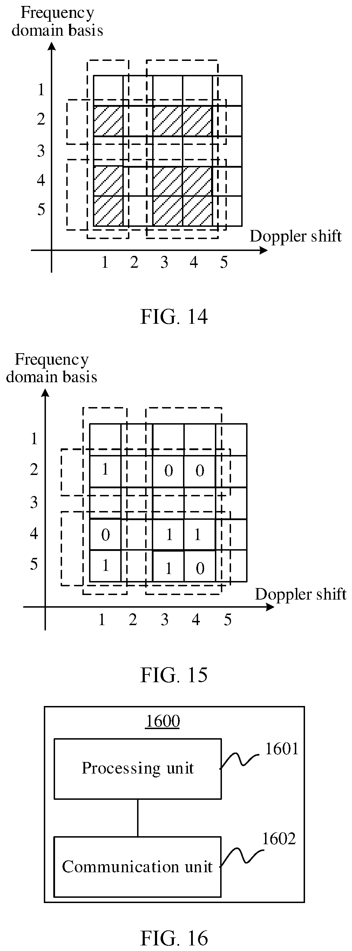

The access network device determines, based on the first indication information and the second indication information or in another manner, the at least two frequency domain bases and the at least one Doppler shift associated with the at least two frequency domain bases, to form a plurality of Doppler shift and frequency domain basis pairs. For example, as shown in FIG. 14, the at least one Doppler shift indicated by using the first indication information is three Doppler shifts corresponding to indexes {1, 3, 4}, and the second indication information indicates that the at least two frequency domain bases are three frequency domain bases whose indexes are {2, 4, 5}. In this case, the access network device determines 3*3=9 Doppler shift and frequency domain basis pairs, namely, (1, 2), (1, 4), (1, 5), (3, 2), (3, 4), (3, 5), (4, 2), (4, 4), and (4, 5). The nine Doppler shift and frequency domain basis pairs may correspond to shaded grids in the figure. The access network device may obtain, by using the information, information about the Doppler shift corresponding to the delay path, in other words, determine time correlation information of a channel, and further construct a channel predictor, to predict, by using the channel predictor, channel information at a moment at which data is sent to the terminal device. A possible method is as follows:

If K Doppler frequency shifts indicated by using the first indication information are respectively $f_1, f_2, \cdots, f_K$, a normalized Doppler power spectrum that may be calculated on such a basis is:

$$S(f) = \frac{1}{K} \sum_{k=1}^{K} \delta(f - f_k)$$

A channel time domain autocorrelation function is obtained through calculation by using the Doppler power spectrum:

$$R(\tau) = \int S(f) e^{j2\pi f \tau} \mathrm{d}f = \frac{1}{K} \sum_{k=1}^{K} e^{j2\pi f_k \tau}$$

If the first indication information indicates K groups of Doppler frequency shifts, and a union set of the K groups of Doppler frequency shifts is $\Omega = \Omega_1 \cup \Omega_2 \cup \cdots \cup \Omega_K$, where each $\Omega_k = [f_{k,1}, f_{k,2}]$ corresponds to one Doppler frequency shift interval, and $f_{1,1} < f_{1,2} < f_{2,1} < f_{2,2} < \cdots < f_{K,1} < f_{K,2}$, a normalized Doppler power spectrum that may be calculated on such a basis is:

$$S(f) = \frac{1}{|\Omega|} \mathbf{1}_{\Omega}(f)$$

$|\Omega| = \sum_{k=1}^{K} \left( f_{k,2} - f_{k,1} \right)$. A channel time domain autocorrelation function is obtained through calculation by using the Doppler power spectrum:

$$R(\tau) = \int S(f) e^{j2\pi f \tau} \, \mathrm{d}f = \frac{1}{|\Omega|} \int_{f \in \Omega} e^{j2\pi f \tau} \mathrm{d}f$$

$$= \frac{1}{|\Omega|} \sum_{k=1}^{K} \int_{f_{k,1}}^{f_{k,2}} e^{j2\pi f \tau} \mathrm{d}f = \frac{1}{|\Omega|} \sum_{k=1}^{K} \int_{f_{k,1}}^{f_{k,2}} e^{j2\pi f \tau} \mathrm{d}f$$

A unit of $\tau$ is second, and a unit of f is Hz. Then, a coefficient matrix A of the channel predictor is calculated based on the channel time domain autocorrelation function $R(\tau)$. The channel predictor uses channels at a total of Q moments as input, and the channel predictor acts on each OFDM symbol of the channel at each moment, to predict each OFDM symbol corresponding to channels at future P moments. For one OFDM symbol, an index set of the OFDM symbol at the Q moments is $\{k_1, k_2, \cdots, k_Q\}$, an index set of OFDM symbols of the to-be-predicted channels at the P moments is $\{l_1, l_2, \cdots, l_P\}$, and a symbol periodicity is $T_{OS}$. In this case, elements of an autocorrelation matrix $R_{11} \in \mathbb{R}^{Q \times Q}$ and a cross-correlation matrix $R_{12} \in \mathbb{R}^{Q \times P}$ may be calculated by using the following formulas:

$$\mathbf{R}_{11}[i,j] = \begin{cases} R\left((k_i - k_j)T_{OS}\right) + \sigma_\varepsilon^2, & i = j \\ R\left((k_i - k_j)T_{OS}\right), & i \neq j \end{cases}$$

$$\mathbf{R}_{12}[i,j] = R\left((k_i - l_j)T_{OS}\right)$$

$\sigma_\varepsilon^2$ is an error parameter, and may be configured through training and adjustment. Finally, a coefficient matrix A of the channel predictor is obtained as follows:

$$\mathbf{A} = \mathbf{R}_{12}^{H} \mathbf{R}_{11}^{-1}$$

Channel prediction results at the future P moments may be obtained by left-multiplying the channels at the Q moments by the matrix A each time, to calculate downlink precoding at a future moment, and overcome a channel aging problem. This implementation method may be referred to as a minimum mean square error (Minimum Mean Square Error, MMSE) channel predictor. A specific method is not limited in this application.

In an implementation, the terminal device may further send third indication information to the access network device, where the third indication information indicates one or more Doppler shift and frequency domain basis pairs, and each Doppler shift and frequency domain basis pair includes one Doppler shift and one frequency domain basis, the Doppler shift included in each Doppler shift and frequency domain basis pair belongs to the at least one Doppler shift indicated by using the first indication information, and the frequency domain basis included in each Doppler shift and frequency domain basis pair belongs to the at least two frequency domain bases.

The third indication information may be independently sent signaling, may be combined with the first indication information and the second indication information in same signaling for sending, may be combined only with the second indication information in same signaling for sending, or may be a field added to an existing uplink reference signal or existing uplink signaling. For example, the third indication information is added to an SRS or a PMI. This is not limited in this application.

A meaning of the one or more Doppler shift and frequency domain basis pairs specifically indicated by using the third indication information and a method for specifically indicating the one or more Doppler shift and frequency domain basis pairs by using the third indication information may be pre-defined, may be notified by the terminal device to the access network device, or may be notified by the access network device to the terminal device.

The access network device receives the third indication information, and further determines the one or more Doppler shift and frequency domain basis pairs, in other words, obtains finer information about the Doppler shift corresponding to the delay path. In other words, the third indication information indicates at least one Doppler shift and frequency domain basis pair in the plurality of Doppler shift and frequency domain basis pairs. For example, the third indication information may indicate five Doppler shift and frequency domain basis pairs, namely, (1, 2), (3, 4), (3, 5), (4, 2), and (4, 4), in the nine Doppler shift and frequency domain basis pairs.

In a possible implementation, the third indication information indicates the one or more Doppler shift and frequency domain basis pairs by using a bit mapping vector with a length of F, where F may be a quantity of Doppler shift and frequency domain basis pairs that is indicated by using the first indication information, and F is an integer greater than 0. For example, as shown in FIG. 15, the third indication information is {1, 0, 0, 0, 1, 1, 1, 1, 0}, further indicating five Doppler shift and frequency domain basis pairs, namely, (1, 2), (3, 4), (3, 5), (4, 2), and (4, 4), in nine Doppler shift and frequency domain basis pairs (1, 2), (1, 4), (1, 5), (3, 2), (3, 4), (3, 5), (4, 2), (4, 4), and (4, 5) that are indicated by using the first indication information, to obtain finer information about the Doppler shift corresponding to the delay path. In the figure, a grid marked with 1 represents a Doppler shift and frequency domain basis pair that is indicated by using the third indication information and that is in the nine Doppler shift and frequency domain basis pairs indicated by using the first indication information. A grid marked with 0 represents a Doppler shift and frequency domain basis pair that is not indicated by using the third indication information and that is in the nine Doppler shift and frequency domain basis pair indicated by using the first indication information. An arrangement manner or an arrangement order of the Doppler shift and frequency domain basis pairs indicated by using the third indication information may be pre-defined, may be notified by the terminal device to the access network device, or may be notified by the access network device to the terminal device.

In a possible implementation, the third indication information indicates R Doppler shift and frequency domain basis pairs, R is less than or equal to F, and energy corresponding to the R Doppler shift and frequency domain basis pairs is greater than or equal to energy of other F-R Doppler shift and frequency domain basis pairs in F Doppler shift and frequency domain basis pairs, where R may be pre-defined, may be notified by the access network device to the terminal device by using sixth indication information, or may be notified by the terminal device to the access network device by using sixth indication information.

In a possible implementation, the third indication information indicates a Doppler shift and frequency domain basis pair that are in the plurality of Doppler shift and frequency domain basis pairs and whose corresponding energy is greater than or equal to first energy. The first energy may be pre-defined, may be notified by the access network device to the terminal device by using sixth indication information, or may be notified by the terminal device to the access network device by using sixth indication information.

According to the foregoing method, in this embodiment of this application, the at least one Doppler shift is indicated by using the first indication information, so that there is no need to feed back all Doppler shifts determined based on the downlink reference signal, to reduce feedback overheads and improve feedback efficiency. Further, when performing channel estimation, the access network device can determine time domain-related information of the channel based on the Doppler shift indicated by using the first indication information, and can obtain a more accurate channel state by using the channel at a moment of the channel estimation, channels at several past moments, and the information about the Doppler shift, to enable the access network device to perform channel prediction, so as to overcome a performance deterioration problem caused by channel aging.

In the foregoing embodiments provided in this application, the method provided in embodiments of this application is described from a perspective of interaction between devices. To implement functions in the method provided in embodiments of this application, the access network device or the terminal device may include a hardware structure and/or a software module, and implements the functions in a form of the hardware structure, the software module, or a combination of the hardware structure and the software module. Whether one of the functions is implemented by using the hardware structure, the software module, or the combination of the hardware structure and the software module depends on a particular application and a design constraint condition of the technical solutions.

In embodiments of this application, module division is an example, and is merely a logical function division. In an actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

Same as the foregoing concept, as shown in FIG. 16, an embodiment of this application further provides a communication apparatus, configured to implement a function of the access network device or the terminal device in the foregoing method. For example, the apparatus may be a software module or a chip system. In this embodiment of this application, the chip system may include a chip, or may include a chip and another discrete component. The communication apparatus 1600 may include a processing unit 1601 and a communication unit 1602.

In this embodiment of this application, the communication unit may also be referred to as a transceiver unit, and may include a sending unit and/or a receiving unit, which are respectively configured to perform sending and receiving steps of the access network device or the terminal device in the foregoing method embodiment.

The following describes in detail communication apparatuses provided in embodiments of this application with reference to FIG. 16 to FIG. 17. It should be understood that descriptions of apparatus embodiments correspond to descriptions of method embodiment. Therefore, for content that is not described in detail, refer to the method embodiment. For brevity, details are not described herein.

The communication unit may also be referred to as an interface circuit, a transceiver machine, a transceiver apparatus, or the like. The processing unit may also be referred to as a processor, a processing board, a processing module, a processing apparatus, or the like. Optionally, a component that is in the communication unit 1602 and that is configured to implement the receiving function may be considered as a receiving unit, and a component that is in the communication unit 1602 and that is configured to implement the sending function may be considered as a sending unit. That is, the communication unit 1602 includes the receiving unit and the sending unit. The communication unit sometimes may also be referred to as a transceiver machine, an interface circuit, a transceiver circuit, or the like. The receiving unit sometimes may also be referred to as a receiver machine, a receiver, a receiver circuit, or the like. The sending unit sometimes may also be referred to as a transmitter machine, a transmitter, a transmit circuit, or the like.

In an implementation, when the communication apparatus implements the function of the terminal device shown in FIG. 3:

the communication unit is configured to receive a downlink reference signal from an access network device;

the processing unit is configured to determine at least one spatial domain vector and a plurality of frequency domain vectors based on the downlink reference signal, where the at least one spatial domain vector and the plurality of frequency domain vectors correspond to a first matrix, the first matrix includes a plurality of combination coefficients, each combination coefficient is a combination coefficient of one spatial domain vector and one frequency domain vector, and a position of the combination coefficient is represented by using the spatial domain vector and the frequency domain vector; and

the communication unit is configured to send first information to the access network device, where the first information indicates a position of at least one of the plurality of combination coefficients, the at least one combination coefficient satisfies any one of the following conditions: the at least one combination coefficient is a combination coefficient whose energy is greater than or equal to first energy and less than or equal to second energy in the plurality of combination coefficients, where the second energy is less than energy of a combination coefficient with largest energy in the plurality of combination coefficients; the at least one combination coefficient is Y2 combination coefficients with smallest energy in Y1 combination coefficients whose energy is greater than or equal to first energy in the plurality of combination coefficients, where Y2 is an integer less than Y1 and greater than 0; the at least one combination coefficient is Y4 combination coefficients with smallest energy in Y3 combination coefficients with largest energy in the plurality of combination coefficients, where Y4 is an integer less than Y3 and greater than 0; or the at least one combination coefficient is a combination coefficient whose energy is less than or equal to second energy in Y3 combination coefficients with largest energy in the plurality of combination coefficients, where the second energy is less than the energy of the combination coefficient with the largest energy in the plurality of combination coefficients.

In an implementation, when the communication apparatus implements the function of the access network device shown in FIG. 3:

the communication unit is configured to: send a downlink reference signal to a terminal device; and receive first information from the terminal device, where the first information indicates a position of at least one of a plurality of combination coefficients included in a first matrix, the first matrix corresponds to at least one spatial domain vector and a plurality of frequency domain vectors, the at least one spatial domain vector and the plurality of frequency domain vectors are determined based on the downlink reference signal, each combination coefficient is a combination coefficient of one spatial domain vector and one frequency domain vector, a position of the combination coefficient is represented by using the spatial domain vector and the frequency domain vector, and the at least one combination coefficient satisfies any one of the following conditions: the at least one combination coefficient is a combination coefficient whose energy is greater than or equal to first energy and less than or equal to second energy in the plurality of combination coefficients, where the second energy is less than energy of a combination coefficient with largest energy in the plurality of combination coefficients; the at least one combination coefficient is Y2 combination coefficients with smallest energy in Y1 combination coefficients whose energy is greater than or equal to first energy in the plurality of combination coefficients, where Y2 is an integer less than Y1 and greater than 0; the at least one combination coefficient is Y4 combination coefficients with smallest energy in Y3 combination coefficients with largest energy in the plurality of combination coefficients, where Y4 is an integer less than Y3 and greater than 0; or the at least one combination coefficient is a combination coefficient whose energy is less than or equal to second energy in Y3 combination coefficients with largest energy in the plurality of combination coefficients, where the second energy is less than the energy of the combination coefficient with the largest energy in the plurality of combination coefficients.

In an implementation, when the communication apparatus implements the function of the terminal device shown in FIG. 12:

the communication unit is configured to receive a plurality of downlink reference signals from an access network device;

the processing unit is configured to determine at least one spatial domain vector, a plurality of frequency domain vectors, and a plurality of time domain vectors based on the plurality of downlink reference signals, where the at least one spatial domain vector, the plurality of frequency domain vectors, and the plurality of time domain vectors correspond to a first three-dimensional matrix, the first three-dimensional matrix includes a plurality of combination coefficients, each combination coefficient is a combination coefficient of one spatial domain vector, one frequency domain vector, and one time domain vector, and a position of the combination coefficient is represented by using the spatial domain vector, the frequency domain vector, and the time domain vector; and

the communication unit is configured to send first information to the access network device, where the first information indicates a position of at least one of the plurality of combination coefficients, the at least one combination coefficient satisfies any one of the following conditions: the at least one combination coefficient is a combination coefficient whose energy is greater than or equal to first energy and less than or equal to second energy in the plurality of combination coefficients, where the second energy is less than energy of a combination coefficient with largest energy in the plurality of combination coefficients; the at least one combination coefficient is Y2 combination coefficients with smallest energy in Y1 combination coefficients whose energy is greater than or equal to first energy in the plurality of combination coefficients, where Y2 is an integer less than Y1 and greater than 0; the at least one combination coefficient is Y4 combination coefficients with smallest energy in Y3 combination coefficients with largest energy in the plurality of combination coefficients, where Y4 is an integer less than Y3 and greater than 0; or the at least one combination coefficient is a combination coefficient whose energy is less than second energy in Y3 combination coefficients with largest energy in the plurality of combination coefficients, where the second energy is less than energy of a combination coefficient with largest energy in the plurality of combination coefficients.

In an implementation, when the communication apparatus implements the function of the access network device shown in FIG. 12:

the communication unit is configured to: send a plurality of downlink reference signals to a terminal device; and receive first information from the terminal device, where the first information indicates a position of at least one of a plurality of combination coefficients included in a first three-dimensional matrix, the first three-dimensional matrix corresponds to at least one spatial domain vector, a plurality of frequency domain vectors, and a plurality of time domain vectors, the at least one spatial domain vector, the plurality of frequency domain vectors, and the plurality of time domain vectors are determined based on the plurality of downlink reference signals, each combination coefficient is a combination coefficient of one spatial domain vector, one frequency domain vector, and one time domain vector, a position of the combination coefficient is represented by using the spatial domain vector, the frequency domain vector, and the time domain vector, where the at least one combination coefficient satisfies any one of the following conditions: the at least one combination coefficient is a combination coefficient whose energy is greater than or equal to first energy and less than or equal to second energy in the plurality of combination coefficients, where the second energy is less than energy of a combination coefficient with largest energy in the plurality of combination coefficients; the at least one combination coefficient is Y2 combination coefficients with smallest energy in Y1 combination coefficients whose energy is greater than or equal to first energy in the plurality of combination coefficients, where Y2 is an integer less than Y1 and greater than 0;
the at least one combination coefficient is Y4 combination coefficients with smallest energy in Y3 combination coefficients with largest energy in the plurality of combination coefficients, where Y4 is an integer less than Y3 and greater than 0; or the at least one combination coefficient is a combination coefficient whose energy is less than second energy in Y3 combination coefficients with largest energy in the plurality of combination coefficients, where the second energy is less than energy of a combination coefficient with largest energy in the plurality of combination coefficients.

In an implementation, when the communication apparatus implements the function of the terminal device shown in FIG. 13:

the processing unit is configured to receive a downlink reference signal from an access network device through the communication unit; and
the processing unit is configured to send first indication information to the access network device through the communication unit, where the first indication information indicates at least one Doppler shift, the at least one Doppler shift is determined based on the downlink reference signal, and the at least one Doppler shift is associated with at least two frequency domain bases.

In a possible implementation, that the first indication information indicates at least one Doppler shift includes: The first indication information indicates the at least one Doppler shift by indicating an index of a Doppler domain basis corresponding to the Doppler shift, or the first indication information indicates the at least one Doppler shift by indicating a value of the Doppler shift.

In a possible implementation, the at least one Doppler shift is one or more groups of Doppler shifts, each group of the one or more groups of Doppler shifts includes at least two Doppler shifts, the at least two Doppler shifts are consecutive, and that the at least two Doppler shifts are consecutive means that indexes of Doppler domain bases corresponding to the Doppler shifts are consecutive or values of the Doppler shifts have a same interval.

In a possible implementation, for each group of Doppler shifts, the first indication information indicates indexes of two Doppler domain bases, and the indexes of the two Doppler domain bases are respectively an index with a largest value and an index with a smallest value in indexes of Doppler domain bases corresponding to the group of Doppler shifts.

In a possible implementation, for each group of Doppler shifts, the first indication information indicates an index of one Doppler domain basis and an index length value, and the index of the Doppler domain basis and the index length value are used to determine each Doppler shift in the group of Doppler shifts.

In a possible implementation, the index of the Doppler domain basis is an index with a largest value or an index with a smallest value in indexes of Doppler domain bases corresponding to the group of Doppler shifts.

In a possible implementation, for each group of Doppler shifts, the first indication information indicates an index length value of one Doppler domain basis, the index length value and an index of one Doppler domain basis are used to determine each Doppler shift in the group of Doppler shifts, and the index of the Doppler domain basis is pre-defined, or the index of the Doppler domain basis is indicated by using fourth indication information.

In a possible implementation, for each group of Doppler shifts, the first indication information indicates values of two Doppler shifts, and the values of the two Doppler shifts are respectively a largest value and a smallest value of the Doppler shifts in the group of Doppler shifts.

In a possible implementation, for each group of Doppler shifts, the first indication information indicates a value of one Doppler shift and a value span, and the value of the Doppler shift and the value span are used to determine each Doppler shift in the group of Doppler shifts.

In a possible implementation, the value of the Doppler shift is a largest value or a smallest value in the group of Doppler shifts.

In a possible implementation, for each group of Doppler shifts, the first indication information indicates a value span of one Doppler shift, the value span and a value of one Doppler shift are used to determine each Doppler shift in the group of Doppler shifts, and the value of the Doppler shift is pre-defined, or the value of the Doppler shift is indicated by using fourth indication information.

In a possible implementation, for each group of Doppler shifts, the first indication information indicates a value of each Doppler shift in the group of Doppler shifts, or the first indication information indicates an index of a Doppler domain basis corresponding to each Doppler shift in the group of Doppler shifts.

In a possible implementation, the first indication information indicates a value of each of the at least one Doppler shift, or the first indication information indicates an index of a Doppler domain basis corresponding to each of the at least one Doppler shift.

In a possible implementation, the communication unit is further configured to send second indication information to the access network device, and the second indication information indicates the at least two frequency domain bases.

In a possible implementation, the at least two frequency domain bases are one or more groups of frequency domain bases, each group of the one or more groups of frequency domain bases includes at least two frequency domain bases, the at least two frequency domain bases are consecutive, and that the at least two frequency domain bases are consecutive means that indexes of the frequency domain bases are consecutive.

In a possible implementation, for each group of frequency domain bases, the second indication information indicates indexes of two frequency domain bases, and the indexes of the two frequency domain bases are respectively an index with a largest value and an index with a smallest value in indexes of the group of frequency domain bases.

In a possible implementation, for each group of frequency domain bases, the second indication information indicates an index of one frequency domain basis and an index length value, and the index of the frequency domain basis and the index length are used to determine each frequency domain basis in the group of frequency domain bases.

In a possible implementation, the index of the frequency domain basis is an index with a largest value or an index with a smallest value in indexes of the group of frequency domain bases.

In a possible implementation, for each group of frequency domain bases, the second indication information indicates an index length value of one frequency domain basis, the index length value and an index of one frequency domain basis are used to determine each frequency domain basis in the group of frequency domain bases, and the index of the frequency domain basis is pre-defined the index of the frequency domain basis is indicated by using fifth indication information.

In a possible implementation, for each group of frequency domain bases, the second indication information indicates each frequency domain basis in the group of frequency domain bases.

In a possible implementation, the second indication information indicates an index of each of the at least two frequency domain bases.

In a possible implementation, the Doppler domain basis is a discrete Fourier transform DFT basis related to at least one of a quantity of downlink reference signals and a time interval of the downlink reference signals; the Doppler domain basis is a Doppler value basis quantized based on at least one bit; or the Doppler domain basis is a basis formed based on a first cyclic shift sequence.

In a possible implementation, the frequency domain basis is a DFT basis related to at least one of a bandwidth of the downlink reference signal and a frequency domain granularity of the downlink reference signal;

the pre-defined frequency domain basis is a delay value basis quantized based on at least one bit; or
the pre-defined frequency domain basis is a basis formed based on a second cyclic shift sequence.

In a possible implementation, the communication unit is further configured to:

send third indication information to the access network device, where the third indication information indicates one or more Doppler shift and frequency domain basis pairs, and each Doppler shift and frequency domain basis pair includes one Doppler shift and one frequency domain basis, the Doppler shift included in each Doppler shift and frequency domain basis pair belongs to the at least one Doppler shift indicated by using the first indication information, and the frequency domain basis included in each Doppler shift and frequency domain basis pair belongs to the at least two frequency domain bases.

In a possible implementation, the at least one Doppler shift indicated by using the first indication information and the at least two frequency domain bases form a plurality of Doppler shift and frequency domain basis pairs; and energy corresponding to the one or more Doppler shift and frequency domain basis pairs indicated by using the third indication information is greater than or equal to energy corresponding to another Doppler shift and frequency domain basis pair in the plurality of Doppler shift and frequency domain basis pairs; or energy corresponding to the one or more Doppler shift and frequency domain basis pairs indicated by using the third indication information is a Doppler shift and frequency domain basis pair whose corresponding energy is greater than or equal to first energy in the plurality of Doppler shift and frequency domain basis pairs.

In a possible implementation, a quantity of the one or more Doppler shift and frequency domain basis pairs are indicated by using sixth indication information or pre-defined, or the first energy is indicated by using sixth indication information or pre-defined.

In an implementation, when the communication apparatus implements the function of the access network device shown in FIG. 13:

the processing unit is configured to send a downlink reference signal to a terminal device through the communication unit; and

the processing unit is configured to receive first indication information from the terminal device through the communication unit, where the first indication information indicates at least one Doppler shift, the at least one Doppler shift is determined based on the downlink reference signal, and the at least one Doppler shift is associated with at least two frequency domain bases.

Examples are merely provided above. The processing unit 1601 and the communication unit 1602 may further perform other functions. For more detailed descriptions, refer to related descriptions in the embodiment shown in FIG. 3, FIG. 12, or FIG. 13. Details are not described herein again.

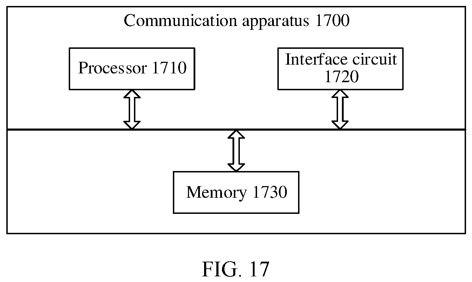

FIG. 17 is a diagram of a communication apparatus according to an embodiment of this application. The apparatus shown in FIG. 17 may be an implementation of a hardware circuit of the apparatus shown in FIG. 16. The communication apparatus is applicable to the foregoing flowcharts, and performs the function of the terminal device or the access network device in the foregoing method embodiment. For ease of description, FIG. 17 shows only main components of the communication apparatus.

As shown in FIG. 17, the communication apparatus 1700 includes a processor 1710 and an interface circuit 1720. The processor 1710 and the interface circuit 1720 are coupled to each other. It may be understood that the interface circuit 1720 may be an interface circuit, a pin, an interface circuit, or an input/output interface. Optionally, the communication apparatus 1700 may further include a memory 1730, configured to: store instructions to be executed by the processor 1710, store input data required by the processor 1710 to run instructions, or store data generated after the processor 1710 runs instructions.

When the communication apparatus 1700 is configured to implement the procedure of the method shown in FIG. 3, FIG. 12, or FIG. 13, the processor 1710 is configured to implement a function of the processing unit 1601, and the interface circuit 1720 is configured to implement a function of the communication unit 1602.

When the communication apparatus is a chip used in a terminal device, the chip in the terminal device implements the function of the terminal device in the foregoing method embodiments. The chip in the terminal device receives information from another module (for example, a radio frequency module or an antenna) in the terminal device, where the information is sent by an access network device to the terminal device. Alternatively, the chip in the terminal device sends information to another module (for example, a radio frequency module or an antenna) in the terminal device, where the information is sent by the terminal device to an access network device.

When the communication apparatus is a chip used in the access network device, the chip in the access network device implements the function of the access network device in the foregoing method embodiment. The chip in the access network device receives information from another module (for example, a radio frequency module or an antenna) in the access network device, where the information is sent by the terminal device to the access network device. Alternatively, the chip in the access network device sends information to another module (for example, a radio frequency module or an antenna) in the access network device, where the information is sent by the access network device to the terminal device.

It may be understood that, the processor in embodiments of this application may be a central processing unit, or may be another general-purpose processor, a digital signal processor, an application-specific integrated circuit, or another programmable logic device, a transistor logic device, a hardware component, or any combination thereof. The general-purpose processor may be a microprocessor, any conventional processor, or the like.

The memory in embodiments of this application may be a random access memory, a flash memory, a read-only memory, a programmable read-only memory, an erasable programmable read-only memory, an electrically erasable programmable read-only memory, a register, a hard disk, a removable hard disk, or a storage medium of any other form well-known in the art.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used for implementing each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:

   receiving, by a terminal device, a downlink reference signal from an access network device; and
   sending, by the terminal device, first indication information to the access network device, wherein the first indication information indicates at least one Doppler shift, the at least one Doppler shift is determined based on the downlink reference signal, and the at least one Doppler shift is associated with at least two frequency domain bases.

2. The method according to claim 1, wherein that the first indication information indicates at least one Doppler shift comprises:
   the first indication information indicates the at least one Doppler shift by indicating an index of a Doppler domain basis corresponding to the Doppler shift, or the first indication information indicates the at least one Doppler shift by indicating a value of the Doppler shift.

3. The method according to claim 2, wherein the at least one Doppler shift is one or more groups of Doppler shifts, each group of the one or more groups of Doppler shifts comprises at least two Doppler shifts, the at least two Doppler shifts are consecutive, and that the at least two Doppler shifts are consecutive means that indexes of Doppler domain bases corresponding to the Doppler shifts are consecutive or values of the Doppler shifts have a same interval.

4. The method according to claim 3, wherein for each group of Doppler shifts, the first indication information indicates indexes of two Doppler domain bases, and the indexes of the two Doppler domain bases are respectively an index with a largest value and an index with a smallest value in indexes of Doppler domain bases corresponding to the group of Doppler shifts.

5. The method according to claim 3, wherein for each group of Doppler shifts, the first indication information indicates an index of one Doppler domain basis and an index length value, and the index of the Doppler domain basis and the index length value are used to determine each Doppler shift in the group of Doppler shifts.

6.  The method according to claim 5, wherein the index of the Doppler domain basis is an index with a largest value or an index with a smallest value in indexes of Doppler domain bases corresponding to the group of Doppler shifts.

7.  The method according to claim 3, wherein for each group of Doppler shifts, the first indication information indicates an index length value of one Doppler domain basis, the index length value and an index of one Doppler domain basis are used to determine each Doppler shift in the group of Doppler shifts, and the index of the Doppler domain basis is pre-defined, or the index of the Doppler domain basis is indicated by using fourth indication information.

8.  The method according to claim 3, wherein for each group of Doppler shifts, the first indication information indicates values of two Doppler shifts, and the values of the two Doppler shifts are respectively a largest value and a smallest value of the Doppler shifts in the group of Doppler shifts.

9.  The method according to claim 3, wherein for each group of Doppler shifts, the first indication information indicates a value of one Doppler shift and a value span, and the value of the Doppler shift and the value span are used to determine each Doppler shift in the group of Doppler shifts.

10. The method according to claim 9, wherein the value of the Doppler shift is a largest value or a smallest value in the group of Doppler shifts.

11. The method according to claim 3, wherein for each group of Doppler shifts, the first indication information indicates a value span of one Doppler shift, the value span and a value of one Doppler shift are used to determine each Doppler shift in the group of Doppler shifts, and the value of the Doppler shift is pre-defined, or the value of the Doppler shift is indicated by using fourth indication information.

12. The method according to claim 3, wherein for each group of Doppler shifts, the first indication information indicates a value of each Doppler shift in the group of Doppler shifts, or the first indication information indicates an index of a Doppler domain basis corresponding to each Doppler shift in the group of Doppler shifts.

13. The method according to claim 2, wherein the first indication information indicates a value of each of the at least one Doppler shift, or the first indication information indicates an index of a Doppler domain basis corresponding to each of the at least one Doppler shift.

14. The method according to any one of claims 1 to 13, wherein the terminal device sends second indication information to the access network device, and the second indication information indicates the at least two frequency domain bases.

15. The method according to claim 14, wherein the at least two frequency domain bases are one or more groups of frequency domain bases, each group of the one or more groups of frequency domain bases comprises at least two frequency domain bases, the at least two frequency domain bases are consecutive, and that the at least two frequency domain bases are consecutive means that indexes of the frequency domain bases are consecutive.

16. The method according to claim 15, wherein for each group of frequency domain bases, the second indication information indicates indexes of two frequency domain bases, and the indexes of the two frequency domain bases are respectively an index with a largest value and an index with a smallest value in indexes of the group of frequency domain bases.

17. The method according to claim 15, wherein for each group of frequency domain bases, the second indication information indicates an index of one frequency domain basis and an index length value, and the index of the frequency domain basis and the index length are used to determine each frequency domain basis in the group of frequency domain bases.

18. The method according to claim 17, wherein the index of the frequency domain basis is an index with a largest value or an index with a smallest value in indexes of the group of frequency domain bases.

19. The method according to claim 15, wherein for each group of frequency domain bases, the second indication information indicates an index length value of one frequency domain basis, the index length value and an index of one frequency domain basis are used to determine each frequency domain basis in the group of frequency domain bases, and the index of the frequency domain basis is pre-defined, or the index of the frequency domain basis is indicated by using fifth indication information.

20. The method according to claim 15, wherein for each group of frequency domain bases, the second indication information indicates each frequency domain basis in the group of frequency domain bases.

21. The method according to claim 14, wherein the second indication information indicates an index of each of the at least two frequency domain bases.

22. The method according to claim 3, wherein the Doppler domain basis is a discrete Fourier transform DFT basis related to at least one of a quantity of downlink reference signals and a time interval of the downlink reference signals;

   the Doppler domain basis is a Doppler value basis quantized based on at least one bit; or
   the Doppler domain basis is a basis formed based on a first cyclic shift sequence.

23. The method according to claim 1, wherein the frequency domain basis is a DFT basis related to at least one of a bandwidth of the downlink reference signal and a frequency domain granularity of the downlink reference signal;

   the pre-defined frequency domain basis is a delay value basis quantized based on at least one bit; or
   the pre-defined frequency domain basis is a basis formed based on a second cyclic shift sequence.

24. The method according to claim 3 or 14, wherein the method further comprises:
   sending, by the terminal device, third indication information to the access network device, wherein the third indication information indicates one or more Doppler shift and frequency domain basis pairs, and each Doppler shift and frequency domain basis pair comprises one Doppler shift and one frequency domain basis, the Doppler shift comprised in each Doppler shift and frequency domain basis pair belongs to the at least one Doppler shift indicated by using the first indication information, and the frequency domain basis comprised in each Doppler shift and frequency domain basis pair belongs to the at least two frequency domain bases.

25. The method according to claim 24, wherein the method further comprises:

   the at least one Doppler shift indicated by using the first indication information and the at least two frequency domain bases form a plurality of Doppler shift and frequency domain basis pairs; and
   energy corresponding to the one or more Doppler shift and frequency domain basis pairs indicated by using the third indication information is greater than or equal to energy corresponding to another Doppler shift and frequency domain basis pair in the plurality of Doppler shift and frequency domain basis pairs; or
   energy corresponding to the one or more Doppler shift and frequency domain basis pairs indicated by using the third indication information is a Doppler shift and frequency domain basis pair whose corresponding energy is greater than or equal to first energy in the plurality of Doppler shift and frequency domain basis pairs.

26. The method according to claim 25, wherein the method further comprises:
   a quantity of the one or more Doppler shift and frequency domain basis pairs are indicated by using sixth indication information or pre-defined, or the first energy is indicated by using sixth indication information or pre-defined.

27. A communication method, comprising:

   sending, by an access network device, a downlink reference signal to a terminal device; and
   receiving, by the access network device, first indication information from the terminal device, wherein the first indication information indicates at least one Doppler shift, the at least one Doppler shift is determined based on the downlink reference signal, and the at least one Doppler shift is associated with at least two frequency domain bases.

28. The method according to claim 27, wherein that the first indication information indicates at least one Doppler shift comprises:
   the first indication information indicates the at least one Doppler shift by indicating an index of a Doppler domain basis corresponding to the Doppler shift, or the first indication information indicates the at least one Doppler shift by indicating a value of the Doppler shift.

29. The method according to claim 28, wherein the at least one Doppler shift is one or more groups of Doppler shifts, each group of the one or more groups of Doppler shifts comprises at least two Doppler shifts, the at least two Doppler shifts are consecutive, and that the at least two Doppler shifts are consecutive means that indexes of Doppler domain bases corresponding to the Doppler shifts are consecutive or values of the Doppler shifts have a same interval.

30. The method according to claim 29, wherein for each group of Doppler shifts, the first indication information indicates indexes of two Doppler domain bases, and the indexes of the two Doppler domain bases are respectively an index with a largest value and an index with a smallest value in indexes of Doppler domain bases corresponding to the group of Doppler shifts.

31. The method according to claim 29, wherein for each group of Doppler shifts, the first indication information indicates an index of one Doppler domain basis and an index length value, and the index of the Doppler domain basis and the index length value are used to determine each Doppler shift in the group of Doppler shifts.

32. The method according to claim 31, wherein the index of the Doppler domain basis is an index with a largest value or an index with a smallest value in indexes of Doppler domain bases corresponding to the group of Doppler shifts.

33. The method according to claim 29, wherein for each group of Doppler shifts, the first indication information indicates an index length value of one Doppler domain basis, the index length value and an index of one Doppler domain basis are used to determine each Doppler shift in the group of Doppler shifts, and the index of the Doppler domain basis is pre-defined, or the index of the Doppler domain basis is indicated by using fourth indication information.

34. The method according to claim 29, wherein for each group of Doppler shifts, the first indication information indicates values of two Doppler shifts, and the values of the two Doppler shifts are respectively a largest value and a smallest value of the Doppler shifts in the group of Doppler shifts.

35. The method according to claim 29, wherein for each group of Doppler shifts, the first indication information indicates a value of one Doppler shift and a value span, and the value of the Doppler shift and the value span are used to determine each Doppler shift in the group of Doppler shifts.

36. The method according to claim 35, wherein the value of the Doppler shift is a largest value or a smallest value in the group of Doppler shifts.

37. The method according to claim 29, wherein for each group of Doppler shifts, the first indication information indicates a value span of one Doppler shift, the value span and a value of one Doppler shift are used to determine each Doppler shift in the group of Doppler shifts, and the value of the Doppler shift is pre-defined, or the value of the Doppler shift is indicated by using fourth indication information.

38. The method according to claim 29, wherein for each group of Doppler shifts, the first indication information indicates a value of each Doppler shift in the group of Doppler shifts, or the first indication information indicates an index of a Doppler domain basis corresponding to each Doppler shift in the group of Doppler shifts.

39. The method according to claim 28, wherein the first indication information indicates a value of each of the at least one Doppler shift, or the first indication information indicates an index of a Doppler domain basis corresponding to each of the at least one Doppler shift.

40. The method according to any one of claims 27 to 39, wherein the method further comprises:
receiving, by the access network device, second indication information from the terminal device, wherein the second indication information indicates the at least two frequency domain bases.

41. The method according to claim 40, wherein the at least two frequency domain bases are one or more groups of frequency domain bases, each group of the one or more groups of frequency domain bases comprises at least two frequency domain bases, the at least two frequency domain bases are consecutive, and that the at least two frequency domain bases are consecutive means that indexes of the frequency domain bases are consecutive.

42. The method according to claim 41, wherein for each group of frequency domain bases, the second indication information indicates indexes of two frequency domain bases, and the indexes of the two frequency domain bases are respectively an index with a largest value and an index with a smallest value in indexes of the group of frequency domain bases.

43. The method according to claim 41, wherein for each group of frequency domain bases, the second indication information indicates an index of one frequency domain basis and an index length value, and the index of the frequency domain basis and the index length are used to determine each frequency domain basis in the group of frequency domain bases.

44. The method according to claim 43, wherein the index of the frequency domain basis is an index with a largest value or an index with a smallest value in indexes of the group of frequency domain bases.

45. The method according to claim 41, wherein for each group of frequency domain bases, the second indication information indicates an index length value of one frequency domain basis, the index length value and an index of one frequency domain basis are used to determine each frequency domain basis in the group of frequency domain bases, and the index of the frequency domain basis is pre-defined, or the index of the frequency domain basis is indicated by using fifth indication information.

46. The method according to claim 41, wherein for each group of frequency domain bases, the second indication information indicates each frequency domain basis in the group of frequency domain bases.

47. The method according to claim 40, wherein the second indication information indicates an index of each of the at least two frequency domain bases.

48. The method according to claim 29, wherein the Doppler domain basis is a discrete Fourier transform DFT basis related to at least one of a quantity of downlink reference signals and a time interval of the downlink reference signals;

the Doppler domain basis is a Doppler value basis quantized based on at least one bit; or
the Doppler domain basis is a basis formed based on a first cyclic shift sequence.

49. The method according to claim 48, wherein the frequency domain basis is a DFT basis related to at least one of a bandwidth of the downlink reference signal and a frequency domain granularity of the downlink reference signal;

the pre-defined frequency domain basis is a delay value basis quantized based on at least one bit; or
the pre-defined frequency domain basis is a basis formed based on a second cyclic shift sequence.

50. The method according to claim 29 or 40, wherein the method further comprises:
receiving, by the access network device, third indication information from the terminal device, wherein the third indication information indicates one or more Doppler shift and frequency domain basis pairs, and each Doppler shift and frequency domain basis pair comprises one Doppler shift and one frequency domain basis, the Doppler shift comprised in each Doppler shift and frequency domain basis pair belongs to the at least one Doppler shift indicated by using the first indication information, and the frequency domain basis comprised in each Doppler shift and frequency domain basis pair belongs to the at least two frequency domain bases.

51. The method according to claim 50, wherein the method further comprises:

the at least one Doppler shift indicated by using the first indication information and the at least two frequency domain bases form a plurality of Doppler shift and frequency domain basis pairs; and
energy corresponding to the one or more Doppler shift and frequency domain basis pairs indicated by using the third indication information is greater than or equal to energy corresponding to another Doppler shift and frequency domain basis pair in the plurality of Doppler shift and frequency domain basis pairs; or
energy corresponding to the one or more Doppler shift and frequency domain basis pairs indicated by using the third indication information is a Doppler shift and frequency domain basis pair whose corresponding energy is greater than or equal to first energy in the plurality of Doppler shift and frequency domain basis pairs.

52. The method according to claim 51, wherein the method further comprises:
a quantity of the one or more Doppler shift and frequency domain basis pairs are indicated by using sixth indication information or pre-defined, or the first energy is indicated by using sixth indication information or pre-defined.

53. A communication apparatus, comprising a module or a unit for performing the method according to any one of claims 1 to 26, or a module or a unit for performing the method according to any one of claims 27 to 52.

54. A communication apparatus, comprising a processor and a memory, wherein

the processor is configured to execute a computer program or instructions stored in the memory, to enable the communication apparatus to implement the method according to any one of claims 1 to 52.

55. A computer-readable storage medium, wherein the computer-readable storage medium stores a computer program or instructions; and when the computer program is run or the instructions are run on a computer, the computer is enabled to perform the method according to any one of claims 1 to 52.

56. A chip, wherein the chip comprises a processor, and the processor is coupled to a memory, to execute a computer program or instructions stored in the memory; and when the processor executes the computer program or the instructions, the method according to any one of claims 1 to 52 is performed.

57. A computer program product, wherein the computer program product stores computer-readable instructions; and when a communication apparatus reads and executes the computer-readable instructions, the communication apparatus is enabled to perform the method according to any one of claims 1 to 52.

FIG. 1

FIG. 2

S301: The access network device sends a downlink reference signal to the terminal device

Terminal device

Access network device

Downlink reference signal

S302: The terminal device determines at least one spatial domain vector and a plurality of frequency domain vectors based on the downlink reference signal

S303: The terminal device sends first information to the access network device

First information

FIG. 3

| | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|
| Spatial domain vector 1 | | 0.1 | 0.2 | | | | 0.1 | 0.3 | 0.2 | | | | | 0.5 | 0.7 | 0.3 | 0.2 | |
| Spatial domain vector 2 | | 0.1 | 0.2 | 0.1 | | | 0.3 | 0.5 | 0.4 | | 0.7 | 0.8 | | 0.5 | 0.5 | 0.6 | | 0.1 |
| Spatial domain vector 3 | | | 0.1 | 0.2 | | | | 0.4 | 0.5 | 0.6 | | | | | 0.1 | 0.2 | 0.1 | |

☐ Combination coefficient

FIG. 4(a)

Spatial domain vector 1

Spatial domain vector 2

Spatial domain vector 3

0  1  2  3  4  5  6  7  8  9  10  11  12  13  14  15  16  17

☐ Combination coefficient

FIG. 4(b)

Spatial domain vector 1

Spatial domain vector 2

Spatial domain vector 3

0  1  2  3  4  5  6  7  8  9  10  11  12  13  14  15  16  17

☐ Combination coefficient

FIG. 4(c)

Spatial domain vector 1

Spatial domain vector 2

Spatial domain vector 3

0  1  2  3  4  5  6  7  8  9  10  11  12  13  14  15  16  17

☐ Combination coefficient

FIG. 4(d)

Spatial domain
vector 1

Spatial domain
vector 2

Spatial domain
vector 3

0  1  2  3  4  5  6  7  8  9  10  11  12  13  14  15  16  17

☐ Combination
coefficient

FIG. 4(e)

Spatial domain
vector 1

Spatial domain
vector 2

Spatial domain
vector 3

0  1  2  3  4  5  6  7  8  9  10  11  12  13  14  15  16  17

☐ Combination
coefficient

FIG. 4(f)

Spatial domain
vector 1

Spatial domain
vector 2

Spatial domain
vector 3

0  1  2  3  4  5  6  7  8  9  10  11  12  13  14  15  16  17

☐ Combination
coefficient

FIG. 4(g)

Spatial domain
vector 1

Spatial domain
vector 2

Spatial domain
vector 3

Spatial domain
vector 4

...

Spatial domain
vector X

0  1  2  3  4  5  6  7  8  9  10 11 12 13 14 15 16 17

Submatrix

FIG. 4(h)

Spatial domain
vector 1

Spatial domain
vector 2

Spatial domain
vector 3

Spatial domain
vector 4

Spatial domain
vector 5

Spatial domain
vector 6

First
submatrix

Second
submatrix

0     1     2     3     4     5

FIG. 5

Spatial domain vector 1
Spatial domain vector 2
Spatial domain vector 3
Spatial domain vector 4
Spatial domain vector 5
Spatial domain vector 6

First submatrix

Second submatrix

0  1  2  3  4  5  6  7  8  9  10  11

FIG. 6

Spatial domain vector 1
Spatial domain vector 2
Spatial domain vector 3
Spatial domain vector 4
Spatial domain vector 5
Spatial domain vector 6
Spatial domain vector 7

First submatrix

Second submatrix

0  1  2  3  4  5  6  7  8

FIG. 7

FIG. 8

FIG. 9

FIG. 10

FIG. 11

```
┌──────────┐                          ┌──────────────┐
│ Terminal │                          │Access network│
│  device  │                          │    device    │
└────┬─────┘                          └──────┬───────┘
     │                                       │
     │                          ┌────────────┴────────────┐
     │                          │ S1201: The access network│
     │                          │ device sends a plurality of│
     │                          │ downlink reference signals│
     │                          │  to the terminal device  │
     │                          └────────────┬────────────┘
     │       Plurality of downlink           │
     │        reference signals              │
     │◄──────────────────────────────────────┤
┌────┴──────────────────────┐                │
│ S1202: The terminal device │                │
│ determines at least one spatial│            │
│ domain vector, a plurality of │             │
│ frequency domain vectors, and │             │
│ a plurality of time domain    │             │
│ vectors based on the plurality│             │
│ of downlink reference signals │             │
└────┬──────────────────────┘                │
┌────┴──────────────────────┐                │
│ S1203: The terminal device │                │
│ sends first information to the│             │
│   access network device    │                │
└────┬──────────────────────┘                │
     │         First information             │
     ├──────────────────────────────────────►│
     │                                       │
```

FIG. 12

```
┌──────────┐                          ┌──────────────┐
│ Terminal │                          │Access network│
│  device  │                          │    device    │
└────┬─────┘                          └──────┬───────┘
     │                                       │
     │                          ┌────────────┴────────────┐
     │                          │  S1301: The access       │
     │                          │ network device sends a   │
     │                          │ downlink reference signal│
     │                          │  to the terminal device  │
     │                          └────────────┬────────────┘
     │            Downlink                   │
     │        reference signal               │
     │◄──────────────────────────────────────┤
┌────┴──────────────────────┐                │
│ S1302: The terminal        │                │
│ device sends first         │                │
│ indication information to  │                │
│ the access network device  │                │
└────┬──────────────────────┘                │
     │        First indication               │
     │          information                  │
     ├──────────────────────────────────────►│
     │                                       │
```

FIG. 13

Frequency
domain basis

Doppler shift

FIG. 14

Frequency
domain basis

Doppler shift

FIG. 15

1600

Processing unit ⟿ 1601

Communication unit ⟿ 1602

FIG. 16

FIG. 17

## INTERNATIONAL SEARCH REPORT

International application No.

**PCT/CN2023/103474**

### A. CLASSIFICATION OF SUBJECT MATTER

H04L25/02(2006.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS; CNTXT; VEN; USTXT; EPTXT; JPTXT; WOTXT; CNKI; IEEE; ISI; 3GPP: 下行, 多普勒, 多谱勒, 频移, 偏移, 频偏, 参考, 导频, 频域基底, 时域向量, 索引, 最大, 最小, 长度, 跨度, 连续, 数量, 能量, 等间隔, 反馈, 开销; DL, downlink, doppler, shift, reference, pilot, basis, frequency, time domain vector, index, max, min, length, continuous, number, energy, feedback, space, expense

### C. DOCUMENTS CONSIDERED TO BE RELEVANT

| Category* | Citation of document, with indication, where appropriate, of the relevant passages | Relevant to claim No. |
|---|---|---|
| PX | CN 115913833 A (HUAWEI TECHNOLOGIES CO., LTD.) 04 April 2023 (2023-04-04) claims 1-32, description, paragraphs [0132]-[0539], and figures 1-17 | 1-57 |
| X | CN 112054825 A (HUAWEI TECHNOLOGIES CO., LTD.) 08 December 2020 (2020-12-08) description, paragraphs [0057]-[0387], and figures 1-8 | 1-57 |
| X | CN 112583501 A (HUAWEI TECHNOLOGIES CO., LTD.) 30 March 2021 (2021-03-30) description, paragraphs [0128]-[0527], and figures 1-9 | 1-57 |
| A | CN 112514276 A (FRAUNHOFER-GESELLSCHAFT ZUR FÖRDERUNG DER ANGEWANDTEN FORSCHUNG E. V.) 16 March 2021 (2021-03-16) entire document | 1-57 |
| A | WO 2021128026 A1 (HUAWEI TECHNOLOGIES CO., LTD.) 01 July 2021 (2021-07-01) entire document | 1-57 |
| A | WO 2016068628 A1 (SAMSUNG ELECTRONICS CO., LTD.) 06 May 2016 (2016-05-06) entire document | 1-57 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 September 2023** | **28 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/103474**

| Patent document cited in search report | | | Publication date (day/month/year) | Patent family member(s) | | | Publication date (day/month/year) |
|---|---|---|---|---|---|---|---|
| CN | 115913833 | A | 04 April 2023 | None | | | |
| CN | 112054825 | A | 08 December 2020 | WO | 2020244368 | A1 | 10 December 2020 |
| | | | | EP | 3968533 | A1 | 16 March 2022 |
| | | | | US | 2022094412 | A1 | 24 March 2022 |
| | | | | CN | 112054825 | B | 10 May 2022 |
| | | | | EP | 3968533 | A4 | 06 July 2022 |
| | | | | CN | 114844536 | A | 02 August 2022 |
| CN | 112583501 | A | 30 March 2021 | WO | 2021063178 | A1 | 08 April 2021 |
| | | | | US | 2022217567 | A1 | 07 July 2022 |
| | | | | EP | 4027543 | A1 | 13 July 2022 |
| | | | | EP | 4027543 | A4 | 02 November 2022 |
| CN | 112514276 | A | 16 March 2021 | EP | 3804157 | A1 | 14 April 2021 |
| | | | | US | 2023208494 | A1 | 29 June 2023 |
| | | | | JP | 2021525988 | A | 27 September 2021 |
| | | | | JP | 7246414 | B2 | 27 March 2023 |
| | | | | EP | 3576312 | A1 | 04 December 2019 |
| | | | | US | 2021143885 | A1 | 13 May 2021 |
| | | | | US | 11616551 | B2 | 28 March 2023 |
| | | | | KR | 20210014698 | A | 09 February 2021 |
| | | | | KR | 102539873 | B1 | 05 June 2023 |
| | | | | WO | 2019229152 | A1 | 05 December 2019 |
| WO | 2021128026 | A1 | 01 July 2021 | WO | 2021128751 | A1 | 01 July 2021 |
| WO | 2016068628 | A1 | 06 May 2016 | KR | 20170075794 | A | 03 July 2017 |
| | | | | KR | 102398220 | B1 | 16 May 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210915805
- CN 202211217064